# EUROPEAN PATENT SPECIFICATION

(11) **EP 4 407 551 B1**
(45) Date of publication and mention of the grant of the patent: **24.12.2025**
(21) Application number: 22887208.1
(22) Date of filing: 28.10.2022
(51) Int. Cl.: G05D 1/49, G06Q 10/08, G05D 1/692, G05D 1/695, B64U 10/16, B64U 50/11, B64U 50/19, B64U 50/23, G05D 1/698, B64U 101/64, G05D 105/28, G05D 109/10, G05D 109/25

(54) **CONVEYANCE SYSTEM, INFORMATION PROCESSING DEVICE, CONVEYANCE METHOD, CONVEYANCE PROGRAM, AND STORAGE MEDIUM**
FÖRDERSYSTEM, INFORMATIONSVERARBEITUNGSVORRICHTUNG, FÖRDERVERFAHREN, FÖRDERPROGRAMM UND SPEICHERMEDIUM
SYSTÈME DE TRANSPORT, DISPOSITIF DE TRAITEMENT D'INFORMATIONS, PROCÉDÉ DE TRANSPORT, PROGRAMME DE TRANSPORT ET SUPPORT DE STOCKAGE

(30) Priority: 29.10.2021 JP 2021178374
(43) Date of publication of application: 31.07.2024
(73) Proprietor: HONDA MOTOR CO., LTD., Tokyo 105-8404 (JP)
(72) Inventor: HATTORI, Tatsuya, Wako-shi, Saitama 351-0193 (JP)
(74) Representative: Weickmann & Weickmann PartmbB
(86) International application number: PCT/JP2022/040558
(87) International publication number: WO 2023/074883

(56) References cited:
- WO-A1-2020/203929
- JP-A- 2005 126 159
- KR-A- 20150 010 194
- KR-B1- 101 668 639
- US-A1- 2019 092 612
- US-A1- 2020 307 437

## Description

### TECHNICAL FIELD

The present invention relates to a transport system, an information processing device, a transport method, a transport program, and a storage medium storing the transport program.

### BACKGROUND ART

In the related art, a transport system that transports objects using flight vehicles has been known. For example, WO 2019/124479 A1 describes a transport system that transports a mobile battery using an unmanned aircraft.

In this type of transport system, it is difficult to transport a plurality of objects using one flight vehicle.

On the other hand, WO 2020/203929 A1 describes a transport system including an autonomously movable energy storage device and a vehicle, which is a moving body capable of accommodating a plurality of the energy storage devices, in which the vehicle, which is a moving body, accommodates the plurality of energy storage devices and moves to transport the energy storage devices. The transport system described in WO 2020/203929 A1 is capable of transporting the plurality of energy storage devices with one moving body.

KR 2015 0010194 A discloses a transport system comprising a plurality of autonomously movable first moving bodies; and a second moving body configured to transport the plurality of first moving bodies as a first assembly. Further reference is made to KR 101 668 639 B1 and US 2020/307437 A1.

### SUMMARY OF INVENTION

### TECHNICAL PROBLEM

However, when the technique described in WO 2019/124479 A1 is applied to the transport system described in WO 2020/203929 A1 to transport the autonomously movable energy storage devices by an unmanned aircraft, if a center of gravity position of the plurality of energy storage devices changes during flight of the unmanned aircraft, a posture of the unmanned aircraft tends to become unstable. Note that also in the transport system described in WO 2020/203929 A1, when the moving body accommodates the plurality of energy storage devices and moves, if a center of gravity position of the plurality of energy storage devices accommodated in the moving body changes while the moving body moves, a posture of the moving body may become unstable.

The present invention provides a transport system, an information processing device, a transport method, a transport program, and a storage medium storing the transport program, which enables to transport a larger number of first moving bodies with a smaller number of second moving bodies and improve stability of the second moving bodies when transporting the plurality of first moving bodies.

### Solution to Problem

A first aspect of the present invention is a transport system according to claim 1.

A second aspect of the present invention is an information processing device according to claim 13.

A third aspect of the present invention is a transport method according to claim 14.

A fourth aspect of the present invention is a transport program according to claim 15.

A fifth aspect of the present invention is
a storage medium storing the transport program of the fourth aspect of the present invention described above.

### ADVANTAGEOUS EFFECTS OF INVENTION

According to the first aspect of the present invention, since it is possible to transport the plurality of autonomously movable first moving bodies as the first assembly, in which the relative positions of the plurality of first moving bodies with respect to each other are identified, by the second moving body, a larger number of the first moving bodies can be transported with a smaller number of the second moving body, and the number of the second moving body in the transport system can be reduced. Furthermore, since the plurality of first moving bodies are transported as the first assembly, in which the relative positions of the plurality of first moving bodies with respect to each other are identified, the center of gravity position of the plurality of first moving bodies is stabilized during transport by the second moving body. In this way, a larger number of the first moving bodies can be transported with a smaller number of the second moving body, and stability of the second moving body when transporting the plurality of first moving bodies is improved.

According to the second to fifth aspects of the present invention, the second center of gravity information, which is the center of gravity related information of the first assembly, is calculated based on the first center of gravity information, which is the center of gravity related information of the first moving bodies, so that it is possible to optimally dispose the second moving body according to the center of gravity related information of the first assembly, and to transport the plurality of first moving bodies as the first assembly by the second moving body. In this way, a larger number of the first moving bodies can be transported with a smaller number of the second moving body, and the stability of the second moving body when transporting the plurality of first moving bodies is improved.

### BRIEF DESCRIPTION OF DRAWINGS

[Fig. 1] Fig. 1 is a schematic diagram of a transport system according to a first embodiment of the present invention.
[Fig. 2] Fig. 2 is a system configuration diagram of a first moving body in the transport system in Fig. 1.
[Fig. 3] Fig. 3 is a schematic external view of the first moving body in the transport system in Fig. 1.
[Fig. 4] In Fig. 4, (a) is a diagram showing an example of a state in which six first moving bodies are not connected to the other first moving body, and (b) is a diagram showing an example of a state in which the six first moving bodies are connected such that three thereof are in a first direction and two thereof are in a second direction, so as to form a first assembly in which relative positions of the six first moving bodies with respect to each other are fixed.
[Fig. 5] Fig. 5 is a schematic diagram of a second moving body in the transport system in Fig. 1.
[Fig. 6] Fig. 6 is a diagram showing a reference center of gravity position when the first assembly is formed by connecting nine first moving bodies such that three thereof are in the first direction and three thereof are in the second direction.
[Fig. 7] Fig. 7 is a diagram showing a position of a first moving body side connection portion when the first assembly is formed by connecting nine first moving bodies such that three thereof are in the first direction and three thereof are in the second direction, and the number of the second moving body to be used for transporting the first assembly is determined to be one.
[Fig. 8] Fig. 8 is a schematic diagram of the first assembly and the second moving body when the first assembly is formed by connecting twelve first moving bodies such that four thereof are in the first direction and three thereof are in the second direction, and the number of the second moving body to be used for transporting the first assembly is determined to be two.
[Fig. 9] Fig. 9 is a diagram showing a position of the first moving body side connection portion when the first assembly is formed by connecting twelve first moving bodies such that four thereof are in the first direction and three thereof are in the second direction, and the number of the second moving body to be used for transporting the first assembly is determined to be two.
[Fig. 10] Fig. 10 is a flowchart (part 1) of processing operations of the transport system in Fig. 1.
[Fig. 11] Fig. 11 is a flowchart (part 2) of processing operations of the transport system in Fig. 1.
[Fig. 12] Fig. 12 is a flowchart (part 3) of processing operations of the transport system in Fig. 1.
[Fig. 13] Fig. 13 is a flowchart (part 4) of processing operations of the transport system in Fig. 1.
[Fig. 14] Fig. 14 is a flowchart (part 5) of processing operations of the transport system in Fig. 1.
[Fig. 15] Fig. 15 is a schematic diagram of a transport system according to a second embodiment of the present invention.
[Fig. 16] Fig. 16 is a schematic external view of a first moving body in the transport system in Fig. 15.
[Fig. 17] Fig. 17 is a schematic diagram of a second moving body in the transport system in Fig. 15.
[Fig. 18] Fig. 18 is a diagram illustrating an engagement operation between an engaging member of the first moving body and an engaged portion of the second moving body in the transport system in Fig. 15.
[Fig. 19] Fig. 19 is a diagram illustrating an operation of guiding the first moving body accommodated in an accommodating portion of the second moving body to an accommodating portion of the other second moving body in the transport system in Fig. 15.
[Fig. 20] Fig. 20 is a diagram showing an operation of guiding the first moving body accommodated in the accommodating portion of the second moving body to a loading platform of another third moving body in the transport system in Fig. 15.
[Fig. 21] Fig. 21 is a schematic diagram of a transport system according to a third embodiment of the present invention.
[Fig. 22] Fig. 22 is a schematic diagram of a container in the transport system in Fig. 21.
[Fig. 23] Fig. 23 is a diagram illustrating an engagement operation between an engaging member of the first moving body and an engaged portion of the container in the transport system in Fig. 21.
[Fig. 24] Fig. 24 is a schematic diagram of a container vehicle when the container in the transport system in Fig. 21 is a container vehicle.
[Fig. 25] Fig. 25 is a diagram illustrating an engagement operation between an engaging member of the first moving body and an engaged portion of the container vehicle in the transport system in Fig. 21.
[Fig. 26] Fig. 26 is a schematic diagram of a container vehicle when the container vehicle in the transport system in Fig. 21 is the second moving body.
[Fig. 27A] Fig. 27A is a schematic external view of the first moving body in a state where a guide member is expanded in a transport system according to a fourth embodiment of the present invention.
[Fig. 27B] Fig. 27B is a schematic external view of the transport system according to the fourth embodiment of the present invention in a state where the guide member is contracted and two first moving bodies are connected.

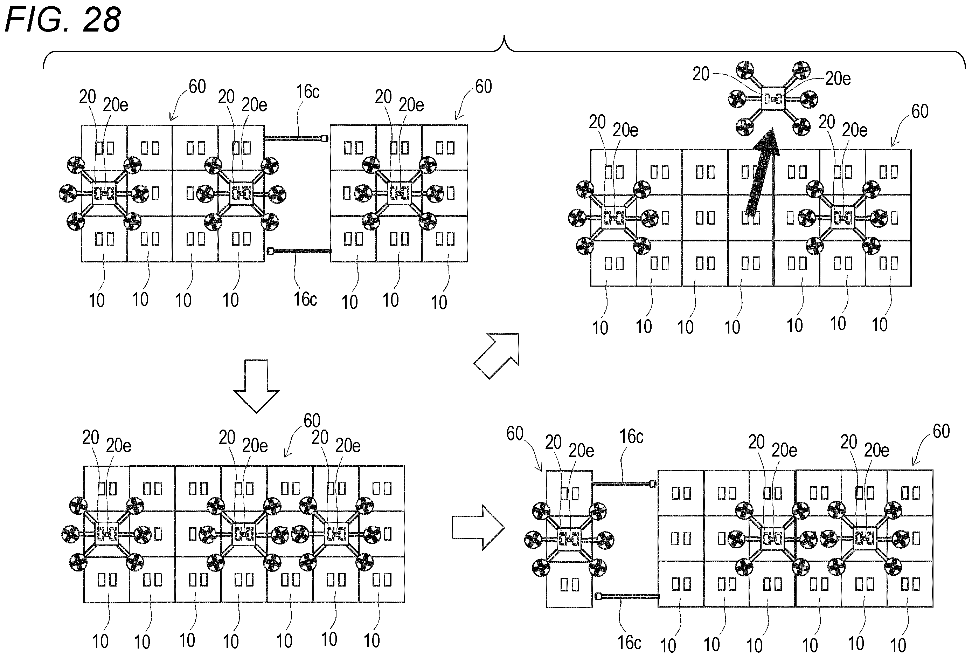

[Fig. 28] In Fig. 28, (a) is a schematic external view of the transport system according to the fourth embodiment of the present invention in a state where connecting surfaces of two first assemblies are in a position facing each other and the guide members of the first moving bodies are expanded, (b) is a schematic external view in a state where the two first assemblies are connected as one first assembly, (c) is a schematic external view in a state where after the two first assemblies are connected as one first assembly, one second moving body leaves the one first assembly, and (d) is a schematic external view in a state where after the two first assemblies are connected as one first assembly, the one first assembly is separated into a plurality of first assemblies.

### DESCRIPTION OF EMBODIMENTS

Hereinafter, embodiments of a transport system according to the present invention will be described with reference to the accompanying drawings. Note that the drawings are viewed in directions of reference numerals.

### [First Embodiment]

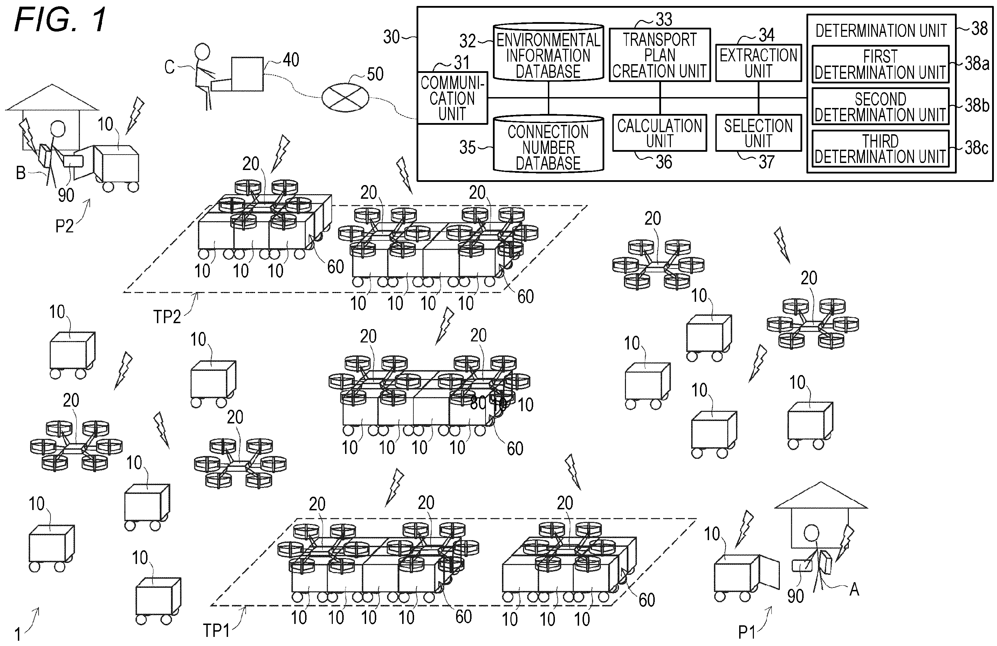

First, a transport system 1 according to a first embodiment of the present invention will be described with reference to Figs. 1 to 14.

### <Overall Configuration of Transport System>

As shown in Fig. 1, the transport system 1 of the present embodiment is a system that can transport an object 90 from a first point P1 to a second point P2. The transport system 1 includes a plurality of first moving bodies 10, a plurality of second moving bodies 20, a central management server 30, a system management terminal 40, and a communication network 50.

The plurality of first moving bodies 10, the plurality of second moving bodies 20, the central management server 30, and the system management terminal 40 are connected to the communication network 50. The communication network 50 is not particularly limited, and is, for example, the Internet. The plurality of first moving bodies 10, the plurality of second moving bodies 20, the central management server 30, and the system management terminal 40 are capable of mutually transmitting and receiving information via the communication network 50.

The object 90 is loaded on the first moving body 10. In the present embodiment, the object 90 is a luggage such as goods. The object 90 is loaded onto the first moving body 10 by a sender A at the first point P1 and transported to the second point P2, and can be received by a receiver B at the second point P2.

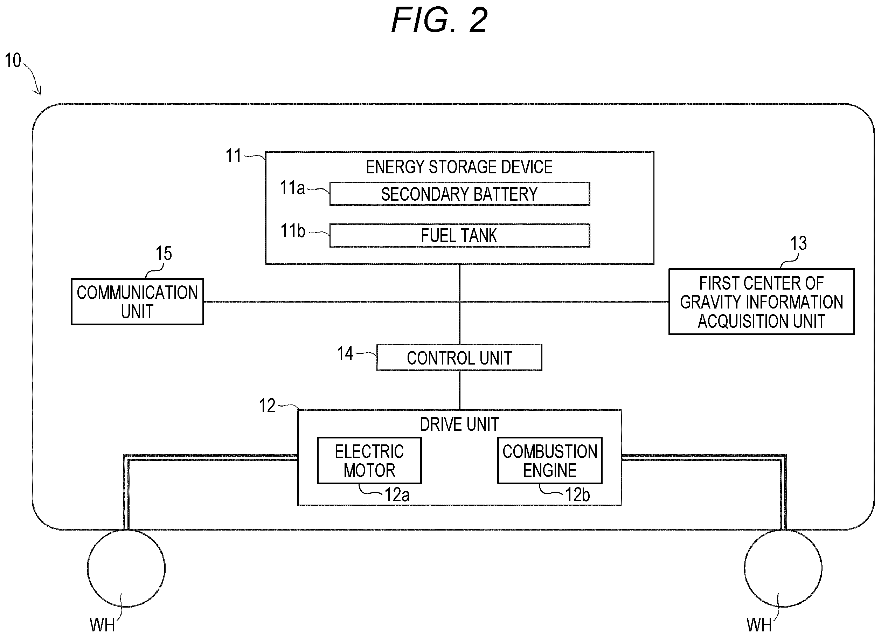

As shown in Fig. 2, the first moving body 10 is an autonomously movable moving body. In the present embodiment, the first moving body 10 is an unmanned vehicle that is equipped with wheels WH and can autonomously travel on a road. The first moving body 10 is equipped with an energy storage device 11 and a drive unit 12, and the first moving body 10 is a vehicle that travels by being driven by the drive unit 12 using energy stored in the energy storage device 11 as a drive source. In the present embodiment, the energy storage device 11 includes a secondary battery 11a such as a lithium ion battery, and a fuel tank 11b capable of storing fuel such as gasoline, and the drive unit 12 includes an electric motor 12a driven by electric power stored in the secondary battery 11a, and an internal combustion engine 12b driven by the fuel stored in the fuel tank 11b. The first moving body 10 is a hybrid vehicle that travels by driving the wheels WH using power from the electric motor 12a and the internal combustion engine 12b.

The first moving body 10 includes a first center of gravity information acquisition unit 13, a control unit 14, and a communication unit 15.

The first center of gravity information acquisition unit 13 is capable of acquiring first center of gravity information which is center of gravity related information of the first moving body 10 including the loaded object 90. The first center of gravity information includes first center of gravity position information indicating a center of gravity position of the first moving body 10 including the loaded object 90, and first weight information indicating a weight of the first moving body 10 including the loaded object 90. The first center of gravity information acquisition unit 13 includes, for example, a plurality of load sensors, multi-axis force sensors, and the like.

The control unit 14 includes an arithmetic processing unit, an inverter, a DC-DC converter, and the like, and controls the electric motor 12a and the internal combustion engine 12b, which are included in the drive unit 12. The control unit 14 further controls a first engaging member 16a and a second engaging member 17a, which will be described later. Note that an openable and closeable door 10b may be opened or closed by an electric motor (not shown) controlled by the control unit 14.

The communication unit 15 includes, for example, a network adapter, and transmits and receives various kinds of data to and from other devices via the communication network 50. The communication unit 15 of the first moving body 10 is capable of receiving a movement command from the central management server 30 via the communication network 50. In the first moving body 10, the movement command received from the central management server 30 is input to the control unit 14, and the control unit 14 controls the electric motor 12a and the internal combustion engine 12b, which are included in the drive unit 12, based on the movement command from the central management server 30. In this way, the first moving body 10 autonomously travels according to the movement command from the central management server 30. The first moving body 10 is capable of transmitting, from the communication unit 15 to the central management server 30 via the communication network 50, information such as the center of gravity related information of the first moving body 10 acquired by the first center of gravity information acquisition unit 13, position information and movement state of the first moving body 10, energy storage state of the energy storage device 11 mounted on the first moving body 10, and whether the object 90 is loaded. The energy storage state of the energy storage device 11 mounted on the first moving body 10 includes, for example, a state of charge (SOC) of the secondary battery 11a, which indicates a remaining capacity of the stored electric power, and a remaining amount of the fuel stored in the fuel tank 11b.

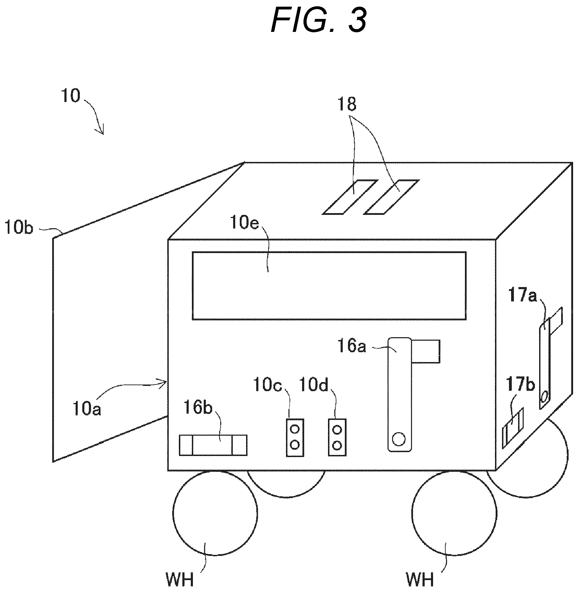

As shown in Fig. 3, the first moving body 10 includes an accommodating portion 10a that can accommodate the object 90 therein. The first moving body 10 further includes an openable and closeable door 10b that can be opened and closed, and when the openable and closeable door 10b is in an open state, the accommodating portion 10a can be accessed from outside the first moving body 10. Therefore, the sender A sets the openable and closeable door 10b to an open state to accommodate the object 90 in the accommodating portion 10a, and then sets the openable and closeable door 10b to a closed state. Therefore, it is possible to prevent the object 90 from jumping out from the accommodating portion 10a while the object 90 is being transported, and it is also possible to prevent a third party from taking out the object 90 from the accommodating portion 10a while the object 90 is being transported.

The first moving body 10 includes an electric power input and output connection portion 10c, a fuel input and output connection portion 10d, and a display unit 10e.

The electric power input and output connection portion 10c is electrically connected to the secondary battery 11a, and external devices and the like can be electrically connected thereto. The electric power input and output connection portion 10c allows electric power to be exchanged between an external device or the like and the secondary battery 11a. The electric power input and output connection portion 10c is, for example, a plug in the related art. The electric power input and output connection portion 10c may be electrically connectable to another first moving body 10 or may be electrically connectable to the second moving body 20.

The fuel input and output connection portion 10d is connected to the fuel tank 11b by a pipe or the like, and a pipe or the like through which the fuel flows can be connected thereto. The fuel input and output connection portion 10d allows the fuel to be exchanged between an external device or the like and the fuel tank 11b via a pipe or the like. The fuel input and output connection portion 10d is, for example, a nozzle. The fuel input and output connection portion 10d may be connectable to another first moving body 10 or may be connectable to the second moving body 20.

The display unit 10e is, for example, a display device such as a liquid crystal display or an organic light-emitting diode (OLED) display. The display unit 10e displays information such as the center of gravity related information of the first moving body 10 acquired by the first center of gravity information acquisition unit 13, the position information and movement state of the first moving body 10, the energy storage state of the energy storage device 11 mounted on the first moving body 10, and whether the object 90 is loaded.

The first moving body 10 includes the first engaging member 16a and a first engaged portion 16b. The first engaging member 16a is an arm member that is rotated by an electric motor (not shown), controlled by the control unit 14, and can be engaged with the first engaged portion 16b. The first engaged portion 16b is a member that can engage the first engaging member 16a. The first engaging member 16a of the first moving body 10 engages with the first engaged portion 16b of a different first moving body 10 disposed side by side with the former first moving body 10 in a first direction perpendicular to an upper-lower direction, so that the two first moving bodies 10 are connected in the first direction with relative positions with respect to each other fixed. Note that the first engaging member 16a and the first engaged portion 16b are configured such that even when the two first moving bodies 10 connected to each other are lifted upward while the first engaging member 16a is engaged with the first engaged portion 16b of a different first moving body 10, the engaged state between the first engaging member 16a and the first engaged portion 16b of the different first moving body 10 is maintained.

The first moving body 10 includes a second engaging member 17a and a second engaged portion 17b. The second engaging member 17a is an arm member that is rotated by an electric motor (not shown), controlled by the control unit 14, and can be engaged with the second engaged portion 17b. The second engaged portion 17b is a member that can engage the second engaging member 17a. The second engaging member 17a of the first moving body 10 engages with the second engaged portion 17b of a different first moving body 10 disposed side by side with the former first moving body 10 in a second direction perpendicular to both the first direction and the upper-lower direction, so that the two first moving bodies 10 are connected in the second direction with relative positions with respect to each other fixed. Note that the second engaging member 17a and the second engaged portion 17b are configured such that even when the two first moving bodies 10 connected to each other are lifted upward while the second engaging member 17a is engaged with the second engaged portion 17b of a different first moving body 10, the engaged state between the second engaging member 17a and the second engaged portion 17b of the different first moving body 10 is maintained.

In this way, by the first engaging member 16a of the first moving body 10 engaging with the first engaged portion 16b of a different first moving body 10 disposed side by side with the former first moving body 10 in the first direction, and the second engaging member 17a engaging with the second engaged portion 17b of another different first moving body 10 adjacent to the former first moving body 10 in the second direction, a first assembly 60 is formed in which relative positions of the plurality of first moving bodies 10 with respect to each other are fixed. Therefore, in the first assembly 60, the relative positions of the plurality of first moving bodies 10 with respect to each other are fixed by the direct engagement of the plurality of first moving bodies 10 with each other.

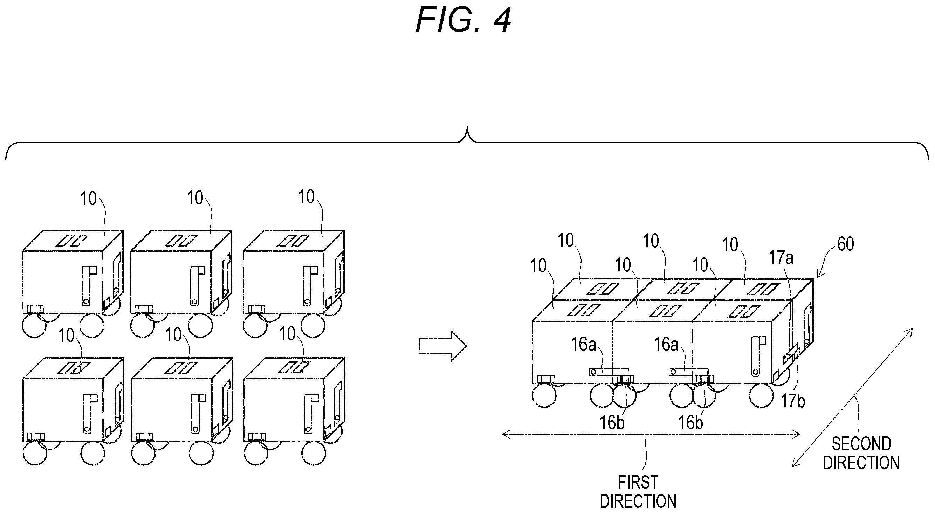

An example of a state in which six first moving bodies 10 are not connected to the other first moving body 10 is shown in (a) of Fig. 4, and an example of a state in which the six first moving bodies 10 are connected such that three thereof are in the first direction and two thereof are in the second direction, so as to form the first assembly 60 in which the relative positions of the six first moving bodies 10 with respect to each other are fixed is shown in (b) of Fig. 4.

A first moving body side connection portion 18 is provided on an upper portion of each first moving body 10. A second moving body side connection portion 25 of the second moving body 20, which will be described later, can be connected to the first moving body side connection portion 18. In the present embodiment, a plurality of the first moving body side connection portions 18 are provided on the upper portion of each first moving body 10.

Returning to Fig. 1, the second moving body 20 is an autonomously movable moving body. In the present embodiment, the second moving body 20 is an unmanned aerial vehicle (UAV) such as a drone. The second moving body 20 is capable of transporting the first assembly 60 constituted by the plurality of first moving bodies 10 whose relative positions with respect to each other are fixed. Further, depending on a weight of the first assembly 60, the first assembly 60 is transported by one or a plurality of second moving bodies 20. In this way, the second moving body 20 transports the plurality of first moving bodies 10, whose relative positions with respect to each other are specified, as the first assembly 60.

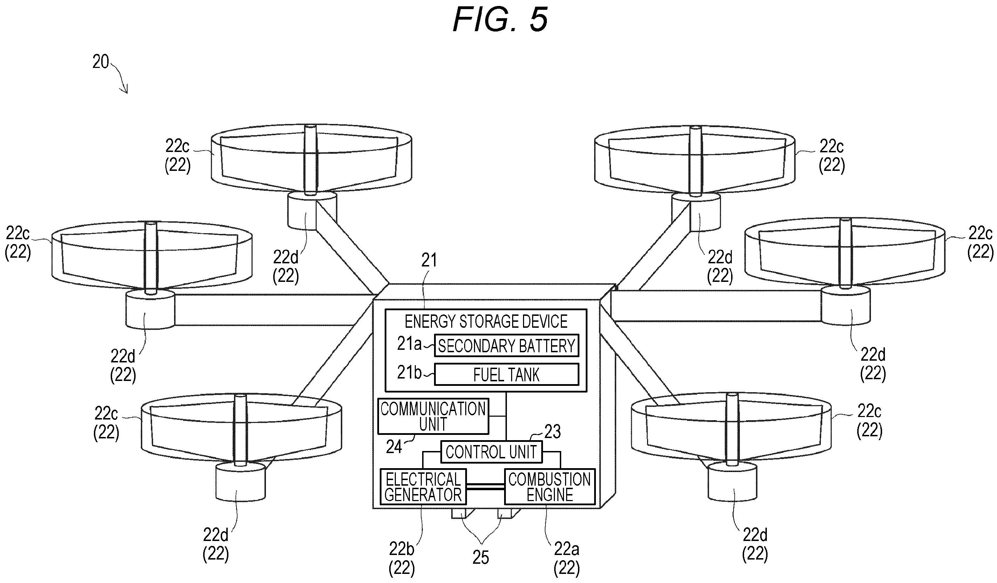

As shown in Fig. 5, the second moving body 20 includes an energy storage device 21, a drive device 22, a control unit 23, and a communication unit 24. The energy storage device 21 includes a secondary battery 21a such as a lithium ion battery, and a fuel tank 21b capable of storing fuel such as gasoline. The drive device 22 includes a combustion engine 22a that is driven by the fuel stored in the fuel tank 21b, an electrical generator 22b that generates electric power using a driving force of the combustion engine 22a, and a propeller device 22c including an electric motor 22d that is driven by electric power stored in the secondary battery 21a or the electric power generated by the electrical generator 22b. The combustion engine 22a is an external combustion engine such as a gas turbine, an internal combustion engine such as a reciprocating engine, or the like. The second moving body 20 is a flight vehicle that flies by being driven by the drive device 22 using energy stored in the energy storage device 21 as a drive source. In the present embodiment, the second moving body 20 includes six propeller devices 22c. Note that the first moving body 10 is not limited to the power train described above, and may include, for example, the same power train as the second moving body 20.

The control unit 23 includes an arithmetic processing unit, an inverter, a DC-DC converter, and the like, and controls the drive device 22. The control unit 23 further controls the second moving body side connection portion 25, which will be described later.

The communication unit 24 includes, for example, a network adapter, and transmits and receives various kinds of data to and from other devices via the communication network 50. The communication unit 24 of the second moving body 20 can receive a movement instruction from the central management server 30 via the communication network 50. In the second moving body 20, the movement instruction received from the central management server 30 is input to the control unit 23, and the control unit 23 controls the drive device 22 based on the movement instruction from the central management server 30. In this way, the second moving body 20 autonomously flies in accordance with the movement instruction from the central management server 30. The second moving body 20 is capable of transmitting, from the communication unit 24 to the central management server 30 via the communication network 50, information such as position information and movement state of the second moving body 20, and an energy storage state of the energy storage device 21 mounted on the second moving body 20. The energy storage state of the energy storage device 21 mounted on the second moving body 20 includes, for example, a state of charge (SOC) of the secondary battery, which indicates a remaining capacity of the stored electric power, and a remaining amount of the fuel stored in the fuel tank.

The second moving body 20 includes the second moving body side connection portion 25 connectable to the first moving body side connection portion 18 provided on the upper portion of the first moving body 10.

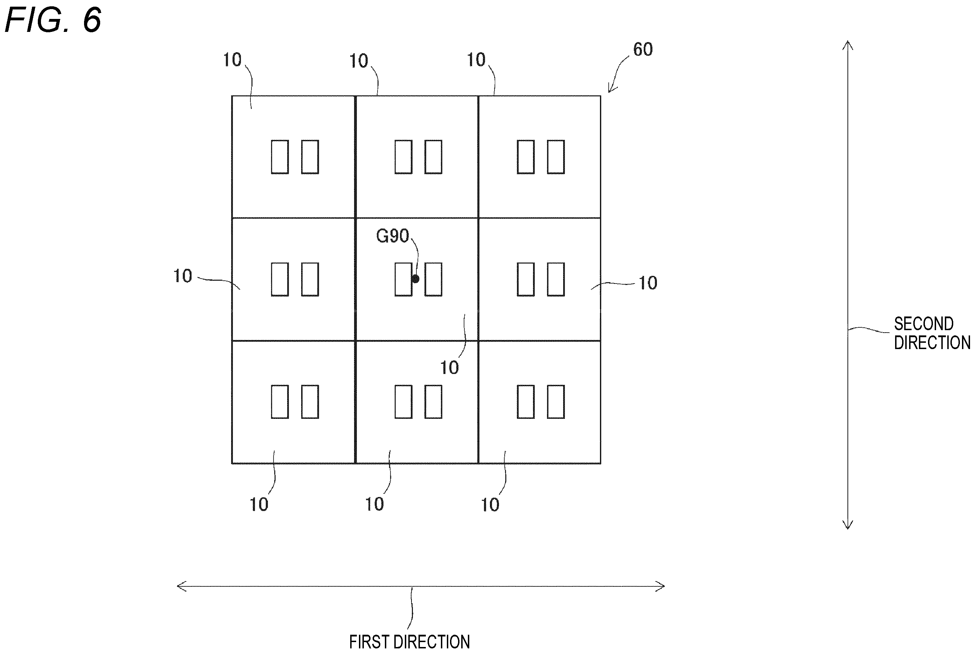

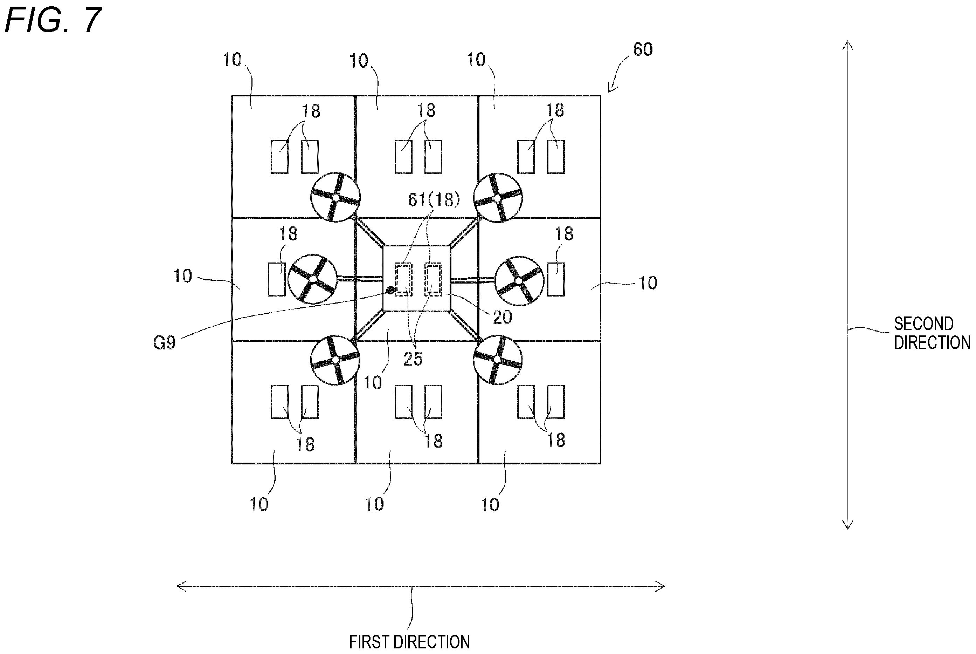

To one or a plurality of first assembly side connection positions 61 selected from the first moving body side connection portions 18 of the plurality of first moving bodies 10 constituting the first assembly 60 and whose relative positions with respect to each other are fixed, the second moving body side connection portion 25 of each second moving body 20 is connected respectively (see Figs. 6 and 7). Then, the second moving body 20 transports the plurality of first moving bodies 10, whose relative positions with respect to each other are identified, as the first assembly 60. A connection operation of the second moving body side connection portion 25 to the first assembly side connection position 61 and a disconnection operation from the first assembly side connection position 61 are controlled by the control unit 23.

Returning to Fig. 1, each of the first moving bodies 10 in which the object 90 is accommodated in the accommodating portion 10a, including the first moving body 10 in which the object 90 is accommodated in the accommodating portion 10a at the first point P1, autonomously travels to a first transit point TP1. Then, at the first transit point TP1, by operation of the first engaging member 16a and the second engaging member 17a, the plurality of first moving bodies 10, in each of which the object 90 is accommodated in the accommodating portion 10a, constitute the first assembly 60 in which the relative positions of the plurality of first moving bodies 10 with respect to each other are fixed.

Then, to one or a plurality of first assembly side connection positions 61 selected from the first moving body side connection portions 18 of the plurality of first moving bodies 10 whose relative positions with respect to each other are fixed, the second moving body side connection portion 25 of each second moving body 20 is connected respectively. Then, the second moving body 20 transports the plurality of first moving bodies 10, whose relative positions with respect to each other are identified, as the first assembly 60 from the first transit point TP1 to a second transit point TP2.

By operation of the first engaging member 16a and the second engaging member 17a of each first moving body 10 constituting the first assembly 60 transported to the second transit point TP2, the first moving bodies 10 in the first assembly 60 are no longer fixed at the relative positions with respect to each other and can move independently. Then, each of the first moving bodies 10 autonomously travels to a transport destination of the object 90 accommodated in the accommodating portion 10a, including the second point P2.

In this way, the transport system 1 uses the first moving body 10 and the second moving body 20 to transport the object 90 accommodated in the accommodating portion 10a of the first moving body 10 at the first point P1 to the second point P2.

In this way, since the transport from the first transit point TP1 to the second transit point TP2 is performed by the second moving body 20, the energy stored in the energy storage device 11 of the first moving body 10 is not consumed for the moving from the first transit point TP1 to the second transit point TP2. Therefore, the object 90 can be transported for a long distance without increasing the amount of energy that can be stored in the energy storage device 11 of the first moving body 10. Since an energy consumption amount of the energy storage device 11 of the first moving body 10 when moving from the first point P1 to the second point P2 can be reduced, the first moving body 10 can arrive at the second point P2 with more energy remaining in the energy storage device 11. As a result, when the energy remaining in the energy storage device 11 of the first moving body 10 that arrives at the second point P2 is used in the vicinity of the second point P2, more energy is used in the vicinity of the second point P2.

Furthermore, since the second moving body 20 transports the plurality of first moving bodies 10 as the first assembly 60, in which the relative positions of the plurality of first moving bodies 10 with respect to each other are identified, from the first transit point TP1 to the second transit point TP2, a larger number of the first moving bodies 10 can be transported with a smaller number of the second moving body 20, and the number of second moving body 20 in the transport system 1 can be reduced. Furthermore, since the plurality of first moving bodies 10 are transported as the first assembly 60, in which the relative positions of the plurality of first moving bodies with respect to each other are identified, the center of gravity position of the plurality of first moving bodies 10 is stabilized during transport by the second moving body 20. Accordingly, a larger number of the first moving bodies 10 can be transported with a smaller number of the second moving body 20, and the stability of the second moving body 20 when transporting the plurality of first moving bodies 10 is improved.

The central management server 30 includes a communication unit 31, an environmental information database 32, a transport plan creation unit 33, an extraction unit 34, a connection number database 35, a calculation unit 36, a selection unit 37, and a determination unit 38.

The communication unit 31 includes, for example, a network adapter, and transmits and receives various kinds of data to and from other devices via the communication network 50.

The environmental information database 32 stores map information, weather information, traffic and congestion information, and the like. The map information can be acquired from Geographical Survey Institute, a map producing company, or the like. The weather information is information indicating a temperature, humidity, and weather of each place, and can be acquired from a Meteorological Agency, a weather information company, or the like via the communication network 50. The traffic and congestion information is information indicating a congestion status of moving bodies such as vehicles, flight vehicles, and ships, and people, and can be acquired from transport infrastructure related companies, information terminals installed in moving bodies such as vehicles, flight vehicles, and ships, personal portable information terminals, and the like via the communication network 50.

The transport plan creation unit 33 selects the first moving body 10 to be moved to the first point P1, and creates a moving plan for the selected first moving body 10 from a current location to the first point P1 and a transport plan from the first point P1 to the second point P2, based on position information of the first point P1, which is a transport origin, position information of the second point P2, which is a transport destination, various kinds of information stored in the environmental information database 32, and various kinds of information such as the position information and movement state transmitted from each first moving body 10, the energy storage state of the mounted energy storage device 11, whether the object 90 is loaded, and a loading time of the object 90 loaded in the past. The created transport plan also includes plans regarding stopovers such as the first transit point TP1 and the second transit point TP2. Similarly, for the first moving body 10 that transports another object 90, the transport plan creation unit 33 creates a moving plan from the current location of the first moving body 10 to the transport origin, and a transport plan from a transport origin to a transport destination based on position information of the transport origin, position information of the transport destination, various kinds of information stored in the environmental information database 32, and various kinds of information such as the position information and movement state transmitted from the first moving body 10, the energy storage state of the mounted energy storage device 11, and a loading time of the object 90 loaded in the past.

Each of the first moving bodies 10 receives a movement instruction based on the transport plan created by the transport plan creation unit 33 from the central management server 30, and autonomously travels according to the transport plan created by the transport plan creation unit 33.

The extraction unit 34 extracts the plurality of first moving bodies 10 that constitute the first assembly 60 based on various kinds of information such as the position information and movement state transmitted from each of the plurality of first moving bodies 10 accumulated at the first transit point TP1 and the energy storage state of the mounted energy storage device 11, transport destination information of the object 90 loaded on each of the plurality of first moving bodies 10 accumulated at the first transit point TP1, and a transport plan created for each of the plurality of first moving bodies 10 accumulated at the first transit point TP1.

The connection number database 35 stores information indicating the number of connections of the first moving bodies 10 in the first direction and the second direction according to the number of the first moving bodies 10 that constitute the first assembly 60. For example, when the number of first moving bodies 10 constituting the first assembly 60 is six, information indicating that the number of connections of the first moving bodies 10 in the first direction is three, and the number of connections of the first moving bodies 10 in the second direction is two is stored; when the number of first moving bodies 10 constituting the first assembly 60 is nine, information indicating that the number of connections of the first moving bodies 10 in the first direction is three, and the number of connections of the first moving bodies 10 in the second direction is three is stored; and when the number of first moving bodies 10 constituting the first assembly 60 is twelve, information indicating that the number of connections of the first moving bodies 10 in the first direction is four, and the number of connections of the first moving bodies 10 in the second direction is four is stored.

The calculation unit 36 calculates second center of gravity information, which is center of gravity related information of the first assembly 60, based on the first center of gravity information acquired by the first center of gravity information acquisition unit 13 of each of the first moving bodies 10 extracted by the extraction unit 34, that is, the plurality of first moving bodies 10 constituting the first assembly 60, and the information stored in the connection number database 35. The second center of gravity information includes center of gravity position information indicating a center of gravity position of the entire first assembly 60 in the case where predetermined numbers of the first moving bodies 10 are connected in the first direction and the second direction according to the information stored in the connection number database 35, and weight information indicating a weight of the entire first assembly 60. As a result, it becomes possible to optimally arrange the second moving bodies 20 according to the center of gravity position and weight of the entire first assembly 60 as a whole, and to transport the plurality of first moving bodies 10 as the first assembly 60 by the second moving body 20.

Furthermore, when the first assembly 60 is formed by identifying the relative position of each of the first moving bodies 10 extracted by the extraction unit 34, that is, the plurality of first moving bodies 10 constituting the first assembly 60, with respect to each other according to a plurality of arrangement patterns, the calculation unit 36 calculates the second center of gravity information for each arrangement pattern. The arrangement pattern defines the relative positions of the plurality of first moving bodies 10 with respect to each other in the first assembly 60.

The selection unit 37 selects one arrangement pattern based on the second center of gravity information in each arrangement pattern of the plurality of first moving bodies 10 calculated by the calculation unit 36.

The central management server 30 transmits information indicating the arrangement pattern selected by the selection unit 37, or information indicating the position of each of the plurality of first moving bodies 10 in the arrangement pattern selected by the selection unit 37, from the communication unit 31 to each of the first moving bodies 10 constituting the first assembly 60.

Then, each of the first moving bodies 10 constituting the first assembly 60 uses the control unit 14 to control the drive unit 12, the first engaging member 16a, and the second engaging member 17a based on the information indicating the arrangement pattern received from the central management server 30 or the information indicating the position of the first moving body 10 in the arrangement pattern selected by the selection unit 37, so as to form the first assembly 60 arranged in the arrangement pattern selected by the selection unit 37.

In this way, when the first assembly 60 is formed by identifying the relative positions of the plurality of first moving bodies 10 with respect to each other in the plurality of arrangement patterns, by calculating the second center of gravity information of each arrangement pattern by the calculation unit 36, and selecting one arrangement pattern by the selection unit 37 based on the second center of gravity information in each arrangement pattern of the plurality of first moving bodies 10 calculated by the calculation unit 36, the first assembly 60 can be formed by arranging the plurality of first moving bodies 10 in an optimal arrangement pattern among the plurality of arrangement patterns. Furthermore, by the communication unit 31 transmitting the information indicating the arrangement pattern selected by the selection unit 37, or the information indicating the position of each of the plurality of first moving bodies 10 in the arrangement pattern selected by the selection unit 37 to each first moving body 10 constituting the first assembly 60, each of the first moving bodies 10 constituting the first assembly 60 can autonomously move to form the first assembly 60 according to the arrangement pattern selected by the selection unit 37.

In this case, the selection unit 37 selects one arrangement pattern based on a reference center of gravity position, which is the center of gravity position of the entire first assembly 60 when the plurality of first moving bodies 10 constituting the first assembly 60 all have the same weight and the same center of gravity, and the second center of gravity information of each of the plurality of arrangement patterns. In the present embodiment, the selection unit 37 selects the arrangement pattern in which the center of gravity position information of the second center of gravity information is closest to the reference center of gravity position.

Here, as an example, a case where the first assembly 60 is constituted by nine first moving bodies 10 will be described with reference to Fig. 6.

For example, when the number of first moving bodies 10 constituting the first assembly 60 is nine, information indicating that the number of connections of the first moving bodies 10 in the first direction is three and the number of connections of the first moving bodies 10 in the second direction is three is stored in the connection number database 35. Therefore, the first assembly 60 is formed so that there are three first moving bodies 10 in the first direction and three in the second direction.

In this case, a reference center of gravity position G90, which is the center of gravity position of the entire first assembly 60 when the nine first moving bodies 10 constituting the first assembly 60 all have the same weight and the same center of gravity, is a center of the first moving body 10 positioned at a center in the first direction and a center in the second direction.

On the other hand, the object 90 is accommodated in the accommodating portion 10a of each of the first moving bodies 10 accumulated at the first transit point TP1, and the object 90 accommodated in the accommodating portion 10a of each of the first moving bodies 10 has different weight and size from each other, and therefore, the first moving bodies 10 loaded with the objects 90 have different weights and centers of gravity.

When the first assembly 60 is formed by identifying the relative positions of nine first moving bodies 10, which constitute the first assembly 60 and have different weights and centers of gravity, with respect to each other according to a plurality of arrangement patterns, the calculation unit 36 calculates the second center of gravity information for each arrangement pattern.

Then, the selection unit 37 selects the arrangement pattern in which the center of gravity position information of the second center of gravity information is closest to the reference center of gravity position G90, based on the second center of gravity information in each arrangement pattern of the nine first moving bodies 10 calculated by the calculation unit 36. For example, an arrangement pattern in which the heaviest first moving body 10 of the nine first moving bodies 10 constituting the first assembly 60 becomes the first moving body 10 positioned at the center in the first direction and the center in the second direction.

In this way, the selection unit 37 can select the optimal arrangement pattern based on the reference center of gravity position and the second center of gravity information of each arrangement pattern. Especially, in the present embodiment, since the selection unit 37 selects the arrangement pattern in which the center of gravity position information of the second center of gravity information is closest to the reference center of gravity position, the first assembly 60 can be formed so that the center of gravity position thereof becomes closest to the reference center of gravity position.

Returning to Fig. 1, the determination unit 38 includes a first determination unit 38a that determines the number of second moving body 20 to be used when transporting the first assembly 60 from the first transit point TP1 to the second transit point TP2, a second determination unit 38b that determines, among a plurality of second moving bodies, the second moving body 20 that transports the first assembly 60 from the first transit point TP1 to the second transit point TP2, and a third determination unit 38c that determines the first assembly side connection position 61, which is a position to which the second moving body 20 is connected in the first assembly 60.

The first determination unit 38a determines the number of second moving body 20 to be used when transporting the first assembly 60 from the first transit point TP1 to the second transit point TP2 based on the weight information indicating the weight of the first assembly 60 included in the second center of gravity information calculated by the calculation unit 36. The second determination unit 38b determines, among a plurality of second moving bodies, the second moving body 20 that transports the first assembly 60 from the first transit point TP1 to the second transit point TP2, based on the information stored in the environmental information database 32, the number of second moving body 20 to be used determined by the first determination unit 38a, and various kinds of information transmitted from each second moving body 20 to the central management server 30 such as the position information and movement state of each second moving body 20, and the energy storage state of the energy storage device 21 mounted on the second moving body 20. For example, the information transmitted from each second moving body 20 to the central management server 30 includes, for example, the position information and movement state of the second moving body 20, and the energy storage state of the energy storage device 21 mounted on the second moving body 20. The third determination unit 38c determines the first assembly side connection position 61, which is a position to which the second moving body 20 is connected in the first assembly 60, based on the second center of gravity information calculated by the calculation unit 36 and the number of second moving body 20 to be used determined by the first determination unit 38a.

In this way, the determination unit 38 can determine the optimal number of second moving body 20 to be used and the optimal first assembly side connection position 61 of the first assembly 60 connected to the second moving body 20 according to the second center of gravity information calculated by the calculation unit 36, that is, the center of gravity related information of the first assembly 60. Especially, since the first determination unit 38a determines the number of second moving body 20 to be used when transporting the first assembly 60 from the first transit point TP 1 to the second transit point TP2 based on the weight information indicating the weight of the first assembly 60 included in the second center of gravity information calculated by the calculation unit 36, the determination unit 38 can determine the optimal number of second moving body 20 to be used according to the weight of the first assembly 60.

Here, as an example, a case in which the first assembly 60 is constituted by nine first moving bodies 10, and the first determination unit 38a determines that the number of second moving body 20 to be used when transporting the first assembly 60 from the first transit point TP1 to the second transit point TP2 is one, will be described with reference to Fig. 7.

The first assembly 60 is constituted by nine first moving bodies 10, three of which are connected in the first direction and three of which are connected in the second direction, and has a center of gravity position G9. In the present embodiment, the center of gravity position G9 is positioned near the center in the first direction and the center in the second direction of the first assembly 60.

The calculation unit 36 calculates the second center of gravity information, which is the center of gravity related information of the first assembly 60, based on the first center of gravity information acquired by the first center of gravity information acquisition unit 13 of the nine first moving bodies 10 constituting the first assembly 60, and the information stored in the connection number database 35. The second center of gravity information calculated by the calculation unit 36 includes the center of gravity position information indicating the center of gravity position G9 of the entire first assembly 60.

The third determination unit 38c determines the first moving body side connection portion 18 that is closest to the center of gravity position G9 of the entire first assembly 60 as the first assembly side connection position 61, based on the second center of gravity information calculated by the calculation unit 36 and the number of second moving body 20 to be used determined by the first determination unit 38a. In the present embodiment, the third determination unit 38c determines the first moving body side connection portion 18 provided in the first moving body 10 positioned at the center in the first direction and the center in the second direction, which is closest to the center of gravity position G9 of the entire first assembly 60, as the first assembly side connection position 61.

In this way, when the first determination unit 38a determines that the number of second moving body 20 to be used is one, the third determination unit 38c determines the first moving body side connection portion 18 closest to the center of gravity position of the entire first assembly 60 as the first assembly side connection position 61, based on the center of gravity position information indicating the center of gravity position of the entire first assembly 60 included in the second center of gravity information calculated by the calculation unit 36.

In this way, since the second moving body 20 can support and transport the first assembly 60 at the first moving body side connection portion 18 that is closest to the center of gravity position of the entire first assembly 60, the stability of the second moving body 20 when transporting the plurality of first moving bodies 10 as the first assembly 60 is improved.

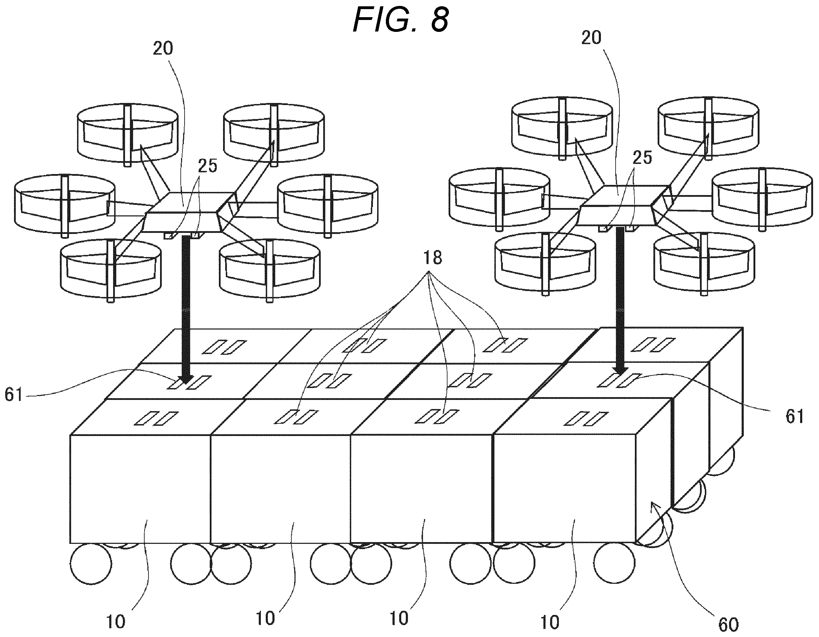

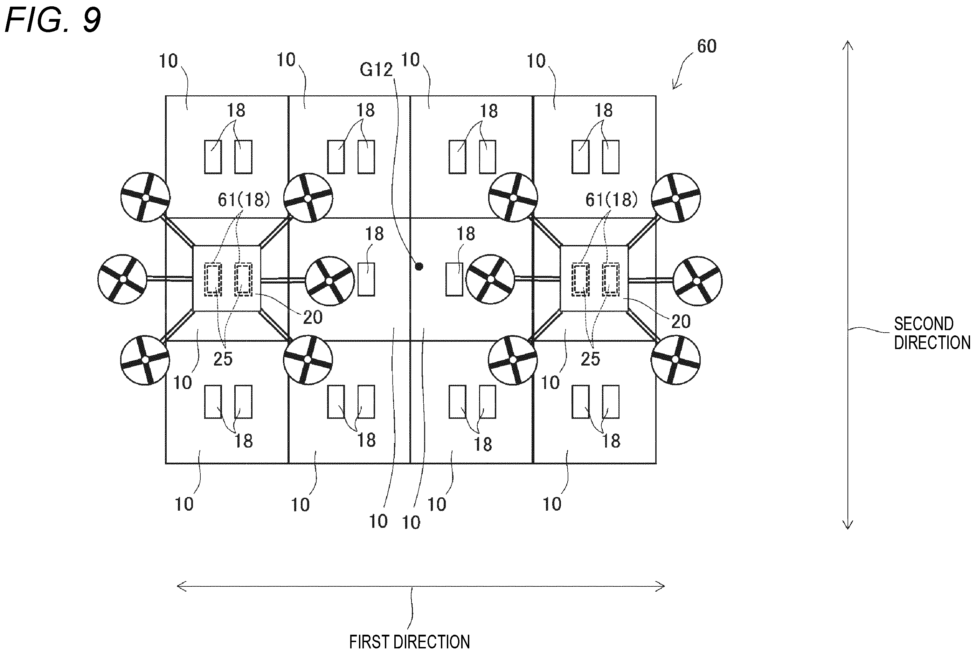

As another example, a case in which the first assembly 60 is constituted by twelve first moving bodies 10, and the first determination unit 38a determines that the number of second moving body 20 to be used when transporting the first assembly 60 from the first transit point TP1 to the second transit point TP2 is two, will be described with reference to Figs. 8 and 9.

The first assembly 60 is constituted by twelve first moving bodies 10, four of which are connected in the first direction and three of which are connected in the second direction, and has a center of gravity position G12. In the present embodiment, the center of gravity position G12 is positioned near the center in the first direction and the center in the second direction of the first assembly 60.

The calculation unit 36 calculates the second center of gravity information, which is the center of gravity related information of the first assembly 60, based on the first center of gravity information acquired by the first center of gravity information acquisition unit 13 of the twelve first moving bodies 10 constituting the first assembly 60, and the information stored in the connection number database 35. The second center of gravity information calculated by the calculation unit 36 includes the center of gravity position information indicating the center of gravity position G12 of the entire first assembly 60.

The third determination unit 38c determines two first moving body side connection portions 18 that make a combination, in which a center of the two first moving body side connection portions 18 connected to the second moving bodies 20 is closest to the center of gravity position G12 of the entire first assembly 60, as the first assembly side connection positions 61, based on the second center of gravity information calculated by the calculation unit 36 and the number of second moving body 20 to be used (two in this example) determined by the first determination unit 38a. In the present embodiment, the third determination unit 38c determines the first moving body side connection portion 18 provided in the first moving body 10 positioned at one end in the first direction and at the center in the second direction, and the first moving body side connection portion 18 provided in the first moving body 10 positioned at the other end in the first direction and at the center in the second direction, as the first assembly side connection positions 61. By determining the two first assembly side connection positions 61 in this way, there is formed a combination in which the center of the two first moving body side connection portions 18 connected to the second moving bodies 20, that is, the center of the two first assembly side connection positions 61, is closest to the center of gravity position G12 of the entire first assembly 60.

In this way, when the first determination unit 38a determines that the number of second moving body 20 to be used is plural, the third determination unit 38c determines a plurality of first moving body side connection portions 18 that make a combination, in which the center of the plurality of first moving body side connection portions 18 connected to the second moving bodies 20 is closest to the center of gravity position of the entire first assembly 60, as the plurality of first assembly side connection positions 61, based on the center of gravity position information indicating the center of gravity position of the entire first assembly 60 included in the second center of gravity information calculated by the calculation unit 36.

In this way, since the second moving bodies 20 can support and transport the first assembly 60 at a position where the center of the plurality of first moving body side connection portions 18 connected to the second moving bodies 20 is closest to the center of gravity position of the entire first assembly 60, the stability of the second moving bodies 20 when transporting the plurality of first moving bodies 10 as the first assembly 60 is improved.

The central management server 30 transmits information indicating the first assembly side connection position 61 determined by the third determination unit 38c from the communication unit 31 to the second moving body 20 determined by the second determination unit 38b.

Then, the second moving body 20 that receives the information indicating the first assembly side connection position 61 determined by the third determination unit 38c controls the drive device 22 and the second moving body side connection portion 25 by the control unit 23, so as to connect the second moving body side connection portion 25 to the first assembly 60 at the first assembly side connection position 61 determined by the third determination unit 38c.

Returning to Fig. 1, the system management terminal 40 is an information terminal that manages the first moving body 10, the second moving body 20, and the central management server 30 via the communication network 50. The system management terminal 40 is operated by a system administrator C who is an administrator of the transport system 1.

### <Transport System Processing Operation>

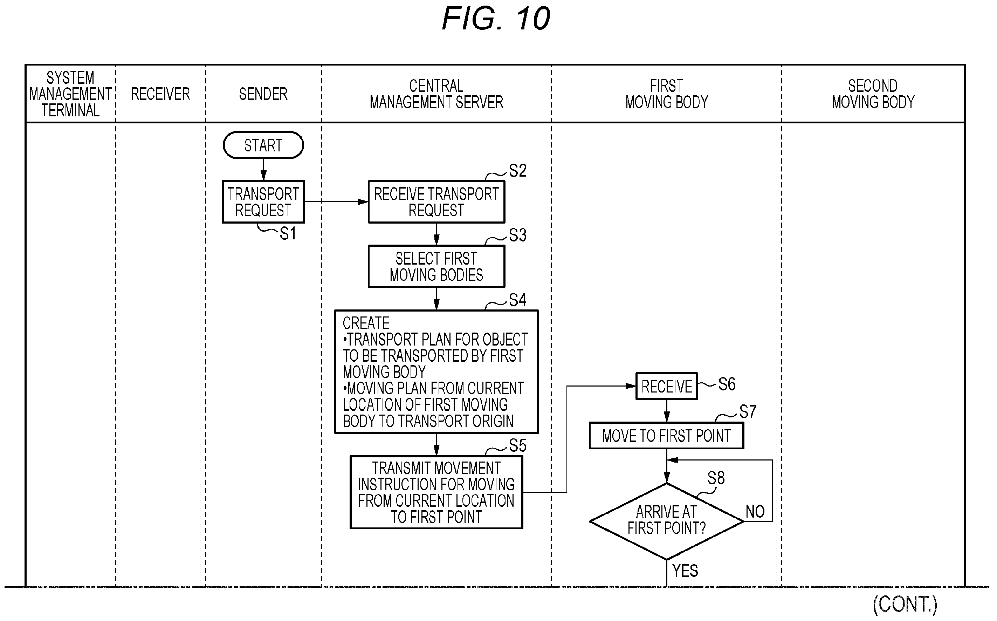

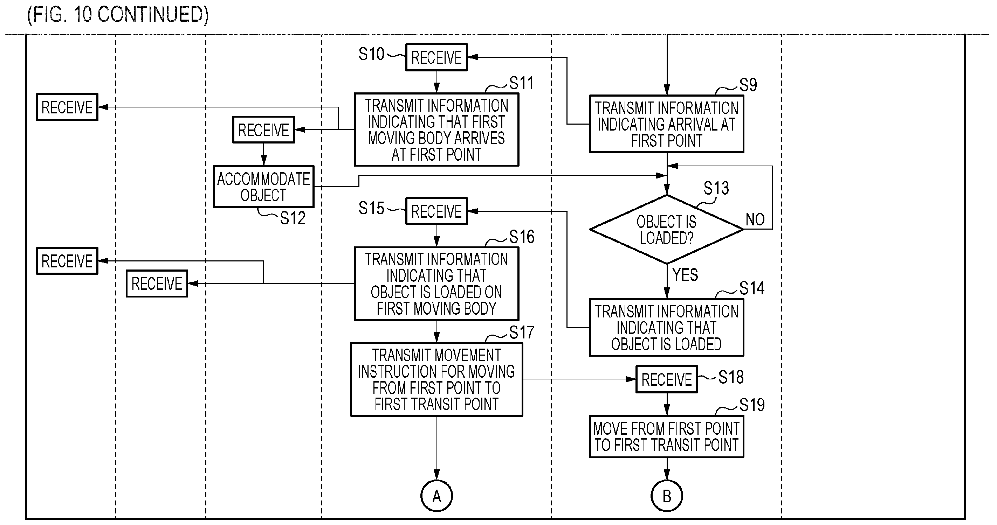

Next, the processing operation of the transport system 1 configured as described above will be specifically described with reference to Figs. 10 to 14.

As shown in Fig. 10, first, when the sender A makes a transport request of transporting the object 90 to the second point P2 (step S1), the central management server 30 receives the transport request of transporting the object 90 to the second point P2 from the sender A (step S2). The transport request is made, for example, by an application program stored in a personal portable information terminal owned by the sender A. For example, the transport request is made by operating an application program on a personal portable information terminal owned by the sender A to transmit a transport request signal to the central management server 30 via the communication network 50. The central management server 30 receives the transport request of transporting the object 90 to the second point P2 from the sender A by, for example, receiving the transport request signal via the communication network 50.

When the central management server 30 receives the transport request of transporting the object 90 to the second point P2 from the sender A, the transport plan creation unit 33 selects the first moving body 10 to be moved to the first point P1, based on the position information of the first point P1, which is a transport origin, the position information of the second point P2, which is a transport destination, various kinds of information stored in the environmental information database 32, and various kinds of information such as the position information and movement state transmitted from each first moving body 10, the energy storage state of the mounted energy storage device 11, whether the object 90 is loaded, and a loading time of the object 90 loaded in the past (step S3).

Next, the operation proceeds to step S4, and the transport plan creation unit 33 creates a transport plan for the first moving body 10 selected in step S3 to transport the object 90 from the first point P1 to the second point P2, and a moving plan for the first moving body 10 selected in step S3 to move from a current location to the first point P1, based on the position information of the first point P1, which is a transport origin, the position information of the second point P2, which is a transport destination, various kinds of information stored in the environmental information database 32, and various kinds of information such as the position information and movement state transmitted from each first moving body 10 selected in step S3, the energy storage state of the mounted energy storage device 11, and a loading time of the object 90 loaded in the past. The created transport plan also includes plans regarding stopovers such as the first transit point TP1 and the second transit point TP2. Similarly, for the first moving body 10 that transports another object 90, the transport plan creation unit 33 creates a transport plan for the first moving body 10 to transport the object 90 from a transport origin to a transport destination, and a moving plan for the first moving body 10 to move from the current location to the transport origin, based on the position information of the transport origin, the position information of the transport destination, various kinds of information stored in the environmental information database 32, and various kinds of information such as the position information and movement state transmitted from the first moving body 10, the energy storage state of the mounted energy storage device 11, and a loading time of the object 90 loaded in the past.

Then, the central management server 30 transmits a movement instruction to the first moving body 10 based on the moving plan created in step S4 for the first moving body 10 to move from the current location to the first point P1 (step S5).

The first moving body 10 that receives the movement instruction (step S6) moves to the first point P1 according to the moving plan created in step S4 for the first moving body 10 to move from the current location to the first point P1 (step S7).

The first moving body 10 determines whether the first moving body 10 arrives at the first point P1 during the movement to the first point P1 (step S8), and if the first moving body 10 does not arrive at the first point P1 (loop when step S8: NO), step S8 is repeated.

If the first moving body 10 arrives at the first point P1 (step S8: YES), the first moving body 10 transmits information indicating that the first moving body 10 arrives at the first point P1 to the central management server 30 (step S9), and the operation proceeds to step S13.

When the central management server 30 receives the information indicating that the first moving body 10 arrives at the first point P1 (step S10), the central management server 30 transmits the information to the personal portable information terminal owned by the sender A and the system management terminal 40 (step S11). Accordingly, the sender A and the system administrator C can recognize that the first moving body 10 arrives at the first point P1. Note that the information may be transmitted from the first moving body 10 to the personal portable information terminal owned by the sender A and the system management terminal 40 via the communication network 50 without going through the central management server 30.

The sender A, who recognizes that the first moving body 10 arrives at the first point P1, accommodates the object 90 in the accommodating portion 10a of the first moving body 10 at the first point P1 (step S12).

The first moving body 10 determines whether the object 90 is loaded at the first point P1 (step S13), and if the object 90 is not loaded (loop when step S13: NO), step S13 is repeated.

If the object 90 is loaded (step S13: YES), the first moving body 10 transmits information indicating that the object 90 is loaded to the central management server 30 (step S14).

When the central management server 30 receives the information indicating that the object 90 is loaded on the first moving body 10 (step S15), the central management server 30 transmits the information to a personal portable information terminal owned by the receiver B and the system management terminal 40 (step S16). In this way, the receiver B and the system administrator C can recognize that the object 90 is loaded on the first moving body 10. Note that the information may be transmitted from the first moving body 10 to the personal portable information terminal owned by the receiver B and the system management terminal 40 via the communication network 50 without going through the central management server 30.

Then, the operation proceeds to step S17, and the central management server 30 transmits to the first moving body 10 the movement instruction from the first point P1 to the first transit point TP1 based on the transport plan from the first point P1 to the second point P2 created in step S4. Then, the operation proceeds to step S20.

The first moving body 10 (step S18), which receives the movement instruction transmitted from the central management server 30 in step S17, moves from the first point P1 to the first transit point TP1 according to the moving plan from the first point P1 to the first transit point TP1 based on the transport plan from the first point P1 to the second point P2 created in step S4 (step S19).

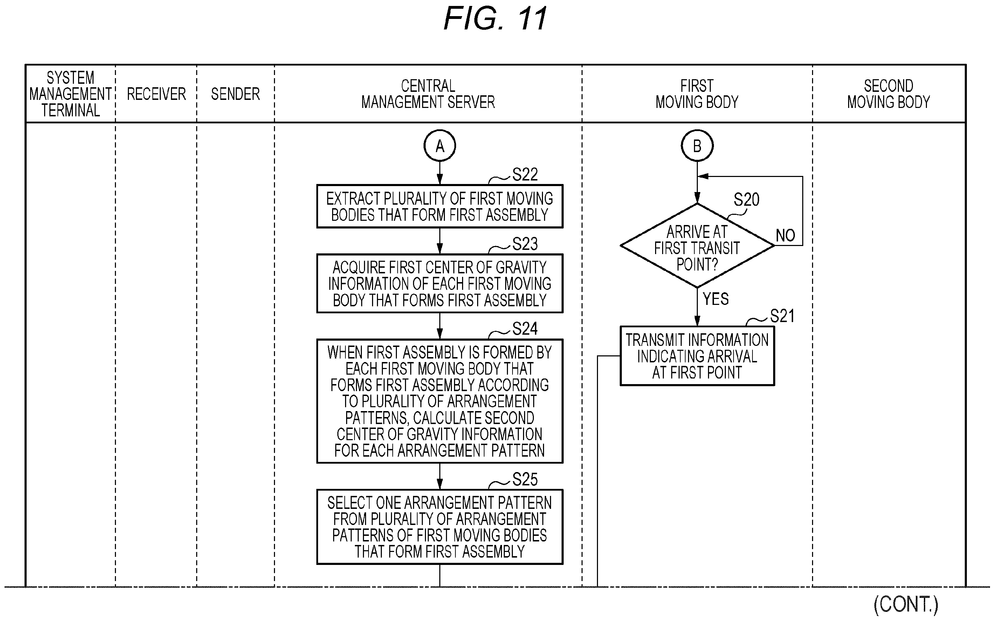

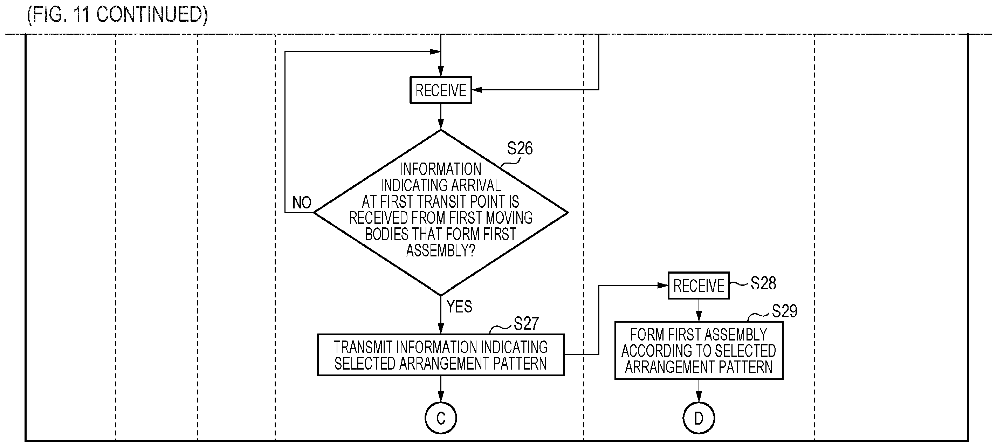

Then, as shown in Fig. 11, while moving to the first transit point TP1, the first moving body 10 determines whether the first moving body 10 arrives at the first transit point TP1 (step S20), and if the first moving body 10 does not arrive at the first transit point TP1 (loop when step S20: NO), step S20 is repeated.

If the first moving body 10 arrives at the first transit point TP1 (step S20: YES), the first moving body 10 transmits information indicating that the first moving body 10 arrives at the first transit point TP1 to the central management server 30 (step S21).

On the other hand, the extraction unit 34 of the central management server 30 extracts the plurality of first moving bodies 10 that constitute the first assembly 60 based on various kinds of information such as the position information and movement state transmitted from each of the plurality of first moving bodies 10 accumulated at the first transit point TP1 and the energy storage state of the mounted energy storage device 11, transport destination information of the object 90 loaded on each of the plurality of first moving bodies 10 accumulated at the first transit point TP1, and a transport plan created for each of the plurality of first moving bodies 10 accumulated at the first transit point TP1 (step S22). The extraction unit 34 extracts, from the plurality of first moving bodies 10 accumulated at the first transit point TP1, the plurality of first moving bodies 10 whose transport plan includes a plan of moving from the first transit point TP1 to the second transit point TP2, as the plurality of first moving bodies 10 constituting the first assembly 60.

Subsequently, the operation proceeds to step S23, and the central management server 30 acquires the first center of gravity information acquired by the first center of gravity information acquisition unit 13 of each of the first moving bodies 10 extracted by the extraction unit 34 in step S20, that is, each of the first moving bodies 10 constituting the first assembly 60.

Then, the operation proceeds to step S24, and when the relative positions of the first moving bodies 10 constituting the first assembly 60 are identified with respect to each other according to a plurality of arrangement patterns, so as to form the first assembly 60, the calculation unit 36 of the central management server 30 calculates the second center of gravity information of each arrangement pattern based on the first center of gravity information of each of the first moving bodies 10 constituting the first assembly 60 acquired in step S22, and the information stored in the connection number database 35. In this way, the second center of gravity information, which is the center of gravity related information of the first assembly 60, is calculated based on the first center of gravity information, which is the center of gravity related information of the first moving bodies 10, so that it is possible to optimally dispose the second moving body 20 according to the center of gravity related information of the first assembly 60, and to transport the plurality of first moving bodies 10 as the first assembly 60 by the second moving body 20. Accordingly, a larger number of the first moving bodies 10 can be transported with a smaller number of the second moving body 20, and the stability of the second moving body 20 when transporting the plurality of first moving bodies 10 is improved.

Then, the operation proceeds to step S25, and the selection unit 37 of the central management server 30 selects one arrangement pattern based on the reference center of gravity position, which is the center of gravity position of the entire first assembly 60 when the plurality of first moving bodies 10 constituting the first assembly 60 all have the same weight and the same center of gravity, and the second center of gravity information of each of the plurality of arrangement patterns. In the present embodiment, in step S25, the selection unit 37 selects the arrangement pattern in which the center of gravity position information of the second center of gravity information is closest to the reference center of gravity position.

Then, the central management server 30 determines whether the central management server 30 receives information indicating that the first moving bodies 10 arrive at the first transit point TP1 from each of the first moving bodies 10 constituting the first assembly 60 (step S26), and maintains a standby state until receiving the information indicating arrival at the first transit point TP1 from each of the first moving bodies 10 constituting the first assembly 60 (loop when step S26: NO).

Upon receiving the information indicating the arrival at the first transit point TP1 from each of the first moving bodies 10 constituting the first assembly 60 (step S26: YES), the operation proceeds to step S27, and the central management server 30 transmits information indicating the arrangement pattern selected in step S25, or information indicating a position of each of the plurality of first moving bodies 10 in the arrangement pattern selected in step S25, from the communication unit 31 to each of the first moving bodies 10 constituting the first assembly 60. The central management server 30 then proceeds to step S31.

Upon receiving the information indicating the arrangement pattern or the information indicating the positions of the first moving bodies 10 in the arrangement pattern transmitted from the central management server 30 in step S27 (step S28), each of the first moving bodies 10 constituting the first assembly 60 uses the control unit 14 to control the drive unit 12, the first engaging member 16a, and the second engaging member 17a based on the information indicating the arrangement pattern or the information indicating the positions of the first moving bodies 10 in the arrangement pattern received from the central management server 30, so as to form the first assembly 60 arranged in the arrangement pattern selected by the selection unit 37 (step S29).

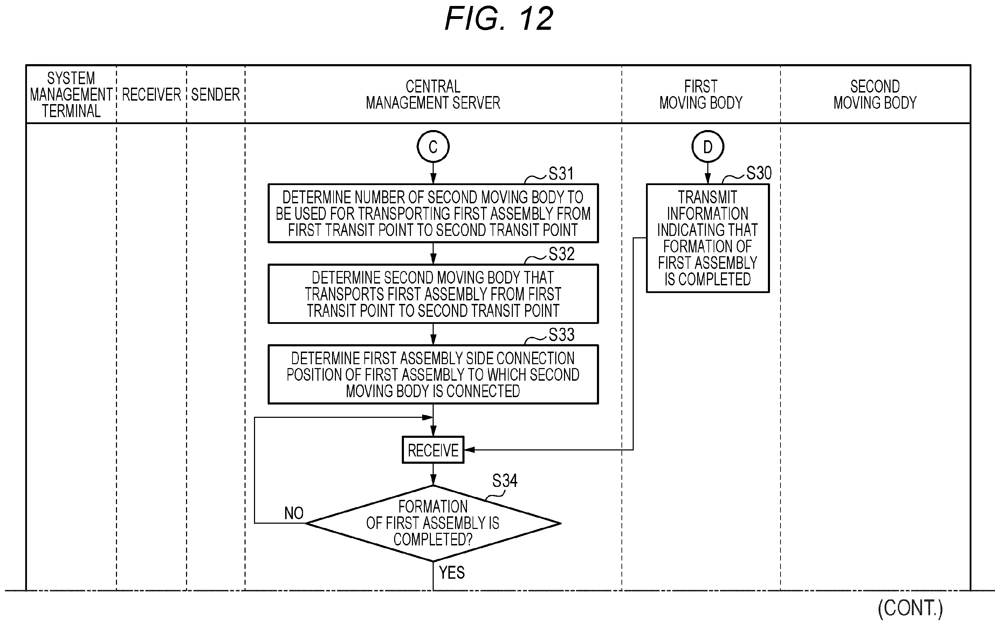

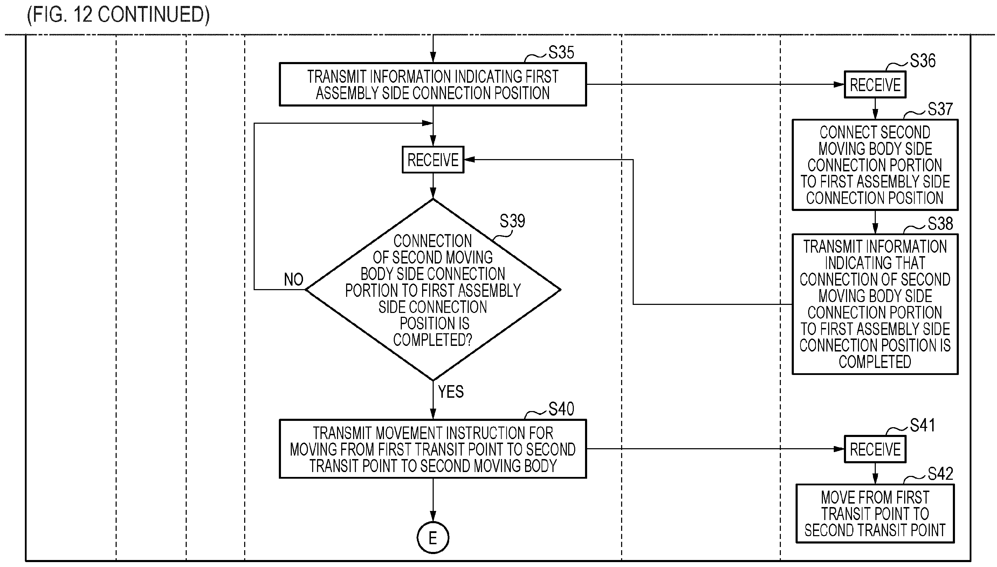

Then, as shown in Fig. 12, when formation of the first assembly 60 is completed, each of the first moving bodies 10 constituting the first assembly 60 transmits information indicating that the formation of the first assembly 60 is completed to the central management server 30 (step S30).

On the other hand, the central management server 30 proceeds to step S31, and the first determination unit 38a of the determination unit 38 determines the number of second moving body 20 to be used when transporting the first assembly 60 from the first transit point TP1 to the second transit point TP2 based on the weight information indicating the weight of the first assembly 60 included in the second center of gravity information calculated by the calculation unit 36.

Then, the operation proceeds to step S32, and the second determination unit 38b of the determination unit 38 determines, among a plurality of second moving bodies, the second moving body 20 that transports the first assembly 60 from the first transit point TP1 to the second transit point TP2, based on the information stored in the environmental information database 32, the number of second moving body 20 to be used determined in step S31, and the information transmitted from each second moving body 20 to the central management server 30.

Then, the operation proceeds to step S33, and the third determination unit 38c of the determination unit 38 determines the first assembly side connection position 61 of the first assembly 60 to which the second moving body 20 is connected, based on the second center of gravity information of the arrangement pattern selected in step S25 from the second center of gravity information of each arrangement pattern calculated in step S24, and the number of second moving body 20 to be used determined in step S32. The third determination unit 38c determines the first assembly side connection position 61 by the method described above according to the case where the first determination unit 38a determines that the number of second moving body 20 to be used is one, or the case where the number of second moving body 20 to be used is plural.

Next, the operation proceeds to step S34, and the central management server 30 determines whether the central management server 30 receives the information transmitted in step S30 indicating that the formation of the first assembly 60 is completed, and if the central management server 30 does not receive the information indicating that the formation of the first assembly 60 is completed, step S34 is repeated and the central management server 30 is in a standby state until receiving the information indicating that the formation of the first assembly 60 is completed (loop when step S34: NO).

If the central management server 30 receives the information transmitted in step S30 indicating that the formation of the first assembly 60 is completed (step S34: YES), the operation proceeds to step S35, and the central management server 30 transmits information indicating the first assembly side connection position 61 determined in step S33 to the second moving body 20 determined in step S32 from the communication unit 31. Then, the central management server 30 then proceeds to step S39.

If the second moving body 20 determined in step S32 receives the information indicating the first assembly side connection position 61 transmitted in step S35 (step S36), the operation proceeds to step S37, and the second moving body 20 determined in step S32 controls the drive device 22 and the second moving body side connection portion 25 by the control unit 23, and connects the second moving body side connection portion 25 to the first assembly side connection position 61 received from the central management server 30, based on the information indicating the first assembly side connection position 61 received from the central management server 30.

Then, when connection of the second moving body side connection portion 25 to the first assembly side connection position 61 received from the central management server 30 is completed, each second moving body 20 determined in step S32 transmits information indicating that the connection of the second moving body side connection portion 25 to the first assembly side connection position 61 is completed to the central management server 30 (step S38).

On the other hand, the central management server 30 proceeds to step S39, and determines whether the central management server 30 receives the information transmitted in step S38 indicating that the connection of the second moving body side connection portion 25 to the first assembly side connection position 61 is completed from all the second moving bodies 20 determined in step S32, and if the central management server 30 does not receive the information indicating that the connection of the second moving body side connection portion 25 to the first assembly side connection position 61 is completed from all the second moving bodies 20 determined in step S32, the central management server 30 repeats step S39, and is in a standby state until receiving the information indicating that the connection of the second moving body side connection portion 25 to the first assembly side connection position 61 is completed from all the second moving bodies 20 determined in step S32 (loop when step S39: NO).

If the central management server 30 receives the information indicating that the connection of the second moving body side connection portion 25 to the first assembly side connection position 61 is completed from all the second moving bodies 20 determined in step S32 (step S39: YES), the operation proceeds to step S40, and the central management server 30 transmits a movement instruction from the first transit point TP1 to the second transit point TP2 based on the transport plan from the first point P1 to the second point P2 created in step S4 to the second moving body 20 determined in step S23. The central management server 30 then proceeds to step S43.

When the second moving body 20 determined in step S32 receives the movement instruction from the first transit point TP1 to the second transit point TP2 transmitted in step S40 (step S41), the second moving body 20 proceeds to step S42, and controls the drive device 22 by the control unit 23 to move from the first transit point TP1 to the second transit point TP2 based on the information indicating the first assembly side connection position 61 received from the central management server 30. In this way, the second moving body 20 determined in step S32 transports the plurality of first moving bodies 10, whose relative positions with respect to each other are identified, as the first assembly 60 from the first transit point TP1 to the second transit point TP2.

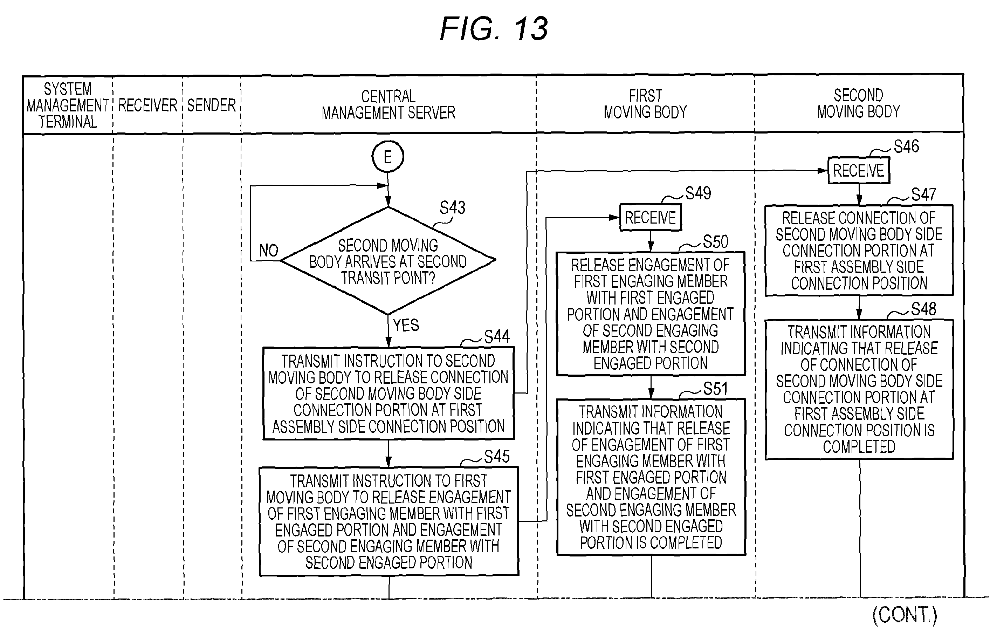

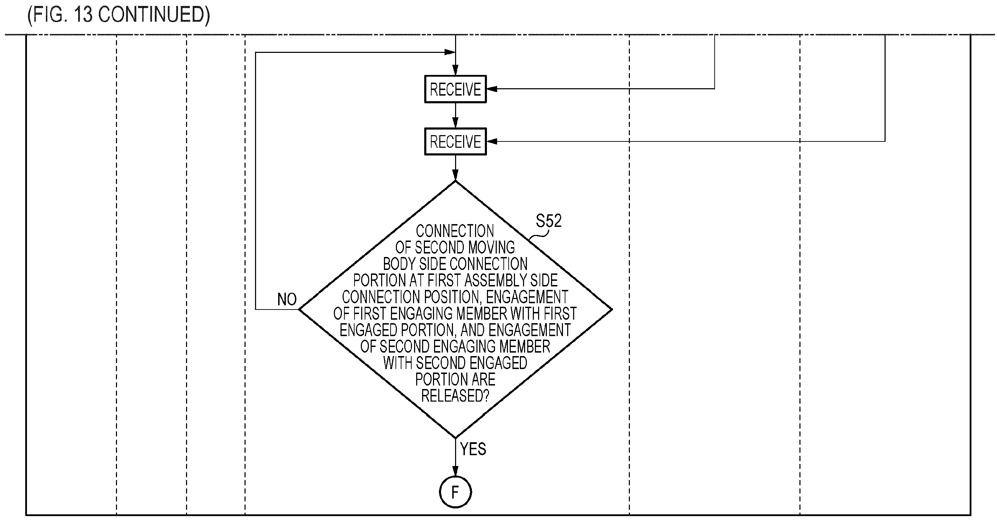

On the other hand, as shown in Fig. 13, the central management server 30 proceeds to step S43, and determines whether the second moving body 20 that transports the plurality of first moving bodies 10, whose relative positions with respect to each other are identified, as the first assembly 60 from the first transit point TP1 to the second transit point TP2 arrives at the second transit point TP2. The central management server 30 determines whether the second moving body 20 arrives at the second transit point TP2 based on the position information of the second moving body 20, which is transmitted from the second moving body 20 that transports the first assembly 60 from the first transit point TP1 to the second transit point TP2. Further, when the second moving body 20 that transports the first assembly 60 from the first transit point TP1 to the second transit point TP2 arrives at the second transit point TP2, the second moving body 20 transmits information indicating that the second moving body 20 arrives at the second transit point TP2 to the central management server 30, and the central management server 30 may determine whether the second moving body 20 arrives at the second transit point TP2 depending on whether the central management server 30 receives the information indicating the arrival at the second transit point TP2 transmitted from the second moving body 20. When the central management server 30 determines that the second moving body 20 that transports the plurality of first moving bodies 10, whose relative positions with respect to each other are identified, as the first assembly 60 from the first transit point TP1 to the second transit point TP2 does not arrive at the second transit point TP2, the central management server 30 repeats step S31, and is in a standby state until determining that the second moving body 20 that transports the plurality of first moving bodies 10, whose relative positions with respect to each other are identified, as the first assembly 60 from the first transit point TP1 to the second transit point TP2 does not arrive at the second transit point TP2 (loop when step S43: NO).

If the central management server 30 determines that the second moving body 20 that transports the plurality of first moving bodies 10, whose relative positions with respect to each other are identified, as the first assembly 60 from the first transit point TP1 to the second transit point TP2 arrives at the second transit point TP2 (step S43: YES), the central management server 30 proceeds to step S44, and transmits an instruction to release the connection of the second moving body side connection portion 25 to the first assembly side connection position 61 to the second moving body 20 that arrives at the second transit point TP2.

Subsequently, the operation proceeds to step S45, and the central management server 30 transmits an instruction to release the engagement of the first engaging member 16a with the first engaged portion 16b of different first moving bodies 10, and to release the engagement of the second engaging member 17a with the second engaged portion 17b of different first moving bodies 10, to each of the first moving bodies 10 constituting the first assembly 60 that arrive at the second transit point TP2. The central management server 30 then proceeds to step S52.

When the second moving body 20 receives the instruction to release the connection of the second moving body side connection portion 25 to the first assembly side connection position 61 (step S46), the control unit 23 controls the second moving body side connection portion 25 to release the connection of the second moving body side connection portion 25 to the first assembly side connection position 61 (step S47). Then, when the release of the connection of the second moving body side connection portion 25 to the first assembly side connection position 61 is completed in step S47, the second moving body 20 transmits information indicating that the release of the connection of the second moving body side connection portion 25 to the first assembly side connection position 61 is completed to the central management server 30 (step S48).

When the first moving bodies 10 receive the instruction to release the engagement of the first engaging member 16a with the first engaged portion 16b of different first moving bodies 10, and to release the engagement of the second engaging member 17a with the second engaged portion 17b of different first moving bodies 10 (step S49), the engagement of the first engaging member 16a with the first engaged portion 16b of different first moving bodies 10 and the engagement of the second engaging member 17a with the second engaged portion 17b of different first moving bodies 10 are released (step S50). When the release of the engagement of the first engaging member 16a with the first engaged portion 16b of different first moving bodies 10 and the release of the engagement of the second engaging member 17a with the second engaged portion 17b of different first moving bodies 10 are completed, the first moving bodies 10 transmit information indicating that the release of the engagement of the first engaging member 16a with the first engaged portion 16b of different first moving bodies 10 and the release of the engagement of the second engaging member 17a with the second engaged portion 17b of different first moving bodies 10 are completed to the central management server 30 (step S51).

The central management server 30 determines whether the central management server 30 receives the information transmitted from the second moving body 20 in step S48 indicating that the release of the connection of the second moving body side connection portion 25 to the first assembly side connection position 61 is completed, and the information transmitted from the first moving body 10 in step S51 indicating that the release of the engagement of the first engaging member 16a with the first engaged portion 16b of different first moving bodies 10 and the release of the engagement of the second engaging member 17a with the second engaged portion 17b of different first moving bodies 10 are completed (step S52). If the central management server 30 does not receive both the information transmitted from the second moving body 20 in step S48 indicating that the release of the connection of the second moving body side connection portion 25 to the first assembly side connection position 61 is completed, and the information transmitted from the first moving bodies 10 in step S51 indicating that the release of the engagement of the first engaging member 16a with the first engaged portion 16b of different first moving bodies 10 and the release of the engagement of the second engaging member 17a with the second engaged portion 17b of different first moving bodies 10 are completed, the central management server 30 repeats step S52, and is in a standby state until receiving both the information transmitted from the second moving body 20 in step S52 indicating that the release of the connection of the second moving body side connection portion 25 to the first assembly side connection position 61 is completed, and the information transmitted from the first moving bodies 10 in step S37 indicating that the release of the engagement of the first engaging member 16a with the first engaged portion 16b of different first moving bodies 10 and the release of the engagement of the second engaging member 17a with the second engaged portion 17b of different first moving bodies 10 are completed (loop when step S52: NO).

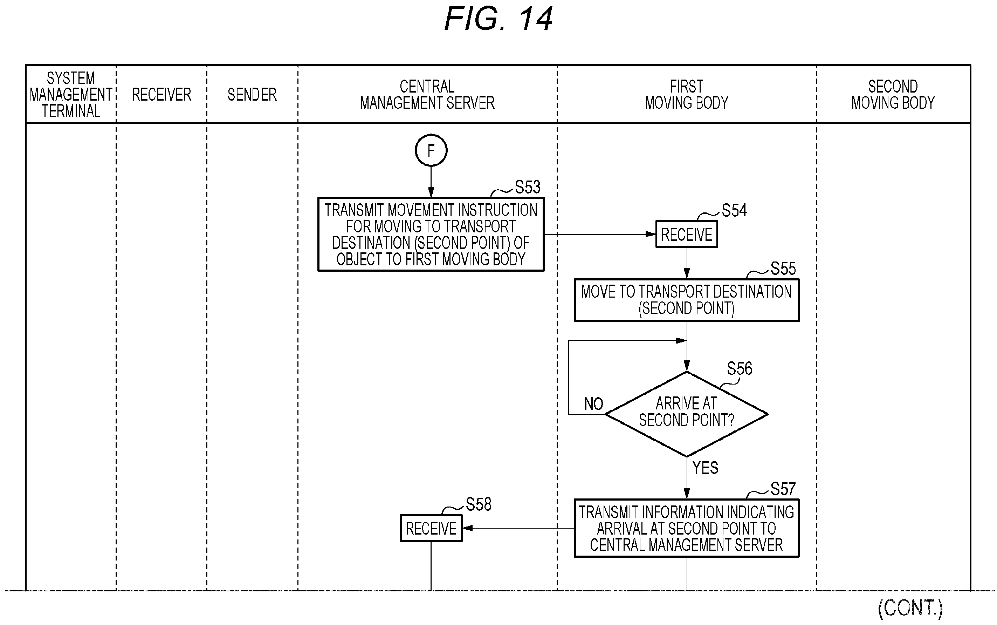

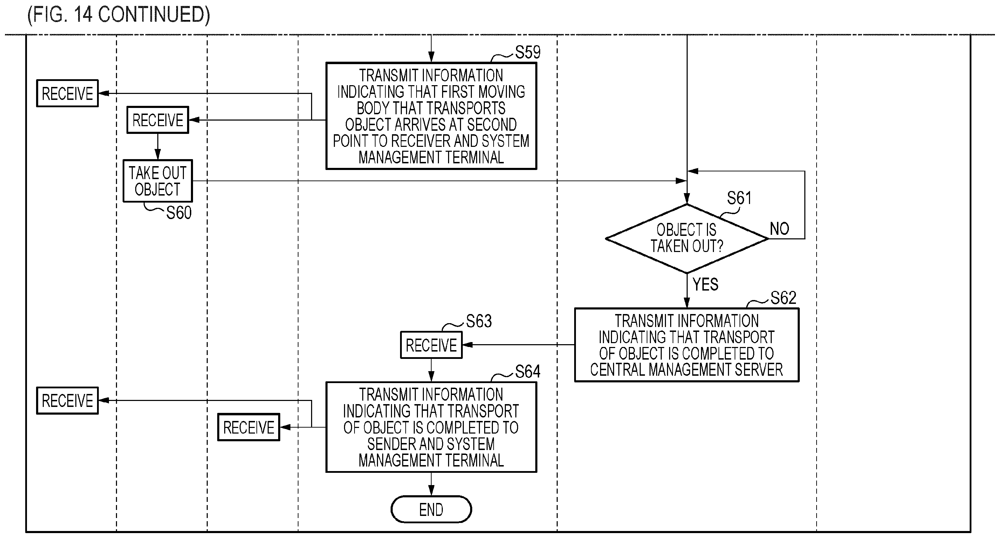

As shown in Fig. 14, if the central management server 30 receives both the information transmitted from the second moving body 20 in step S48 indicating that the release of the connection of the second moving body side connection portion 25 to the first assembly side connection position 61 is completed, and the information transmitted from the first moving bodies 10 in step S51 indicating that the release of the engagement of the first engaging member 16a with the first engaged portion 16b of different first moving bodies 10 and the release of the engagement of the second engaging member 17a with the second engaged portion 17b of different first moving bodies 10 are completed (step S52: YES), the central management server 30 proceeds to step S53, and transmits a movement instruction to move the object 90 to the transport destination based on the transport plan from the transport origin to the transport destination created in step S4 to each first moving body 10 that completes the release of the engagement of the first engaging member 16a with the first engaged portion 16b of different first moving bodies 10 and the release of the engagement of the second engaging member 17a with the second engaged portion 17b of different first moving bodies 10. Therefore, the central management server 30 transmits, to the first moving bodies 10 selected in step S3 for transporting the object 90 from the first point P1 to the second point P2, a movement instruction to the second point P2, based on the transport plan from the first point P1 to the second point P2 created in step S4.

When the first moving body 10 selected in step S3 for transporting the object 90 from the first point P1 to the second point P2 receives the movement instruction to the second point P2 (step S54), the first moving body 10 controls the drive unit 12 by the control unit 14 to move to the second point P2, based on the transport plan from the first point P1 to the second point P2 created in step S4 (step S55).

While moving to the second point P2, the first moving body 10 selected in step S3 for transporting the object 90 from the first point P1 to the second point P2 determines whether the first moving body 10 arrives at the second point P2 (step S56), and if the first moving body 10 does not arrive at the second point P2, step S56 is repeated (loop when step S56: NO).

If the first moving body 10 selected in step S3 for transporting the object 90 from the first point P1 to the second point P2 arrives at the second point P2 (step S56: YES), the first moving body 10 transmits information indicating that the first moving body 10 arrives at the second point P2 to the central management server 30 (step S57), and the operation proceeds to step S61.

When the central management server 30 receives the information indicating that the first moving body 10 selected in step S3 for transporting the object 90 from the first point P1 to the second point P2 arrives at the second point P2 (step S58), the central management server 30 transmits the information to the personal portable information terminal owned by the receiver B and the system management terminal 40 (step S59). Accordingly, the receiver B and the system administrator C can recognize that the first moving body 10 arrives at the second point P2. Note that the information may be transmitted from the first moving body 10 to the personal portable information terminal owned by the receiver B and the system management terminal 40 via the communication network 50 without going through the central management server 30.

The receiver B, who recognizes that the first moving body 10 selected in step S3 for transporting the object 90 from the first point P1 to the second point P2 arrives at the second point P2, takes out the object 90 from the accommodating portion 10a of the first moving body 10 at the second point P2 (step S60). In this way, the transport of the object 90 from the first point P1 to the second point P2 is completed.

The first moving body 10 selected in step S3 for transporting the object 90 from the first point P1 to the second point P2 determines whether the object 90 is taken out from the accommodating portion 10a at the second point P2 (step S61). The first moving body 10 repeats step S61 until the object 90 is taken out from the accommodating portion 10a at the second point P2 (loop when step S61: NO), and if it is detected that the object 90 is taken out from the accommodating portion 10a at the second point P2 (step S61: YES), the first moving body 10 transmits information indicating that the transport of the object 90 from the first point P1 to the second point P2 is completed to the central management server 30 (step S62).

Then, when the central management server 30 receives the information indicating that the transport of the object 90 from the first point P1 to the second point P2 is completed (step S63), the central management server 30 transmits the information to the personal portable information terminal owned by the sender A and the system management terminal 40 (step S64). Accordingly, the sender A and the system administrator C can recognize that the transport of the object 90 from the first point P1 to the second point P2 is completed. Note that the information may be transmitted from the first moving body 10 to the personal portable information terminal owned by the sender A and the system management terminal 40 via the communication network 50 without going through the central management server 30.

When step S64 is completed, the series of processing for transporting the object 90 from the first point P1 to the second point P2 is completed.

### [Second Embodiment]

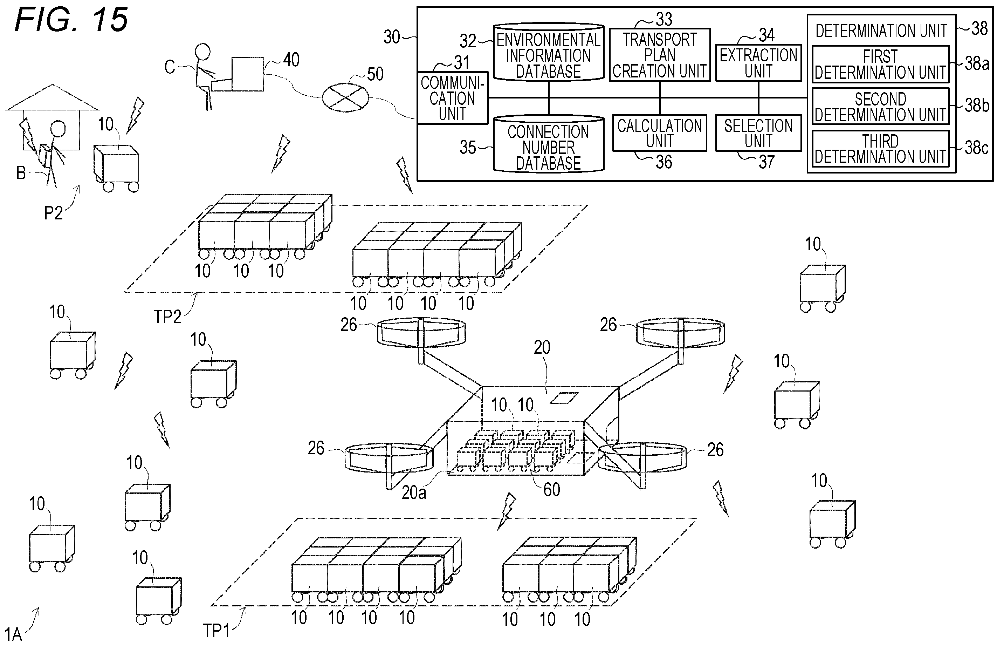

Next, a transport system 1A according to a second embodiment of the present invention will be described with reference to Figs. 15 to 20. Note that in the following description, the same constituent elements as those of the transport system 1 according to the first embodiment are denoted by the same reference numerals, and the description thereof will be omitted or simplified.

The transport system 1 of the first embodiment transports the object 90 such as luggage accommodated in the accommodating portion 10a of the first moving body 10 from the first point P1 to the second point P2, whereas, as shown in Fig. 15, the transport system 1A of the second embodiment transports the energy stored in the energy storage device 11 built in a main body portion 10f of the first moving body 10, for example, the electric power stored in the secondary battery 11a of the energy storage device 11, to the second point P2. That is, the object that the transport system 1 of the first embodiment transports to the second point P2 is the object 90 such as luggage, and the object that the transport system 1A of the second embodiment transports to the second point P2 is energy such as electric power. Note that the object 90 in the transport system 1 of the first embodiment may be an energy source.

In the transport system 1 of the first embodiment, the first moving body 10 includes the first engaging member 16a and the first engaged portion 16b, the second engaging member 17a and the second engaged portion 17b, and the first moving body side connection portion 18, and the second moving body 20 includes the second moving body side connection portion 25 which is connectable to the first moving body side connection portion 18, whereas in the transport system 1A of the second embodiment, the second moving body 20 includes an accommodating portion 20a that can accommodate the plurality of first moving bodies 10, whose relative positions with respect to each other are identified, as the first assembly 60.

Hereinafter, differences between the transport system 1 of the first embodiment and the transport system 1A of the second embodiment will be described in detail.

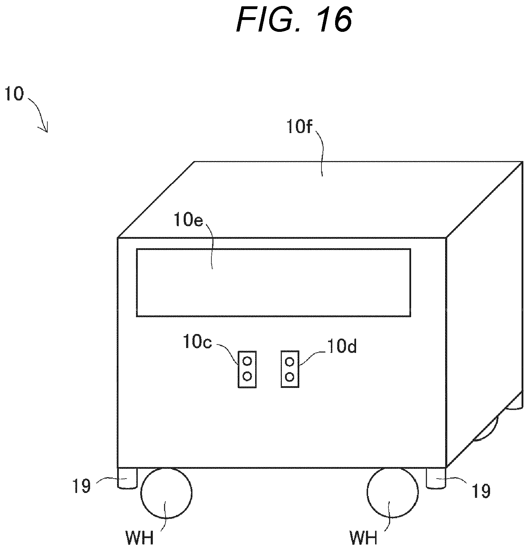

As shown in Fig. 16, the first moving body 10 of the present embodiment includes the main body portion 10f. The electric power input and output connection portion 10c, the fuel input and output connection portion 10d, and the display unit 10e are provided in the main body portion 10f. The first moving body 10 can operate electronic devices and the like using the energy stored in the energy storage device 11 of the first moving body 10, in the present embodiment, the electric power stored in the secondary battery 11a by connecting the electronic devices and the like to the electric power input and output connection portion 10c such as a plug in the related art. Then, the energy stored in the energy storage device 11 of the first moving body 10 is used in the vicinity of the second point P2. Therefore, the first moving body 10 of the present embodiment may not include the accommodating portion 10a and the openable and closeable door 10b.

In the vicinity of the second point P2, the electric power stored in the secondary battery 11a of the first moving body 10 is expected to be used in various ways. That is, the secondary battery 11a of the first moving body 10 is required to have various output characteristics. In response to such a request, in Li-ion batteries in the related art, it is difficult to increase a C rate due to a limit in a diffusion rate of solvated ions. On the other hand, all-solid-state batteries are less susceptible to the limit of diffusion of the solvated ions and can therefore support an even higher C rate. Since all-solid-state batteries do not have an electrolyte, growth of the SEI layer, which is a main cause of Li-ion battery deterioration and is considered to be derived from the electrolyte, is prevented, so that there is less deterioration.

The secondary battery 11a of the first moving body 10 of the present embodiment may be used repeatedly or stored at a high potential for a long time. Therefore, using an all-solid-state battery as the secondary battery 11a of the first moving body 10 reduces a frequency of replacement due to deterioration, which is advantageous in terms of cost.

Therefore, it is preferable that the secondary battery 11a of the first moving body 10 in the transport system 1A of the present embodiment is an all-solid-state battery.

The first moving body 10 includes an engaging member 19 that can fix the first moving body 10 to the accommodating portion 20a of the second moving body 20. In the present embodiment, the engaging member 19 is a protrusion which is fixed to the main body portion 10f and protrudes downward from the main body portion 10f. Note that the main body portion 10f can be displaced by an electric motor (not shown) in an upper-lower direction, and is controlled by the control unit 14.

The second moving body 20 of the present embodiment includes the accommodating portion 20a that can accommodate the plurality of first moving bodies 10, and a plurality of propeller devices 26 connected to the accommodating portion 20a. In the present embodiment, the second moving body 20 includes four propeller devices 26, and the four propeller devices 26 are arranged such that a center thereof substantially coincides with a center of the accommodating portion 20a when viewed in the upper-lower direction.

The accommodating portion 20a is provided with an openable and closeable door 20d. The openable and closeable door 20d is controlled to be opened and closed by at least one of the central management server 30 and the control unit 23 of the second moving body. In the present embodiment, the accommodating portion 20a has a substantially rectangular parallelepiped shape, and the openable and closeable door 20d is provided on one of six surfaces of the substantially rectangular parallelepiped shape. When the openable and closeable door 20d is in an open state, the first moving body 10 can move between outside and inside of the accommodating portion 20a.

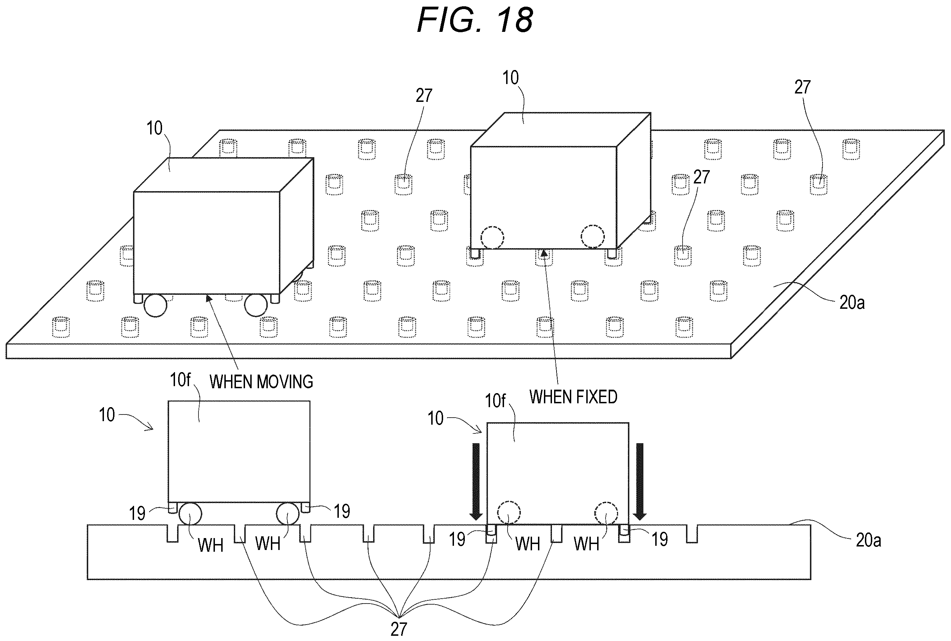

As shown in Fig. 18, inside the accommodating portion 20a of the second moving body 20, a large number of engaged portions 27 that can be engaged with the engaging member 19 of the first moving body 10 are provided. In the present embodiment, the engaged portions 27 are a large number of recesses provided on a floor surface of the accommodating portion 20a.

The engaging member 19 of the first moving body 10 is positioned above lower ends of the wheels WH when the first moving body 10 moves autonomously, so that the autonomous movement of the first moving body 10 is not obstructed. When the first moving body 10 is stopped inside the accommodating portion 20a of the second moving body 20, by lowering the main body portion 10f toward the floor surface of the accommodating portion 20a, and the engaging member 19 engaging with the engaged portion 27 of the second moving body 20, the first moving body 10 is fixed to the accommodating portion 20a of the second moving body 20.

The central management server 30 acquires an energy demand in the vicinity of the second point P2. The energy demand in the vicinity of the second point P2 may be transmitted by the receiver B to the central management server 30 from the personal portable information terminal owned by the receiver B. Information regarding energy demands at a plurality of points may be acquired from energy-related companies, energy-related organizations, and the like via the communication network 50, and the environmental information database 32 may appropriately update and store the information regarding the energy demands at the plurality of points including the vicinity of the second point P2.

Then, the transport plan creation unit 33 selects the first moving body 10 to be moved to the second point P2, and creates a moving plan for the selected first moving body 10 from a current location to the second point P2, based on the position information of the second point P2, which is a transport destination, various kinds of information stored in the environmental information database 32, various kinds of information such as the position information and movement state transmitted from each first moving body 10, the energy storage state of the mounted energy storage device 11, and a deterioration state of the mounted energy storage device 11, and the energy demand in the vicinity of the second point P2. The created transport plan also includes plans regarding stopovers such as the first transit point TP1 and the second transit point TP2. Similarly, for other first moving bodies 10, the transport plan creation unit 33 creates a transport plan from the current location of each first moving body 10 to the transport destination, based on the position information of the transport destination, various kinds of information stored in the environmental information database 32, various kinds of information such as the position information and movement state transmitted from each first moving body 10, the energy storage state of the mounted energy storage device 11, and the deterioration state of the mounted energy storage device 11, and the energy demand in the vicinity of the transport destination.

Each of the first moving bodies 10 receives a movement instruction based on the transport plan created by the transport plan creation unit 33 from the central management server 30, and autonomously travels according to the transport plan created by the transport plan creation unit 33.

The extraction unit 34 extracts the plurality of first moving bodies 10 that constitute the first assembly 60 based on various kinds of information such as the position information and movement state transmitted from each of the plurality of first moving bodies 10 accumulated at the first transit point TP1 and the energy storage state of the mounted energy storage device 11, transport destination information of the object 90 loaded on each of the plurality of first moving bodies 10 accumulated at the first transit point TP1, and a transport plan created for each of the plurality of first moving bodies 10 accumulated at the first transit point TP1.

The second determination unit 38b determines, among a plurality of second moving bodies, the second moving body 20 that transports the first assembly 60 from the first transit point TP1 to the second transit point TP2, based on the information stored in the environmental information database 32, and various kinds of information transmitted from each second moving body 20 to the central management server 30 such as the position information and movement state of each second moving body 20, and the energy storage state of the energy storage device 21 mounted on the second moving body 20.

Then, the central management server 30 transmits a movement instruction from the current location to the first transit point TP1 to the second moving body 20 determined by the second determination unit 38b.

When the second moving body 20 determined by the second determination unit 38b receives the movement instruction from the current location to the first transit point TP1 from the central management server 30, the second moving body 20 moves to the first transit point TP1 according to the received movement instruction. Then, when the second moving body 20 arrives at the first transit point TP1, the second moving body 20 transmits information indicating that the second moving body 20 arrives at the first transit point TP1 to the central management server 30.

Upon receiving the information indicating that the second moving body 20 determined by the second determination unit 38b arrives at the first transit point TP1, similarly to the first embodiment, the central management server 30 transmits information indicating the arrangement pattern selected by the selection unit 37, or information indicating a position of each of the plurality of first moving bodies 10 in the arrangement pattern selected by the selection unit 37, to each of the first moving bodies 10 extracted by the extraction unit 34, that is, each of the first moving bodies 10 constituting the first assembly 60. Then, the openable and closeable door 20d of the second moving body 20 is controlled to be in an open state.

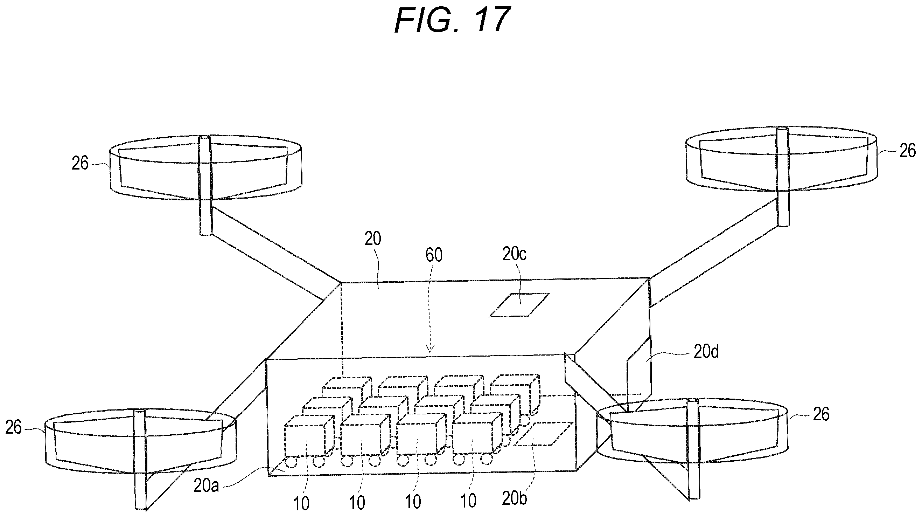

Upon receiving from the central management server 30 the information indicating the arrangement pattern selected by the selection unit 37, or information indicating the position of each first moving body 10 in the arrangement pattern selected by the selection unit 37, each of the first moving bodies 10 extracted by the extraction unit 34, that is, each of the first moving bodies 10 constituting the first assembly 60, uses the control unit 14 to control the drive unit 12 and main body portion 10f based on the information indicating the arrangement pattern or the information indicating the position of each first moving body 10 in the arrangement pattern received from the central management server 30. Then, each of the first moving bodies 10 extracted by the extraction unit 34, that is, each of the first moving bodies 10 constituting the first assembly 60, autonomously travels inside the accommodating portion 20a of the second moving body 20, and lowers the main body portion 10f to a predetermined position of the accommodating portion 20a of the second moving body 20 to engage the engaging member 19 with the engaged portion 27 of the second moving body 20. As a result, each of the first moving bodies 10 extracted by the extraction unit 34 is fixed to the accommodating portion 20a of the second moving body 20 by the engaging member 19, and forms the first assembly 60 arranged in the arrangement pattern selected by the selection unit 37 at the accommodating portion 20a of the second moving body 20. In this way, the second moving body 20 accommodates the plurality of first moving bodies 10, whose relative positions with respect to each other are identified, as the first assembly 60 in the accommodating portion 20a. Therefore, in the first embodiment, since the first assembly 60 is formed by engaging the plurality of first moving bodies 10 with each other, in the first assembly 60, the plurality of first moving bodies 10 are adjacent to each other. On the other hand, in the present embodiment, the first assembly 60 is formed in which the relative positions of the plurality of first moving bodies 10 with respect to each other are identified by engaging the first moving bodies 10 with the accommodating portion 20a of the second moving body 20. Therefore, in the present embodiment, in the first assembly 60, the plurality of first moving bodies 10 are not directly engaged with each other, and the relative positions of the plurality of first moving bodies 10 with respect to each other are fixed via the accommodating portion 20a. Therefore, in the present embodiment, there is no need to engage the plurality of first moving bodies 10 with each other, and it is possible to form the first assembly 60 with the plurality of first moving bodies 10 spaced apart from each other. Note that in Figs. 15 and 17, the first assembly 60 is formed by arranging twelve first moving bodies 10 in 3 columns × 4 columns, but the first assembly 60 may be formed by the plurality of first moving bodies 10 arranged irregularly. Then, when the formation of the first assembly 60 is completed, the first moving bodies 10 extracted by the extraction unit 34 transmit information indicating that the formation of the first assembly 60 is completed to the central management server 30. Then, the openable and closeable door 20d of the second moving body 20 is controlled to be in a closed state.

Upon receiving the information indicating that the formation of the first assembly 60 is completed, the central management server 30 transmits a movement instruction from the first transit point TP1 to the second transit point TP2 to the second moving body 20 determined by the second determination unit 38b.

Upon receiving the movement instruction from the first transit point TP1 to the second transit point TP2 from the central management server 30, the second moving body 20 determined by the second determination unit 38b moves to the second transit point TP2 according to the received movement instruction. In this way, the second moving body 20 accommodates the plurality of first moving bodies 10, whose relative positions with respect to each other are identified, as the first assembly 60 in the accommodating portion 20a, and transports the plurality of first moving bodies 10, whose relative positions with respect to each other are identified, as the first assembly 60 from the first transit point TP1 to the second transit point TP2. Then, when the second moving body 20 arrives at the second transit point TP2, the second moving body 20 transmits information indicating that the second moving body 20 arrives at the second transit point TP2 to the central management server 30.

Upon receiving the information indicating that the second moving body 20 determined by the second determination unit 38b arrives at the second transit point TP2, the central management server 30 transmits a movement instruction to the transport destination based on the transport plan created by the transport plan creation unit 33 to each first moving body 10 constituting the first assembly 60.

Upon receiving the movement instruction to the transport destination from the central management server 30, each of the first moving bodies 10 constituting the first assembly 60 first raises the main body portion 10f and releases the engagement between the engaging member 19 and the engaged portion 27 of the second moving body 20. Thereafter, each first moving body 10 moves to the transport destination according to the received movement instruction. Therefore, the first moving body 10 whose transport destination is the second point P2 moves to the second point P2.

In this way, the transport system 1A of the present embodiment transports the first moving bodies 10 to the second point P2.

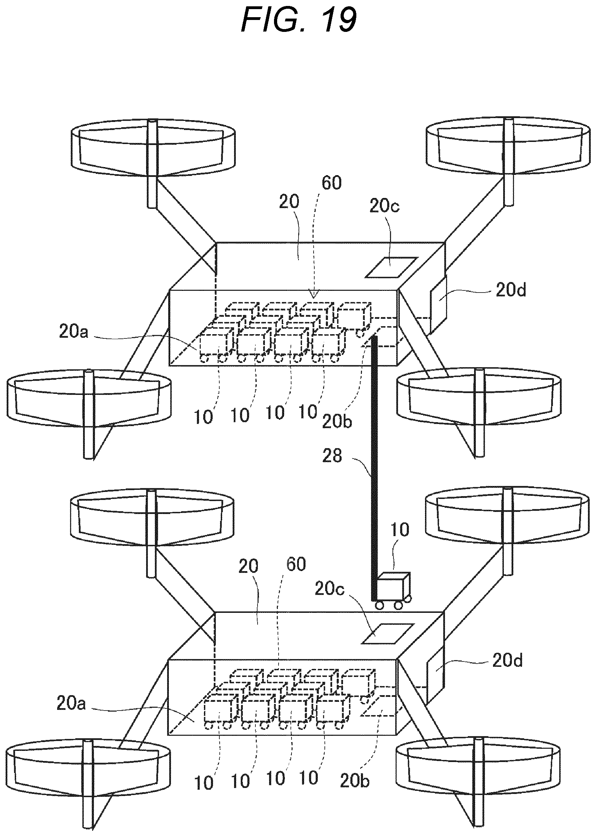

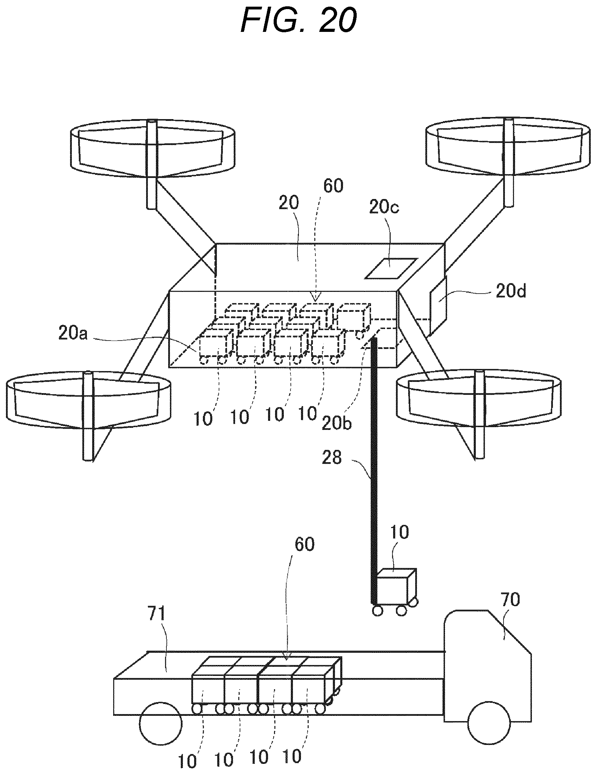

As shown in Figs. 19 and 20, an opening 20b through which the first moving body 10 can be inserted is provided in the floor surface of the accommodating portion 20a of the second moving body 20. Furthermore, the second moving body 20 includes a guide member 28 that can guide the first moving body 10 accommodated in the accommodating portion 20a from the opening 20b to the outside of the accommodating portion 20a. The guide member 28 is, for example, a rod member that can engage with the first moving body 10 and is expandable downward from the opening 20b of the accommodating portion 20a.

During flight from the first transit point TP1 to the second transit point TP2, the second moving body 20 can guide the first moving body 10 from the opening 20b to the outside of the accommodating portion 20a by engaging a part of the first moving bodies 10 constituting the first assembly 60 accommodated in the accommodating portion 20a with the guide member 28 and expanding the guide member 28.

As shown in Fig. 19, an opening 20c through which the first moving body 10 can be inserted may also be provided in an upper portion of the second moving body 20, and in this case, during flight from the first transit point TP1 to the second transit point TP2, the second moving body 20 can guide the first moving body 10 from the opening 20b to the opening 20c of another second moving body 20 and move the first moving body 10 to the accommodating portion 20a of the another second moving body 20, by engaging a part of the first moving bodies 10 constituting the first assembly 60 accommodated in the accommodating portion 20a with the guide member 28 and expanding the guide member 28 downward.

As shown in Fig. 20, the transport system 1A may include a third moving body 70. The third moving body 70 is, for example, a truck vehicle equipped with a loading platform 71. During flight from the first transit point TP1 to the second transit point TP2, the second moving body 20 can guide the first moving body 10 from the opening 20b to the loading platform 71 of the third moving body 70 and move the first moving body 10 to the loading platform 71 of the third moving body 70 by engaging a part of the first moving bodies 10 constituting the first assembly 60 accommodated in the accommodating portion 20a with the guide member 28 and expanding the guide member 28 downward.

As shown in Figs. 19 and 20, when the second moving body 20 moves a part of the first moving bodies 10 constituting the first assembly 60 accommodated in the accommodating portion 20a to the accommodating portion 20a of another second moving body 20 or the loading platform 71 of the third moving body 70 during flight from the first transit point TP1 to the second transit point TP2, the second moving body 20 in transporting the first assembly 60 from the first transit point TP1 to the second transit point TP2 transmits information indicating that the number of first moving bodies 10 constituting the first assembly 60 is changed to the central management server 30.

When the central management server 30 receives the information indicating that the number of first moving bodies 10 constituting the first assembly 60 is changed, the calculation unit 36 calculates the second center of gravity information based on the first center of gravity information of each of the first moving bodies 10 constituting the first assembly 60 after the number of first moving bodies 10 constituting the first assembly 60 is changed, and the information stored in the connection number database 35. In this way, when the number of first moving bodies 10 constituting the first assembly 60 is changed, the calculation unit 36 calculates the second center of gravity information based on the first center of gravity information of each of the plurality of first moving bodies 10 constituting the first assembly 60 after the change in the number.

When the first assembly 60 is formed by identifying the relative positions of the plurality of first moving bodies 10 constituting the first assembly 60 after the change in the number with respect to each other according to a plurality of arrangement patterns, the calculation unit 36 calculates the second center of gravity information for each arrangement pattern.

The selection unit 37 selects one arrangement pattern based on the second center of gravity information in each arrangement pattern of the plurality of first moving bodies 10 calculated by the calculation unit 36. The central management server 30 transmits information indicating the arrangement pattern selected by the selection unit 37, or information indicating the position of each of the plurality of first moving bodies 10 in the arrangement pattern selected by the selection unit 37, to each of the first moving bodies 10 constituting the first assembly 60 after the change in the number.

Then, each of the first moving bodies 10 constituting the first assembly 60 after the change in the number uses the control unit 14 to control the drive unit 12 and the main body portion 10f based on the information indicating the arrangement pattern, or information indicating the position of the first moving body 10 in the arrangement pattern received from the central management server 30, and moves to the arrangement pattern selected by the selection unit 37 in the accommodating portion 20a after raising the main body portion 10f and releasing the engagement between the engaging member 19 and the engaged portion 27 of the second moving body 20, and lowers the main body portion 10f again to a predetermined position after moving to the arrangement pattern selected by the selection unit 37, and allows the engaging member 19 to engage with the engaged portion 27 of the second moving body 20. In this way, each of the first moving bodies 10 constituting the first assembly 60 after the change in the number forms the first assembly 60 arranged in the arrangement pattern selected by the selection unit 37 based on the second center of gravity information calculated by the calculation unit 36 after the change in the number.

As a result, even when the number of first moving bodies 10 constituting the first assembly 60 is changed, it is possible to form the first assembly 60 arranged in an optimal arrangement pattern according to the first moving bodies 10 constituting the first assembly 60 after the change in the number.

Furthermore, as described above, the first moving body 10 transmits to the central management server 30 the energy storage state of the energy storage device 11 mounted on the first moving body 10 such as the state of charge (SOC) of the secondary battery 11a and the remaining amount of fuel stored in the fuel tank 11b, and the second moving body 20 transmits to the central management server 30 the energy storage state of the energy storage device 21 mounted on the second moving body 20 such as the state of charge (SOC) of the secondary battery and the remaining amount of fuel stored in the fuel tank.

Furthermore, when the first moving body 10 constituting the first assembly 60 exchanges electric power in the secondary battery 11a thereof with the other first moving body 10 constituting the first assembly 60 via the electric power input and output connection portion 10c, and/or exchanges electric power with the second moving body 20 between the secondary battery 11a of the first moving body 10 and the secondary battery of the energy storage device 21 of the second moving body 20, the first moving body 10 and/or the second moving body 20 that exchange electric power transmit information indicating that electric power is exchanged to the central management server 30.

Similarly, when the first moving body 10 constituting the first assembly 60 exchanges fuel in the fuel tank 11b thereof with the other first moving body 10 constituting the first assembly 60 via the fuel input and output connection portion 10d, and/or exchanges fuel with the second moving body 20 between the fuel tank 11b of the first moving body 10 and the fuel tank of the energy storage device 21 of the second moving body 20, the first moving body 10 and/or the second moving body 20 that exchange fuel transmit information indicating that fuel is exchanged to the central management server 30.

Then, when the central management server 30 receives information indicating that a state of a load of the first moving body 10 that constitutes the first assembly 60 is changed, the calculation unit 36 calculates the second center of gravity information based on the first center of gravity information of each of the plurality of first moving bodies 10 constituting the first assembly 60 after the state of the load of the first moving body 10 that constitutes the first assembly 60 is changed, and the information stored in the connection number database 35. Note that the load of the first moving body 10 includes at least the object 90 and the fuel stored in the fuel tank 11b. Therefore, the information indicating that a state of a load of the first moving body 10 that constitutes the first assembly 60 is changed includes at least information indicating that a loading state of the object 90 of the first moving body 10 that constitutes the first assembly 60 is changed and information indicating that fuel in the first moving body 10 that constitutes the first assembly 60 is exchanged. Especially, it is preferable that the information indicating that a state of a load of the first moving body 10 that constitutes the first assembly 60 is changed includes information indicating that a weight including the object 90 of the first moving body 10 that constitutes the first assembly 60 is changed, information indicating that a loading position of the object 90 in the first moving body 10 is changed, and information indicating that the center of gravity position of the object 90 in the first moving body 10 is changed due to the above two reasons. In this way, when a state of a load of the first moving body 10 that constitutes the first assembly 60 is changed, the calculation unit 36 calculates the second center of gravity information based on the first center of gravity information of each of the first moving bodies 10 constituting the first assembly 60 after the change.

When the first assembly 60 is formed by identifying the relative positions of the plurality of first moving bodies 10 constituting the first assembly 60 with respect to each other according to a plurality of arrangement patterns after a state of a load of the first moving body 10 that constitutes the first assembly 60 is changed, the calculation unit 36 calculates the second center of gravity information for each arrangement pattern.

The selection unit 37 selects one arrangement pattern based on the second center of gravity information in each arrangement pattern of the plurality of first moving bodies 10 calculated by the calculation unit 36. The central management server 30 transmits information indicating the arrangement pattern selected by the selection unit 37, or information indicating the position of each of the plurality of first moving bodies 10 in the arrangement pattern selected by the selection unit 37, to each of the first moving bodies 10 constituting the first assembly 60.

Then, each of the first moving bodies 10 constituting the first assembly 60 uses the control unit 14 to control the drive unit 12 and the main body portion 10f based on the information indicating the arrangement pattern, or information indicating the position of the first moving body 10 in the arrangement pattern received from the central management server 30, and moves to the arrangement pattern selected by the selection unit 37 in the accommodating portion 20a after raising the main body portion 10f and releasing the engagement between the engaging member 19 and the engaged portion 27 of the second moving body 20, and lowers the main body portion 10f again to a predetermined position after moving to the arrangement pattern selected by the selection unit 37, and allows the engaging member 19 to engage with the engaged portion 27 of the second moving body 20. Therefore, each of the first moving bodies 10 constituting the first assembly 60 after the state of the load of the first moving body 10 that constitutes the first assembly 60 is changed forms the first assembly 60 arranged in the arrangement pattern selected by the selection unit 37, based on the second center of gravity information calculated by the calculation unit 36 after the state of the load of the first moving body 10 that constitutes the first assembly 60 is changed.

As a result, even when the remaining amount of fuel or the loading state of the object 90 in the first moving body 10 that constitutes the first assembly 60 is changed, and then the weight including the object 90 of the first moving body 10 that constitutes the first assembly 60 is changed, it is possible to form the first assembly 60 arranged in an optimal arrangement pattern according to the first moving bodies 10 constituting the first assembly 60 after the change.

### [Third Embodiment]

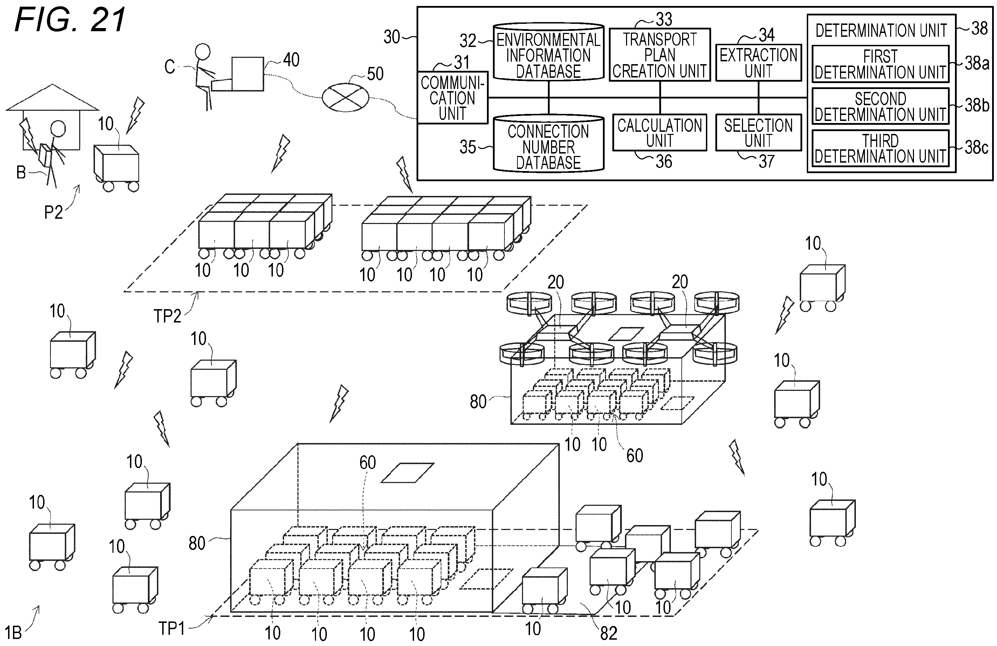

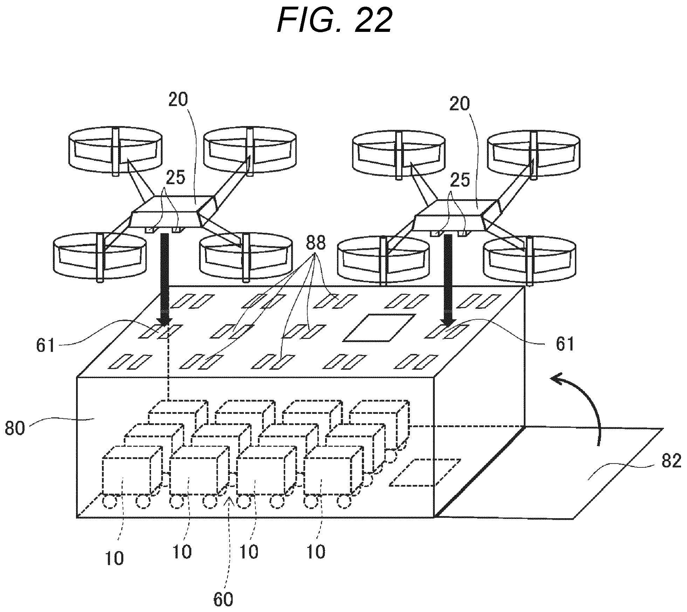

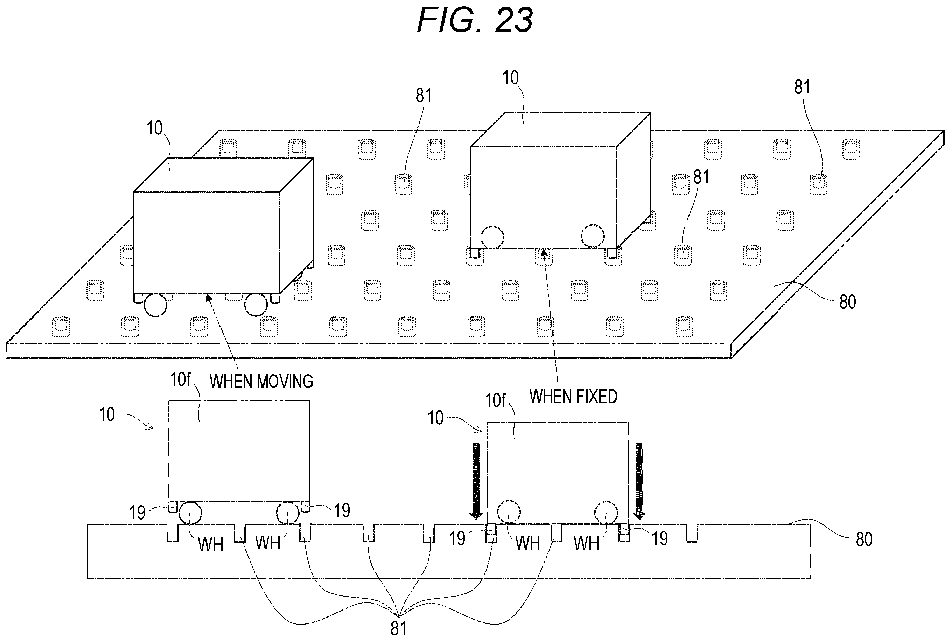

Next, a transport system 1B according to a third embodiment of the present invention will be described with reference to Figs. 21 to 26. Note that in the following description, the same constituent elements as those of the transport system 1 according to the first embodiment and the transport system 1A according to the second embodiment are denoted by the same reference numerals, and the description thereof will be omitted or simplified.

As shown in Figs. 21 to 23, in the transport system 1B of the third embodiment, the first moving body 10 has the same configuration as the first moving body 10 in the transport system 1A of the second embodiment. In the transport system 1B of the third embodiment, the second moving body 20 has the same configuration as the second moving body 20 in the transport system 1 of the first embodiment. Furthermore, the transport system 1B of the third embodiment includes a container 80 that can accommodate the plurality of first moving bodies 10, whose relative positions with respect to each other are identified, as the first assembly 60.

Inside the container 80, a large number of engaged portions 81 that can be engaged with the engaging member 19 of the first moving body 10 are provided. In the present embodiment, the engaged portions 81 are a large number of recesses provided on a floor surface of the container 80.

The engaging member 19 of the first moving body 10 is positioned above lower ends of the wheels WH when the first moving body 10 moves autonomously, so that the autonomous movement of the first moving body 10 is not obstructed. When the first moving body 10 is stopped inside the container 80, the main body portion 10f is lowered toward the floor surface of the accommodating portion 20a, and by the engaging member 19 engaging with the engaged portion 81 of the container 80, the first moving body 10 is fixed to the container 80. In this way, by fixing the plurality of first moving bodies 10 to the container 80, the first assembly 60 in which the relative positions of the plurality of first moving bodies 10 with respect to each other are identified is formed via the container 80.

The container 80 is provided with an openable and closeable door 82. The container 80 can receive signals from the central management server 30, and the openable and closeable door 82 is controlled to be opened and closed by the central management server 30. In the present embodiment, the container 80 has a substantially rectangular parallelepiped shape, and the openable and closeable door 82 is provided on one of six surfaces of the substantially rectangular parallelepiped shape. When the openable and closeable door 82 is in an open state, the first moving body 10 can move between outside and inside of the container 80.

A plurality of first assembly side connection portions 88 are provided on an outer side of an upper surface of the container 80. Then, one or a plurality of first assembly side connection portions 88 among the plurality of first assembly side connection portions 88 are selected as the first assembly side connection positions 61 to which the second moving body 20 is connected. Then, the second moving body side connection portions 25 of the second moving bodies 20 are respectively connected to one or a plurality of first assembly side connection portions 88 selected as the first assembly side connection positions 61. Then, the second moving body 20 transports the plurality of first moving bodies 10, whose relative positions with respect to each other are identified, as the first assembly 60 from the first transit point TP1 to a second transit point TP2 via the container 80.

Upon receiving from the central management server 30 the information indicating the arrangement pattern selected by the selection unit 37, or information indicating the position of each first moving body 10 in the arrangement pattern selected by the selection unit 37, each of the first moving bodies 10 extracted by the extraction unit 34, that is, each of the first moving bodies 10 constituting the first assembly 60, uses the control unit 14 to control the drive unit 12 and main body portion 10f based on the information indicating the arrangement pattern or the information indicating the position of each first moving body 10 in the arrangement pattern received from the central management server 30. Then, each of the first moving bodies 10 extracted by the extraction unit 34, that is, each of the first moving bodies 10 constituting the first assembly 60, autonomously travels inside the container 80, and lowers the main body portion 10f to a predetermined position inside the container 80 to engage the engaging member 19 with the engaged portion 81 of the container 80. As a result, each of the first moving bodies 10 extracted by the extraction unit 34 is fixed to the container 80 by the engaging member 19, and forms the first assembly 60 arranged in the arrangement pattern selected by the selection unit 37 at the container 80. Then, when the formation of the first assembly 60 is completed, the first moving bodies 10 extracted by the extraction unit 34 transmit information indicating that the formation of the first assembly 60 is completed to the central management server 30.

When the central management server 30 receives the information indicating that the formation of the first assembly 60 is completed, the central management server 30 transmits an instruction signal to set the openable and closeable door 82 of the container 80 to a closed state. Upon receiving the instruction signal to set the openable and closeable door 82 to a closed state, the container 80 changes the openable and closeable door 82 to a closed state.

The first determination unit 38a determines the number of second moving body 20 to be used when transporting the first assembly 60 from the first transit point TP1 to the second transit point TP2 based on the weight information indicating the weight of the first assembly 60 included in the second center of gravity information calculated by the calculation unit 36. The second determination unit 38b determines, among a plurality of second moving bodies, the second moving body 20 that transports the first assembly 60 from the first transit point TP1 to the second transit point TP2, based on the information stored in the environmental information database 32, the number of second moving body 20 to be used determined by the first determination unit 38a, and various kinds of information transmitted from each second moving body 20 to the central management server 30 such as the position information and movement state of each second moving body 20, and the energy storage state of the energy storage device 21 mounted on the second moving body 20. For example, the information transmitted from each second moving body 20 to the central management server 30 includes, for example, the position information and movement state of the second moving body 20, and the energy storage state of the energy storage device 21 mounted on the second moving body 20. The third determination unit 38c determines the first assembly side connection position 61 to which the second moving body 20 is connected from the plurality of first assembly side connection portions 88, based on the second center of gravity information calculated by the calculation unit 36 and the number of second moving body 20 to be used determined by the first determination unit 38a.

The central management server 30 transmits information indicating the first assembly side connection position 61 to which the second moving body 20 is connected determined by the third determination unit 38c from the communication unit 31 to the second moving body 20 determined by the second determination unit 38b.

Then, the second moving body 20 that receives the information indicating the first assembly side connection position 61 to which the second moving body 20 is connected determined by the third determination unit 38c controls the drive device 22 and the second moving body side connection portion 25 by the control unit 23, so as to connect the second moving body side connection portion 25 to the first assembly side connection position 61 determined by the third determination unit 38c. When connection of the second moving body side connection portion 25 to the first assembly side connection position 61 is completed, the second moving body 20 determined by the third determination unit 38c transmits information indicating that the connection of the second moving body side connection portion 25 to the first assembly side connection position 61 is completed to the central management server 30.

Upon receiving the information indicating that the formation of the first assembly 60 is completed and the information indicating that the connection of the second moving body side connection portion 25 to the first assembly side connection position 61 is completed, the central management server 30 transmits a movement instruction from the first transit point TP1 to the second transit point TP2 to the second moving body 20 determined by the second determination unit 38b.

Upon receiving the movement instruction from the first transit point TP1 to the second transit point TP2 from the central management server 30, the second moving body 20 determined by the second determination unit 38b moves to the second transit point TP2 according to the received movement instruction. In this way, the second moving body 20 accommodates the plurality of first moving bodies 10, whose relative positions with respect to each other are identified, as the first assembly 60 in the container 80, and transports the plurality of first moving bodies 10, whose relative positions with respect to each other are identified, as the first assembly 60 from the first transit point TP1 to the second transit point TP2. Then, when the second moving body 20 arrives at the second transit point TP2, the second moving body 20 transmits information indicating that the second moving body 20 arrives at the second transit point TP2 to the central management server 30.

Upon receiving the information indicating that the second moving body 20 determined by the second determination unit 38b arrives at the second transit point TP2, the central management server 30 transmits an instruction signal to set the openable and closeable door 82 of the container 80 to an open state, and a movement instruction to the transport destination based on the transport plan created by the transport plan creation unit 33 to each first moving body 10 constituting the first assembly 60. Upon receiving the instruction signal to set the openable and closeable door 82 to an open state, the container 80 changes the openable and closeable door 82 to an open state.

Upon receiving the movement instruction to the transport destination from the central management server 30, each of the first moving bodies 10 constituting the first assembly 60 first raises the main body portion 10f and releases the engagement between the engaging member 19 and the engaged portion 81 of the container 80. Thereafter, each first moving body 10 moves to the transport destination according to the received movement instruction. Therefore, the first moving body 10 whose transport destination is the second point P2 moves to the second point P2.

In this way, the transport system 1B of the present embodiment transports the first moving bodies 10 to the second point P2.

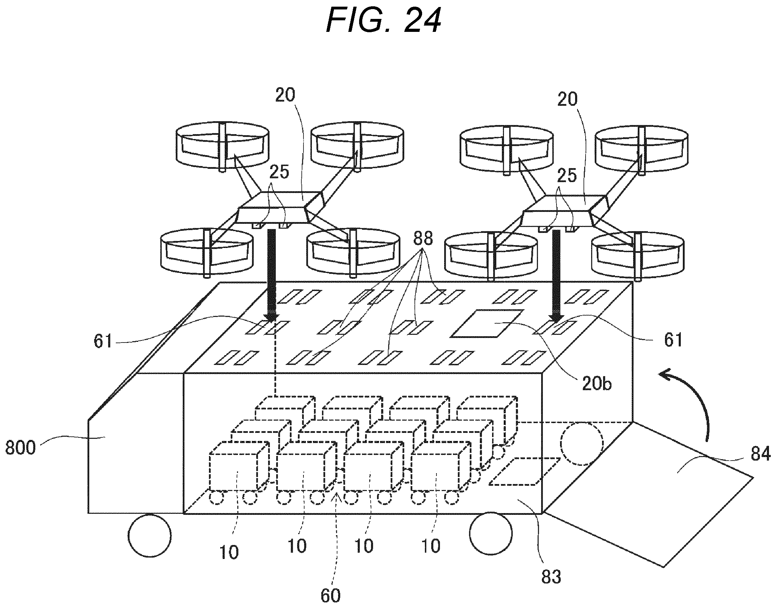

As shown in Figs. 24 to 26, the container 80 may be a container vehicle 800 that is movable by itself. The container vehicle 800 includes a container portion 83 that can accommodate the plurality of first moving bodies 10, whose relative positions with respect to each other are identified, as the first assembly 60.

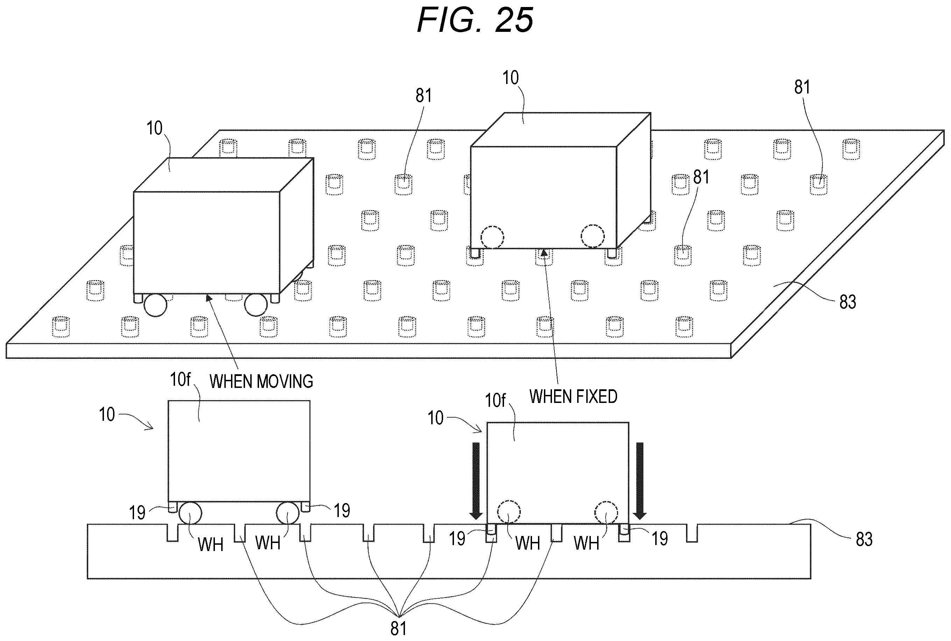

As shown in Fig. 25, inside the container portion 83, a large number of engaged portions 81 that can be engaged with the engaging member 19 of the first moving body 10 are provided. In the present embodiment, the engaged portions 81 are a large number of recesses provided on a floor surface of the container portion 83.

The engaging member 19 of the first moving body 10 is positioned above lower ends of the wheels WH when the first moving body 10 moves autonomously, so that the autonomous movement of the first moving body 10 is not obstructed. When the first moving body 10 is stopped inside the container 80, the main body portion 10f is lowered toward the floor surface of the accommodating portion 20a, and by the engaging member 19 engaging with the engaged portion 81 of the container portion 83, the first moving body 10 is fixed to the container 80. In this way, by fixing the plurality of first moving bodies 10 to the container portion 83 of the container vehicle 800, the first assembly 60 in which the relative positions of the plurality of first moving bodies 10 with respect to each other are identified is formed via the container portion 83.

The container portion 83 is provided with a slope 84. The slope 84 can span the floor surface of the container portion 83 and ground. In the present embodiment, the container portion 83 has a substantially rectangular parallelepiped shape, and the slope 84 is provided on one of six surfaces of the substantially rectangular parallelepiped shape, and also functions as an openable and closeable door of the container portion 83. The container vehicle 800 is capable of receiving a signal from the central management server 30, and the slope 84 is controlled by the central management server 30 to switch between a slope state of spanning the floor surface of the container portion 83 and the ground, and an accommodated state of closing one surface of the container portion 83. When the slope 84 is in the slope state of spanning the floor surface of the container portion 83 and the ground, the first moving body 10 can move between the outside of the container vehicle 800 and the inside of the container portion 83 through the slope 84. When the container vehicle 800 arrives at the first transit point TP1, the central management server 30 transmits an instruction signal to set the slope 84 of the container vehicle 800 to the slope state. When the container vehicle 800 receives the instruction signal to set the slope 84 to the slope state, the container vehicle 800 switches the slope 84 to the slope state.

As shown in Fig. 24, a plurality of first assembly side connection portions 88 are provided on an outer side of an upper surface of the container vehicle 800. Then, one or a plurality of one or a plurality of first assembly side connection portions 88 among the plurality of first assembly side connection portions 88 are selected as the first assembly side connection positions 61 to which the second moving body 20 is connected. Then, the second moving body side connection portions 25 of the second moving bodies 20 are respectively connected to one or a plurality of first assembly side connection portions 88 selected as the first assembly side connection positions 61. Then, the second moving body 20 transports the plurality of first moving bodies 10, whose relative positions with respect to each other are identified, as the first assembly 60 from the first transit point TP1 to a second transit point TP2 via the container vehicle 800.

When the central management server 30 receives the information indicating that the formation of the first assembly 60 is completed, the central management server 30 transmits an instruction signal to set the slope 84 of the container vehicle 800 to the accommodated state. When the container vehicle 800 receives the instruction signal to set the slope 84 to the accommodated state, the container vehicle 800 switches the slope 84 to the accommodated state.

Upon receiving the information indicating that the second moving body 20 determined by the second determination unit 38b arrives at the second transit point TP2, the central management server 30 transmits an instruction signal to set the slope 84 of the container vehicle 800 to the slope state. When the container vehicle 800 receives the instruction signal to set the slope 84 to the slope state, the container vehicle 800 switches the slope 84 to the slope state.

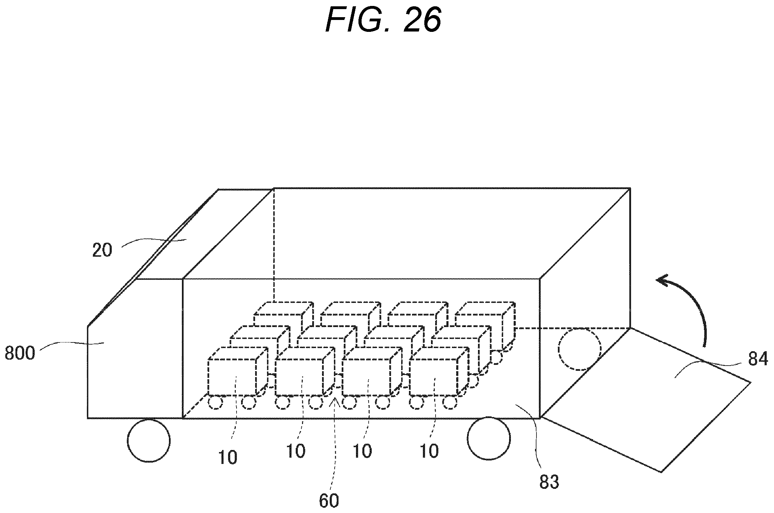

Note that as shown in Fig. 26, the container vehicle 800 may be the second moving body 20. That is, the second moving body 20 does not need to be a flight vehicle, and may be a moving body that can travel on the ground, such as a vehicle. In this case, the plurality of first assembly side connection portions 88 are not necessarily provided on the outer side of the upper surface of the container vehicle 800.

### [Fourth Embodiment]

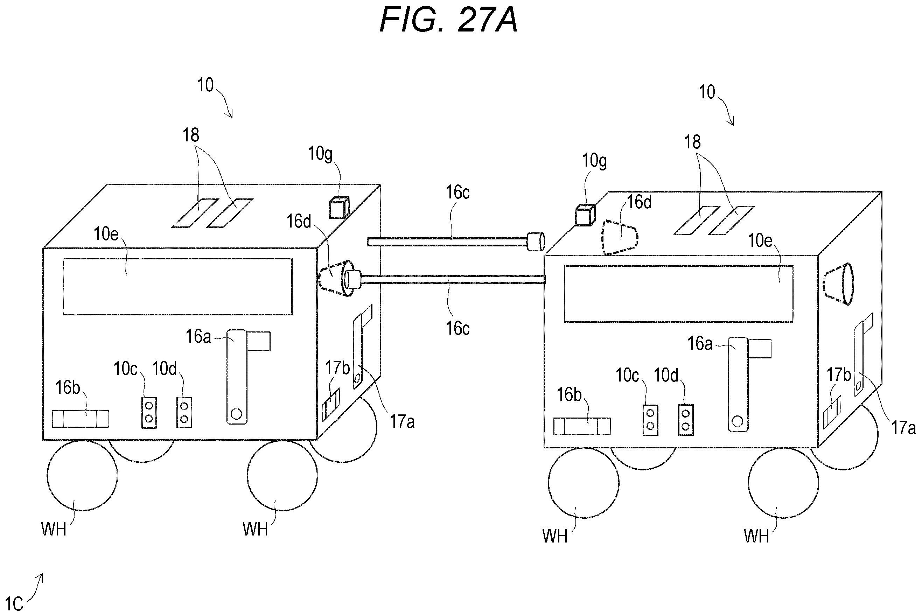

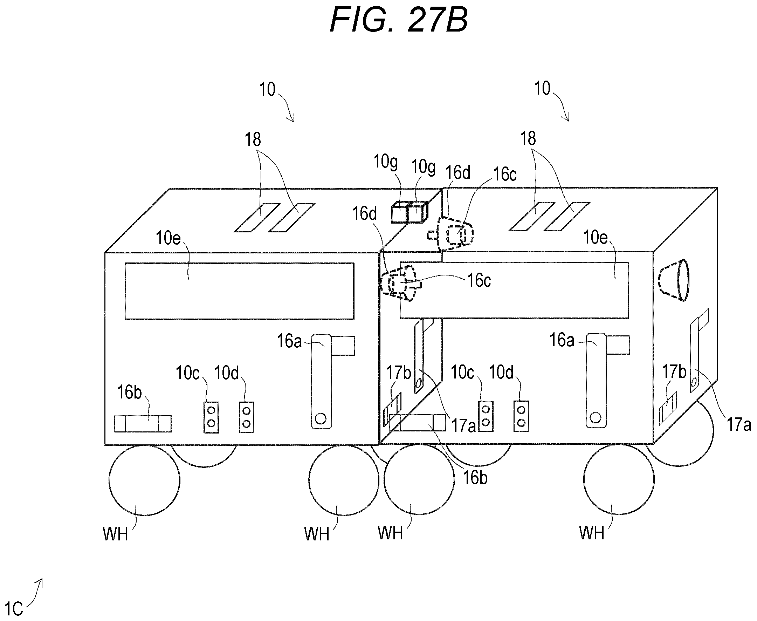

Next, a transport system 1C according to a fourth embodiment of the present invention will be described with reference to Figs. 27A, 27B, and 28. Note that in the following description, the same constituent elements as those of the transport system 1 according to the first embodiment are denoted by the same reference numerals, and the description thereof will be omitted or simplified.

In the transport system 1 of the first embodiment, while the second moving body 20 transports the first assembly 60 from the first transit point TP1 to the second transit point TP2, the first moving bodies 10 constituting the first assembly 60 are assumed as unchanged, whereas in the transport system 1C of the present embodiment, while the second moving body 20 transports the first assembly 60 from the first transit point TP1 to the second transit point TP2, the first assembly 60 may be connected to other first assemblies 60 or separated into a plurality of first assemblies 60.

As shown in Figs. 27A and 27B, the first moving body 10 of the present embodiment includes a guide member 16c and an engaged portion 16d with which the guide member 16c engages. The guide member 16c and the engaged portion 16d may be provided on a plurality of surfaces of the first moving body 10, for example, on four surfaces facing a horizontal direction or on all six surfaces thereof. In Figs. 27A and 27B, in order to simplify and clarify the description, the guide member 16c and the engaged portion 16d provided on one predetermined surface of the first moving body 10 are shown.

Furthermore, the first moving body 10 of the present embodiment includes a short-range sensor 10g. The short-range sensor 10g can detect position, speed, movement direction, and movement acceleration of the first moving body 10 and the second moving body 20 positioned at a short distance with high accuracy. The short-range sensor 10g may further be capable of detecting ambient temperature, humidity, wind speed, and the like. The short-range sensor 10g includes, for example, a camera, an infrared camera, a millimeter wave radar, an ultrasonic radar, an airflow sensor, an atmospheric pressure sensor, a temperature sensor, a humidity sensor, an acceleration sensor, and a global positioning system or global positioning satellite (GPS).

The guide member 16c is an arm member that can expand and contract in a direction toward which the surface of the first moving body 10 on which the guide member 16c is provided faces. The control unit 14 controls the guide member 16c.

The engaged portion 16d has a shape capable of engaging with the guide member 16c. The engaged portion 16d has a socket shape that tapers in a manner of widening in a direction toward which the surface of the first moving body 10 on which the engaged portion 16d is provided faces.

As shown in Fig. 27A, when two first moving bodies 10 approach each other and connecting surfaces of the two first moving bodies 10 are in a position facing each other, the guide members 16c of the two first moving bodies 10 expand. Then, the guide member 16c of the first moving body 10 comes into contact with the engaged portion 16d of the opposing first moving body 10.

When the guide member 16c further expands, the guide member 16c is inserted into the engaged portion 16d while being aligned along the tapered socket shape of the engaged portion 16d, and engages with the engaged portion 16d. In this way, alignment between the guide member 16c of the first moving body 10 and the engaged portion 16d of the opposing first moving body 10 becomes easy.

As shown in Fig. 27B, when the guide members 16c of the first moving bodies 10 each engage with the engaged portions 16d of the first moving bodies 10 facing each other, the guide members 16c of the respective first moving bodies 10 contract. Then, the connecting surfaces of the two first moving bodies 10 are drawn together, and the connecting surfaces of the two first moving bodies 10 are in contact with each other, and the two first moving bodies 10 are connected by the connecting surfaces. In this way, the two first moving bodies 10 can be connected while preventing the connecting surfaces of the two first moving bodies 10 from colliding with each other.

When the two first moving bodies 10 are to be connected, in the case of connecting the two first moving bodies 10 in the first direction, by the first engaging member 16a of one first moving body 10 engaging with the first engaged portion 16b of the other first moving body 10 to be connected to, the two first moving bodies 10 are connected in the first direction with relative positions thereof with respect to each other fixed, and in the case of connecting the two first moving bodies 10 in the second direction, by the second engaging member 17a of one first moving body 10 engaging with the second engaged portion 17b of the other first moving body 10 to be connected to, the two first moving bodies 10 are connected in the second direction with relative positions thereof with respect to each other fixed.

In this way, by the first engaging member 16a of the first moving body 10 engaging with the first engaged portion 16b of a different first moving body 10 disposed side by side with the former first moving body 10 in the first direction, and the second engaging member 17a engaging with the second engaged portion 17b of another different first moving body 10 adjacent to the former first moving body 10 in the second direction, a first assembly 60 is formed in which relative positions of the plurality of first moving bodies 10 with respect to each other are fixed. Therefore, in the first assembly 60, the relative positions of the plurality of first moving bodies 10 with respect to each other are fixed by the direct engagement of the plurality of first moving bodies 10 with each other.

In the present embodiment, the second moving body 20 includes a short-range sensor 20e (see Fig. 28). The short-range sensor 20e can detect position, speed, movement direction, and movement acceleration of the first moving body 10 and the second moving body 20 positioned at a short distance with high accuracy. The short-range sensor 20e may further be capable of detecting ambient temperature, humidity, wind speed, and the like. The short-range sensor 20e includes, for example, a camera, an infrared camera, a millimeter wave radar, an ultrasonic radar, an airflow sensor, an atmospheric pressure sensor, a temperature sensor, a humidity sensor, an acceleration sensor, and a global positioning system or global positioning satellite (GPS).

In the present embodiment, after the second moving body 20 is connected to the first assembly 60, the first assembly 60 can be connected to a different first assembly 60, and the first assembly 60 can be separated into a plurality of first assemblies 60.

In the present embodiment, after the central management server 30 transmits a movement instruction from the first transit point TP1 to the second transit point TP2 to the second moving body 20 (step S40 shown in the first embodiment), the central management server 30 acquires position information of the plurality of first assemblies 60. Then, the central management server 30 determines whether to connect two first assemblies 60 near each other based on the first center of gravity information of each of the first moving bodies 10 forming the two first assemblies 60.

When the central management server 30 determines that two first assemblies 60 near each other are to be connected, the central management server 30 instructs each second moving body 20 connected to the two first assemblies 60 near each other to move so that predetermined connecting surfaces of the two first assemblies 60 near each other face each other.

As shown in (a) of Fig. 28, when the connecting surfaces of the two first assemblies 60 near each other are close to each other within a predetermined distance, and the connecting surfaces of the first assemblies 60 are in a position facing each other, the control units 14 of the first moving bodies 10 make the guide members 16c of the first moving bodies 10 to expand based on the information acquired by the short-range sensors 10g of the first moving bodies 10. Then, as described above, the guide members 16c of the first moving bodies 10 contract after engaging with the engaged portions 16d of the opposing first moving bodies 10, so that the two first assemblies 60 are connected as shown in (b) of Fig. 28.

When the central management server 30 determines that two first assemblies 60 near each other are to be connected, and the two first assemblies 60 are connected to become one first assembly 60, the central management server 30 determines whether there is a second moving body 20 that can leave the first assemblies 60 that become one while ensuring that the first assemblies 60 can be transported, based on the first center of gravity information of each first moving body 10 constituting the two first assemblies 60 near each other.

As shown in (c) of Fig. 28, when the central management server 30 determines that there is a second moving body 20 that can leave the first assemblies 60 that become one while ensuring that the first assemblies 60 can be transported, the central management server 30 instructs the second moving body 20 that can leave the first assemblies 60 that become one to leave the first assemblies 60 that become one.The second moving body 20 that is instructed to leave the first assemblies 60 leaves the first assemblies 60 that become one.

When the central management server 30 determines that two first assemblies 60 near each other are to be connected, and the two first assemblies 60 are connected to become one first assembly 60, the central management server 30 determines whether the first assemblies 60 that become one can be separated into a plurality of first assemblies 60, based on the first center of gravity information of each first moving body 10 constituting the two first assemblies 60 near each other.

As shown in (d) of Fig. 28, when the central management server 30 determines that the first assemblies 60 that become one can be separated into a plurality of first assemblies 60, after the first assemblies 60 become one, the central management server 30 instructs the first moving bodies 10 constituting separating surfaces that separate the first assembly 60 into a plurality of first assemblies 60 to separate the first assembly 60. The first moving bodies 10 constituting the separating surfaces which receive the instruction from the central management server 30 make the guide members 16c thereof provided on the separating surfaces to expand after the engagement between the first engaging member 16a and the first engaged portion 16b and/or the engagement between the second engaging member 17a and the second engaged portion 17b is released. When the two separated first assemblies 60 are sufficiently separated from each other to a distance that allows the two first assemblies 60 to fly autonomously, the guide member 16c is disengaged from the engaged portion 16d and contracts. In this way, the one first assembly 60 is separated into two first assemblies 60.

In this way, in the transport system 1C of the present embodiment, after the second moving body 20 is connected to the first assembly 60, the first assembly 60 can be connected to a different first assembly 60, and the first assembly 60 can be separated into a plurality of first assemblies 60, so that even when the first assembly 60 is being transported by the second moving body 20, the first assembly 60 can always be transported in an optimal form. Accordingly, the first moving body 10 can be transported more efficiently.

Note that the guide member 16c may be provided with an electric power cable, a communication cable, or the like therein, and the first moving bodies 10 connected to each other may be able to exchange electric power and information with each other. The guide member 16c may be in a shape of a hollow pipe or tube, and may be capable of moving gas, fuel, liquid, solid, and the like between the first moving bodies 10 connected to each other.

The second moving body side connection portion 25 of the second moving body 20 may have the same form as the guide member 16c of the present embodiment, and the first moving body side connection portion 18 of the first moving body 10 may have the same form as the engaged portion 16d of the present embodiment. Note that the second moving body side connection portion 25 of the second moving body 20 may be provided with an electric power cable, a communication cable, or the like therein, and the first moving bodies 10 connected to each other may be able to exchange electric power and information with each other. The second moving body side connection portion 25 of the second moving body 20 may be in a shape of a hollow pipe or tube, and may be capable of moving gas, fuel, liquid, solid, and the like between the first moving bodies 10 connected to each other.

Although the embodiments of the present invention have been described above with reference to the accompanying drawings, it is needless to say that the present invention is not limited to the embodiments. It is apparent that those skilled in the art can conceive of various modifications and changes within the scope described in the claims, and it is understood that such modifications and changes naturally fall within the technical scope of the present invention. In addition, respective constituent elements in the above embodiments may be freely combined without departing from the gist of the invention.

For example, the transport system 1 of the first embodiment is assumed to transport the object 90 such as luggage accommodated in the accommodating portion 10a of the first moving body 10 from the first point P1 to the second point P2, and the transport system 1A of the second embodiment and the transport system 1B of the third embodiment transport energy stored in the energy storage device 11 built in the main body portion 10f of the first moving body 10, for example, electric power stored in the secondary battery 11a of the energy storage device 11, to the second point P2, but the transport system 1 of the first embodiment may transport the energy stored in the energy storage device 11 provided in the first moving body 10, for example, the electric power stored in the secondary battery 11a of the energy storage device 11, to the second point P2, and the transport system 1A of the second embodiment and the transport system 1B of the third embodiment may transport the object 90 such as luggage accommodated in the first moving body 10 from the first point P1 to the second point P2.

For example, the object 90 is not limited to articles such as luggage, but may also be people. For example, a specific person may enter the accommodating portion 10a of the first moving body 10, and the specific person may be transported from the first point P1 to the second point P2 by the transport system 1, 1A, or 1B. For example, the receiver B of a luggage or the like may enter the accommodating portion 10a of the first moving body 10, and is transported by the transport system 1, 1A, or 1B to a point where the luggage to be picked up by the receiver B is placed (second point P2), or, an owner of an article such as a luggage may enter the accommodating portion 10a of the first moving body 10 along with the article at the first point P1, and the transport system 1, 1A, or 1B may transport the article such as a luggage and the owner of the article to the second point P2 such as home.

For example, in the first embodiment, the first moving body side connection portion 18 is provided on the upper portion of each first moving body 10, and the second moving body side connection portion 25 of the second moving body 20 is connected to one or a plurality of first assembly side connection positions 61 selected from the first moving body side connection portions 18 of the plurality of first moving bodies 10 that constitute the first assembly 60 and whose relative positions are fixed, but, for example, the second moving body 20 may include an arm member, and the arm member may be connectable to any position on lower surfaces of the first moving bodies 10 constituting the first assembly 60. In this case, the first assembly side connection position 61 of the first assembly 60 can be set at any position on the lower surface of the first moving bodies 10 constituting the first assembly 60.

In this case, when the first determination unit 38a determines that the number of second moving body 20 to be used is one, it is preferable that the third determination unit 38c determines the first assembly side connection position 61 so as to match the center of gravity position of the entire first assembly 60, based on the center of gravity position information indicating the center of gravity position of the entire first assembly 60 included in the second center of gravity information calculated by the calculation unit 36.

In this way, since the second moving body 20 can support and transport the first assembly 60 at the center of gravity position of the entire first assembly 60, the stability of the second moving body 20 when transporting the plurality of first moving bodies 10 as the first assembly 60 is improved.

When the first determination unit 38a determines that the number of second moving body 20 to be used is plural, it is preferable that the third determination unit 38c determines a plurality of first assembly side connection positions 61 so that the center of the plurality of first assembly side connection positions 61 connected to the second moving body 20 coincides with the center of gravity position of the entire first assembly 60, based on the center of gravity position information indicating the center of gravity position of the entire first assembly 60 included in the second center of gravity information calculated by the calculation unit 36.

In this way, since the second moving bodies 20 can support and transport the first assembly 60 at a position where the center of the plurality of first moving body side connection portions 18 connected to the second moving bodies 20 coincides with the center of gravity position of the entire first assembly 60, the stability of the second moving bodies 20 when transporting the plurality of first moving bodies 10 as the first assembly 60 is improved.

For example, the transport of the object 90 shown in the first embodiment and the second embodiment may be performed by executing a transport program capable of executing the processing operation of the transport system described in the first embodiment and the second embodiment.

For example, the transport program capable of executing the processing operation of the transport system shown in the first embodiment and the second embodiment may be stored in a storage medium. Accordingly, the transport program stored in the storage medium is read by a computer, so that the transport program can be easily executed.

For example, in the first embodiment and the second embodiment, the first moving body 10 is an unmanned vehicle capable of autonomously traveling on a road, and the second moving body 20 is an unmanned aerial vehicle (UAV) such as a drone, but the first moving body 10 and the second moving body 20 may be any moving body, such as a vehicle, an aircraft, a ship, or a general-purpose device. A movement route of the first moving body 10 and the second moving body 20 can be any route, and may be, for example, on the ground, in the air, on the sea, underwater, or in space.

For example, in the first embodiment and the second embodiment, the first assembly 60 is formed by connecting the plurality of first moving bodies 10 in a direction perpendicular to the upper-lower direction, but the first assembly 60 may be formed by connecting the plurality of first moving bodies 10 in the upper-lower direction.

For example, in the second embodiment, the four propeller devices 26 are connected to the accommodating portion 20a of the second moving body 20, but any number of propeller devices 26 may be connected to the accommodating portion 20a.

For example, in the second embodiment, by lowering the main body portion 10f toward the floor surface of the accommodating portion 20a, and the engaging member 19 engaging with the engaged portion 27 of the second moving body 20, the first moving body 10 is fixed to the accommodating portion 20a of the second moving body 20, but in the present description and the like, fixation may be any state in which the position of the first moving body 10 with respect to the second moving body 20 is maintained. That is, even if the engaging member 19 of the first moving body 10 and the engaged portion 27 of the second moving body 20 are omitted, by a static friction force between the first moving body 10 and the second moving body 20, for example, if the position of the first moving body 10 with respect to the second moving body 20 is maintained even while the second moving body 20 is moving, it can be said that the first moving body 10 is fixed to the accommodating portion 20a of the second moving body 20. Therefore, for example, if the position of the first moving body 10 with respect to the second moving body 20 is maintained even while the second moving body 20 is moving, the engaging member 19 of the first moving body 10 and the engaged portion 27 of the second moving body 20 can be omitted.

Similarly, in the third embodiment, by lowering the main body portion 10f toward the floor surface of the container 80 or the container portion 83, and the engaging member 19 engaging with the engaged portion 81 of the container 80 or the container portion 83, the first moving body 10 is fixed to the container 80 or the container portion 83, but in the present description and the like, fixation may be any state in which the position of the first moving body 10 with respect to the container 80 or the container portion 83 is maintained. That is, even if the engaging member 19 of the first moving body 10 and the engaged portion 81 of the container 80 or the container portion 83 are omitted, by a static friction force between the first moving body 10 and the container 80 or the container portion 83, for example, if the position of the first moving body 10 with respect to the container 80 or the container portion 83 is maintained even while the container 80 or the container portion 83 is moved by the second moving body 20, it can be said that the first moving body 10 is fixed to the container 80 or the container portion 83. Therefore, for example, if the position of the first moving body 10 with respect to the container 80 or the container portion 83 is maintained even while the second moving body 20 is moving, the engaging member 19 of the first moving body 10 and the engaged portion 81 of the container 80 or the container portion 83 can be omitted.

For example, in the third embodiment, after extracting the first moving bodies 10 forming the first assembly 60, selecting the arrangement pattern of the first moving bodies 10 forming the first assembly 60, and forming the first assembly 60 in the selected arrangement pattern, the first assembly side connection position 61, which is a position to which the second moving body 20 is connected in the first assembly 60, is determined, but the first moving bodies 10 forming the first assembly 60 may be extracted, and the arrangement pattern of the first moving bodies 10 forming the first assembly 60 may be selected, and the first assembly 60 may be formed using the selected arrangement pattern, after the second moving body 20 is connected to the first assembly side connection position 61 of the first assembly 60. Specifically, when the first assembly 60 is formed by identifying the relative position of each of the first moving bodies 10 extracted by the extraction unit 34, that is, the plurality of first moving bodies 10 constituting the first assembly 60, with respect to each other according to a plurality of arrangement patterns, the calculation unit 36 calculates the second center of gravity information for each arrangement pattern. The selection unit 37 selects one arrangement pattern based on one or a plurality of first assembly side connection positions 61 of the first assembly 60 connected to the second moving body 20 the second center of gravity information in each arrangement pattern of the plurality of first moving bodies 10 calculated by the calculation unit 36.

Therefore, even when the first moving bodies 10 are accommodated in the container 80 or the container 80 connected to the first assembly side connection position 61 of the container vehicle 800, or the container portion 83 of the container vehicle 800, so as to form the first assembly 60 after the second moving body 20 is connected to the first assembly side connection position 61 of the first assembly 60, the first assembly 60 can be formed by arranging the first moving bodies 10 in an optimal arrangement pattern.

For example, in the second embodiment and the third embodiment, while the first assembly 60 is being transported by the second moving body 20 from the first transit point TP1 to the second transit point TP2, the relative positions of the plurality of first moving bodies 10 constituting the first assembly 60 are always fixed, but the relative positions of the plurality of first moving bodies 10 constituting the first assembly 60 may be changed depending on a situation.

For example, in the second embodiment and the third embodiment, while the first assembly 60 is transported by the second moving body 20 from the first transit point TP1 to the second transit point TP2, the arrangement pattern of the first moving bodies 10 forming the first assembly 60 may be changeable based on at least one of the motion state or motion prediction of the second moving body 20 that transports the first assembly 60. Specifically, for example, in the second embodiment, while the first assembly 60 is transported by the second moving body 20 from the first transit point TP1 to the second transit point TP2, the arrangement pattern of the first moving bodies 10 forming the first assembly 60 may be changed by predicting an attitude of the accommodating portion 20a and an inertial force that the accommodating portion 20a receives due to turning or the like based on at least one of the motion state or motion prediction of the second moving body 20 that transports the first assembly 60. For example, in the third embodiment, while the first assembly 60 is transported by the second moving body 20 from the first transit point TP1 to the second transit point TP2, the arrangement pattern of the first moving bodies 10 forming the first assembly 60 may be changed by predicting an attitude of the container 80 or the container vehicle 800 and an inertial force that the container 80 or the container vehicle 800 receives due to turning or the like based on at least one of the motion state or a predicted motion state at a predetermined timing later than the current time of the second moving body 20 that transports the first assembly 60. The motion state is, for example, a state of the second moving body 20 such as the posture, speed, and acceleration in each of the pitch direction, roll direction, and yaw direction. The predicted motion state at a predetermined timing after the current time is predicted based on a movement route of the second moving body 20 from the first transit point TP1 to the second transit point TP2.

Accordingly, while the first assembly 60 is transported by the second moving body 20 from the first transit point TP1 to the second transit point TP2, since the first assembly 60 can be formed by arranging the first moving bodies 10 in an optimal arrangement pattern based on at least one of the motion state or a predicted motion state at a predetermined timing later than the current time of the second moving body 20 that transports the first assembly 60, the stability of the first assembly 60 and the second moving body 20 while the first assembly 60 is transported by the second moving body 20 from the first transit point TP1 to the second transit point TP2 is improved.

In this way, the plurality of first moving bodies 10 may be controlled so that the first arrangement pattern, which is the arrangement pattern of the plurality of first moving bodies 10 in the first assembly 60 at the first timing, is different from the second arrangement pattern, which is the arrangement pattern of the plurality of first moving bodies 10 in the first assembly 60 at the second timing after the first timing.

In this case, the second timing is a timing later than the current timing, and the second arrangement pattern is determined based on a target arrangement pattern of the plurality of first moving bodies at the second timing.

The target arrangement pattern is determined based on at least one of the first assembly side connection position 61 that is a position in the first assembly 60 to which the second moving body 20 is connected at the second timing, a target value of the center of gravity position of the entire first assembly 60 at the second timing, and a motion state of the second moving body 20 predicted at the second timing.

Therefore, the first moving bodies 10 can be controlled to form the first assembly 60 in which the plurality of first moving bodies 10 are arranged in an optimal arrangement pattern according to the change in the state.

Furthermore, at a predetermined timing later than the current timing, the first assembly 60 in which the plurality of first moving bodies 10 are arranged in a desired arrangement pattern can be formed.

Since the target arrangement pattern is determined based on at least one of the first assembly side connection position 61 that is a position in the first assembly 60 to which the second moving body 20 is connected at the second timing, a target value of the center of gravity position of the entire first assembly 60 at the second timing, and a motion state of the second moving body 20 predicted at the second timing, the stability of the first assembly 60 and the second moving body 20 while the first assembly 60 is transported by the second moving body 20 from the first transit point TP1 to the second transit point TP2 is improved.

For example, in the second embodiment and the third embodiment, the first moving body 10 which is a moving body that is autonomously movable may be replaced by an object that does not move autonomously, such as a luggage. In this case, humans, forklifts, robots, robot arms, or the like are arranged inside the container 80 of the second embodiment or the container portion 83 of the container vehicle 800 of the third embodiment, and may move the object that does not move autonomously according to the determined arrangement pattern.

### REFERENCE SIGNS LIST

1 transport system
10 first moving body
18 first moving body side connection portion
20 second moving body
30 central management server (information processing device, control unit)
31 communication unit (transmitting unit)
36 calculation unit
37 selection unit
38 determination unit
60 first assembly
61 first assembly side connection position
WH wheel

## Claims

1. A transport system (1), comprising:
a plurality of autonomously movable first moving bodies (10);
a second moving body (20) configured to transport the plurality of first moving bodies (10) as a first assembly (60) in which relative positions of the plurality of first moving bodies (10) with respect to each other are identified, **characterized in that** the transport system further comprises:
a control unit (30) configured to control the plurality of first moving bodies (10) so that a first arrangement pattern, which is an arrangement pattern of the plurality of first moving bodies (10) in the first assembly (60) at a first timing, and a second arrangement pattern, which is an arrangement pattern of the plurality of first moving bodies (10) in the first assembly (60) at a second timing after the first timing, are different from each other, wherein
the second arrangement pattern is determined based on a target arrangement pattern of the plurality of first moving bodies (10) at the second timing, and
the target arrangement pattern is determined based on at least one of:
a first assembly side connection position (61) that is a position in the first assembly (60) to which the second moving body (20) is connected at the second timing;
a target value of the center of gravity position of the entire first assembly (60) at the second timing; and
a motion state of the second moving body (20) predicted at the second timing.

2. The transport system (1) according to claim 1, further comprising:
a calculation unit (36) configured to calculate second center of gravity information, which is center of gravity related information of the first assembly (60), based on first center of gravity information, which is center of gravity related information of each of the first moving bodies (10) constituting the first assembly (60).

3. The transport system (1) according to claim 2, wherein
the calculation unit (36) is configured to calculate the second center of gravity information for each of a plurality of arrangement patterns, the first assembly (60) being formed by identifying the relative positions of the plurality of first moving bodies (10) with respect to each other according to the plurality of arrangement patterns, and
the transport system (1) further comprises a selection unit (37) configured to select one of the arrangement patterns based on the second center of gravity information of each of the plurality of arrangement patterns.

4. The transport system (1) according to claim 3, wherein
the selection unit (37) is configured to select one of the arrangement patterns, based on a reference center of gravity position, which is a center of gravity position of the entire first assembly (60) when the plurality of first moving bodies (10) constituting the first assembly (60) all have the same weight and the same center of gravity, and the second center of gravity information of each of the plurality of arrangement patterns.

5. The transport system (1) according to claim 4, wherein
the second center of gravity information includes center of gravity position information indicating the center of gravity position of the entire first assembly (60), and
the selection unit (37) is configured to select one of the plurality of arrangement patterns in which the center of gravity position information of the second center of gravity information is closest to the reference center of gravity position.

6. The transport system (1) according to any one of claims 3 to 5, further comprising:
a transmitting unit (31) configured to transmit, to the plurality of first moving bodies (10), information indicating the one arrangement pattern selected by the selection unit (37), or information indicating positions of the plurality of first moving bodies (10) in the one arrangement pattern selected by the selection unit (37).

7. The transport system (1) according to any one of claims 2 to 6, further comprising:
a determination unit (38) configured to determine, based on the second center of gravity information calculated by the calculation unit (36), the number of the second moving body (20) to be used and/or a first assembly side connection position (61), which is a position in the first assembly (60) to which the second moving body (20) is connected.

8. The transport system (1) according to claim 7, wherein
the second center of gravity information includes center of gravity position information indicating the center of gravity position of the entire first assembly (60),
when the number of the second moving body (20) to be used is determined to be one,
based on the center of gravity position information of the second center of gravity information,
the determination unit (38) is configured to determine the first assembly side connection position (61) so as to match the center of gravity position of the entire first assembly (60), or, in a case of selecting the first assembly side connection position (61) from a plurality of preset positions, determine the position closest to the center of gravity position of the entire first assembly (60) as the first assembly side connection position (61), and
when the number of the second moving body (20) to be used is determined to be plural,
based on the center of gravity position information of the second center of gravity information,
the determination unit (38) is configured to determine a plurality of the first assembly side connection positions (61) such that a center of the plurality of the first assembly side connection positions (61) matches the center of gravity position of the entire first assembly (60), or, in a case of selecting the plurality of the first assembly side connection positions (61) from a plurality of preset positions, determine the plurality of positions where the center of the plurality of the first assembly side connection positions (61) is closest to the center of gravity position of the entire first assembly (60) as the plurality of the first assembly side connection positions (61).

9. The transport system (1) according to claim 7 or 8, wherein
the second center of gravity information includes weight information indicating a weight of the first assembly (60), and
the determination unit (38) is configured to determine the number of the second moving body (20) to be used based on the weight information of the second center of gravity information.

10. The transport system (1) according to any one of claims 2 to 9, wherein
when the number of the first moving bodies (10) constituting the first assembly (60) changes, the calculation unit (36) is configured to calculate the second center of gravity information based on the first center of gravity information of each of the first moving bodies (10) constituting the first assembly (60) after the change.

11. The transport system (1) according to any one of claims 2 to 9, wherein
the first moving bodies (10) are capable of loading a load, and
when a state of the load loaded on the first moving bodies (10) constituting the first assembly (60) changes, the calculation unit (36) is configured to calculate the second center of gravity information based on the first center of gravity information of each of the first moving bodies (10) constituting the first assembly (60) after the change.

12. The transport system (1) according to any one of claims 1 to 11, wherein
the first moving body (10) is a vehicle equipped with wheels (WH), and
the second moving body (20) is a flight vehicle.

13. An information processing device (30) that performs processing of transporting a plurality of autonomously movable first moving bodies (10) by a second moving body (20) as a first assembly (60), in which relative positions of the plurality of first moving bodies (10) with respect to each other are identified, **characterized in that** the information processing device (30) is configured to perform:
processing of controlling the plurality of first moving bodies (10) so that a first arrangement pattern, which is an arrangement pattern of the plurality of first moving bodies (10) in the first assembly (60) at a first timing, and a second arrangement pattern, which is an arrangement pattern of the plurality of first moving bodies (10) in the first assembly (60) at a second timing after the first timing, are different from each other, wherein
the second arrangement pattern is determined based on a target arrangement pattern of the plurality of first moving bodies (10) at the second timing, and
the target arrangement pattern is determined based on at least one of:
a first assembly side connection position (61) that is a position in the first assembly (60) to which the second moving body (20) is connected at the second timing;
a target value of the center of gravity position of the entire first assembly (60) at the second timing; and
a motion state of the second moving body (20) predicted at the second timing.

14. A transport method for transporting a plurality of autonomously movable first moving bodies (10) by a second moving body (20) as a first assembly (60), in which relative positions of the plurality of first moving bodies with respect to each other are identified, **characterized in that** the transport method comprises:
a step of controlling the plurality of first moving bodies (10) so that a first arrangement pattern, which is an arrangement pattern of the plurality of first moving bodies (10) in the first assembly (60) at a first timing, and a second arrangement pattern, which is an arrangement pattern of the plurality of first moving bodies (10) in the first assembly (60) at a second timing after the first timing, are different from each other, wherein
the second arrangement pattern is determined based on a target arrangement pattern of the plurality of first moving bodies (10) at the second timing, and
the target arrangement pattern is determined based on at least one of:
a first assembly side connection position (61) that is a position in the first assembly (60) to which the second moving body (20) is connected at the second timing;
a target value of the center of gravity position of the entire first assembly (60) at the second timing; and
a motion state of the second moving body (20) predicted at the second timing.

15. A transport program for transporting a plurality of autonomously movable first moving bodies (10) by a second moving body (20) as a first assembly (60), in which relative positions of the plurality of first moving bodies (10) with respect to each other are identified, **characterized in that** the transport program comprises processing of:
controlling the plurality of first moving bodies (10) so that a first arrangement pattern, which is an arrangement pattern of the plurality of first moving bodies (10) in the first assembly (60) at a first timing, and a second arrangement pattern, which is an arrangement pattern of the plurality of first moving bodies (10) in the first assembly (60) at a second timing after the first timing, are different from each other, wherein
the second arrangement pattern is determined based on a target arrangement pattern of the plurality of first moving bodies (10) at the second timing, and
the target arrangement pattern is determined based on at least one of:
a first assembly side connection position (61) that is a position in the first assembly (60) to which the second moving body (20) is connected at the second timing;
a target value of the center of gravity position of the entire first assembly (60) at the second timing; and
a motion state of the second moving body (20) predicted at the second timing.

16. A storage medium storing the transport program according to claim 15.

## Patentansprüche

1. Transportsystem (1), umfassend:
eine Mehrzahl autonom bewegbarer erster Bewegungskörper (10);
einen zweiten Bewegungskörper (20), welcher dazu eingerichtet ist, die Mehrzahl erster Bewegungskörper (10) als eine erste Gruppe (60) zu transportieren, in welcher relative Positionen der Mehrzahl erster Bewegungskörper (10) in Bezug zueinander identifiziert werden; **dadurch gekennzeichnet, dass** das Transportsystem ferner umfasst:
eine Steuereinheit (30), welche dazu eingerichtet ist, die Mehrzahl erster Bewegungskörper (10) zu steuern, so dass ein erstes Anordnungsmuster, welches ein Anordnungsmuster der Mehrzahl erster Bewegungskörper (10) in der ersten Gruppe (60) zu einem ersten Zeitpunkt ist, und ein zweites Anordnungsmuster, welches ein Anordnungsmuster der Mehrzahl erster Bewegungskörper (10) in der ersten Gruppe (60) zu einem zweiten Zeitpunkt nach dem ersten Zeitpunkt ist, unterschiedlich voneinander sind, wobei
das zweite Anordnungsmuster auf Grundlage eines Zielanordnungsmuster der Mehrzahl erster Bewegungskörper (10) zu dem zweiten Zeitpunkt bestimmt wird, und
das Zielanordnungsmuster auf Grundlage wenigstens eines bestimmt wird, aus:
einer ersten Gruppenseiten-Verbindungsposition (61), welche eine Position in der ersten Gruppe (60) ist, an welcher der zweite Bewegungskörper (20) zu dem zweiten Zeitpunkt verbunden ist;
einem Zielwert der Schwerpunktposition der gesamten ersten Gruppe (60) zu dem zweiten Zeitpunkt; und
einem Bewegungszustand des zweiten Bewegungskörpers (20), welcher zu dem zweiten Zeitpunkt vorausgesagt wird.

2. Transportsystem (1) nach Anspruch 1, ferner umfassend:
eine Berechnungseinheit (36), welche dazu eingerichtet ist, eine zweite Schwerpunktinformation zu berechnen, welche eine schwerpunktbezogene Information der ersten Gruppe (60) ist, auf Grundlage einer ersten Schwerpunktinformation, welche eine schwerpunktbezogene Information jeder der ersten Bewegungskörper (10) ist, welche die erste Gruppe (60) darstellen.

3. Transportsystem (1) nach Anspruch 2, wobei
die Berechnungseinheit (36) dazu eingerichtet ist, die zweite Schwerpunktinformation für jedes aus einer Mehrzahl von Anordnungsmustern zu berechnen, wobei die erste Gruppe (60) durch ein Identifizieren der relativen Positionen der Mehrzahl erster Bewegungskörper (10) in Bezug zueinander gemäß der Mehrzahl von Anordnungsmustern gebildet ist, und
das Transportsystem (1) ferner eine Auswahleinheit (37) umfasst, welche dazu eingerichtet ist, eines der Anordnungsmuster auf Grundlage der zweiten Schwerpunktinformation aus jedem der Mehrzahl von Anordnungsmustern auszuwählen.

4. Transportsystem (1) nach Anspruch 3, wobei
die Auswahleinheit (37) dazu eingerichtet ist, eines aus den Anordnungsmustern auszuwählen, auf Grundlage einer Referenz-Schwerpunktposition, welche eine Schwerpunktposition der gesamten ersten Gruppe (60) ist, wenn die Mehrzahl erster Bewegungskörper (10), welche die erste Gruppe (60) darstellen, alle das gleiche Gewicht und den gleichen Schwerpunkt aufweisen, und der zweiten Schwerpunktinformation aus jedem der Mehrzahl von Anordnungsmustern.

5. Transportsystem (1) nach Anspruch 4, wobei
die zweite Schwerpunktinformation eine Schwerpunktpositionsinformation umfasst, welche die Schwerpunktinformation der gesamten ersten Gruppe (60) indiziert, und
die Auswahleinheit (37) dazu eingerichtet ist, eines aus der Mehrzahl von Anordnungsmustern auszuwählen, in welchem die Schwerpunktpositionsinformation der zweiten Schwerpunktinformation am nächsten zu der Referenz-Schwerpunktposition ist.

6. Transportsystem (1) nach einem der Ansprüche 3 bis 5, ferner umfassend:
eine Übertragungseinheit (31), welche dazu eingerichtet ist, auf die Mehrzahl erster Bewegungskörper (10), eine Information, welche das eine Anordnungsmuster indiziert, welches von der Auswahleinheit (37) ausgewählt ist, oder eine Information zu übertragen, welche die Positionen der Mehrzahl erster Bewegungskörper (10) in dem einen Anordnungsmuster indiziert, welche durch die Auswahleinheit (37) ausgewählt ist.

7. Transportsystem (1) nach einem der Ansprüche 2 bis 6, ferner umfassend:
eine Bestimmungseinheit (38), welche dazu eingerichtet ist, auf Grundlage der zweiten Schwerpunktinformation, welche durch die Berechnungseinheit (36) berechnet wird, die Zahl des zu verwendenden zweiten Bewegungskörpers (20) und/oder eine erste Gruppenseiten-Verbindungsposition (61) zu bestimmen, welche eine Position in der ersten Gruppe (60) ist, mit welcher der zweite Bewegungskörper (20) verbunden ist.

8. Transportsystem (1) nach Anspruch 7, wobei
die zweite Schwerpunktinformation eine Schwerpunktpositionsinformation umfasst, welche die Schwerpunktposition der gesamten ersten Gruppe (60) indiziert,
wenn die Zahl des zu verwendenden zweiten Bewegungskörpers (20) als eine bestimmt wird, auf Grundlage der Schwerpunktpositionsinformation der zweiten Schwerpunktinformation, die Bestimmungseinheit (38) dazu eingerichtet ist, die erste Gruppenseiten-Verbindungsposition (61) zu bestimmen, um mit der Schwerpunktposition der gesamten ersten Gruppe (60) übereinzustimmen, oder, in einem Fall eines Auswählens der ersten Gruppenseiten-Verbindungsposition (61) aus einer Mehrzahl vorfestgelegter Positionen, die Position, welche am nächsten zu der Schwerpunktposition der gesamten ersten Gruppe (60) ist, als die erste Gruppenseiten-Verbindungsposition (61) zu bestimmen, und
wenn die Zahl des zu verwendenden zweiten Bewegungskörpers (20) als Mehrzahl bestimmt wird, auf Grundlage der Schwerpunktpositionsinformation der zweiten Schwerpunktinformation, die Bestimmungseinheit (38) dazu eingerichtet ist, eine Mehrzahl von ersten Gruppenseiten-Verbindungspositionen (61) derart zu bestimmen, dass eine Mitte der Mehrzahl der ersten Gruppenseiten-Verbindungspositionen (61) mit der Schwerpunktposition der gesamten ersten Gruppe (60) übereinstimmt, oder, in einem Fall eines Auswählens der Mehrzahl der Gruppenseiten-Verbindungspositionen (61) aus einer Mehrzahl vorfestgelegter Positionen, die Mehrzahl von Positionen, bei welcher die Mitte der Mehrzahl der ersten Gruppenseiten-Verbindungspositionen (61) am nächsten zu der Schwerpunktposition der gesamten ersten Gruppe (60) ist, als die Mehrzahl der ersten Gruppenseiten-Verbindungspositionen (61) zu bestimmen.

9. Transportsystem (1) nach Anspruch 7 oder 8, wobei
die zweite Schwerpunktinformation eine Gewichtsinformation umfasst, welche ein Gewicht der ersten Gruppe (60) indiziert, und
die Bestimmungseinheit (38) dazu eingerichtet ist, die Zahl des zu verwendenden zweiten Bewegungskörpers (20) auf Grundlage der Gewichtsinformation der zweiten Schwerpunktinformation zu bestimmen.

10. Transportsystem (1) nach einem der Ansprüche 2 bis 9, wobei,
wenn sich die Zahl der ersten Bewegungskörper (10), welche die erste Gruppe (60) darstellen, ändert, die Berechnungseinheit (36) dazu eingerichtet ist, die zweite Schwerpunktinformation auf Grundlage der ersten Schwerpunktinformation jedes der ersten Bewegungskörper (10) nach dem Ändern zu berechnen, welche die erste Grippe (60) darstellen.

11. Transportsystem (1) nach einem der Ansprüche 2 bis 9, wobei
die ersten Bewegungskörper (10) in der Lage sind, eine Ladung aufzuladen, und,
wenn sich ein Zustand der Ladung, welche auf die ersten Bewegungskörper (10) geladen ist, welche die erste Gruppe (60) darstellen, ändert, die Berechnungseinheit (36) dazu eingerichtet ist, die zweite Schwerpunktinformation auf Grundlage der ersten Schwerpunktinformation jedes der ersten Bewegungskörper (10) nach dem Ändern zu berechnen, welche die erste Gruppe (60) darstellen.

12. Transportsystem (1) nach einem der Ansprüche 1 bis 11, wobei
der erste Bewegungskörper (10) ein Fahrzeug ist, welches mit Rädern (WH) ausgestattet ist, und
der zweite Bewegungskörper (20) ein Luftfahrzeug ist.

13. Informationen-Abwicklungsvorrichtung (30), welche eine Abwicklung eines Transportierens einer Mehrzahl autonom bewegbarer erster Bewegungskörper (10) durch einen zweiten Bewegungskörper (20) als eine erste Gruppe (60) durchführt, in welcher relative Positionen der Mehrzahl erster Bewegungskörper (10) in Bezug zueinander identifiziert werden, **dadurch gekennzeichnet, dass** die Informationen-Abwicklungsvorrichtung (30) dazu eingerichtet ist, durchzuführen:
Abwickeln eines Steuerns der Mehrzahl erster Bewegungskörper (10), so dass ein erstes Anordnungsmuster, welches ein Anordnungsmuster der Mehrzahl erster Bewegungskörper (10) in der ersten Gruppe (60) zu einem ersten Zeitpunkt ist, und ein zweites Anordnungsmuster, welches ein Anordnungsmuster der Mehrzahl erster Bewegungskörper (10) in der ersten Gruppe (60) zu einem zweiten Zeitpunkt nach dem ersten Zeitpunkt ist, unterschiedlich voneinander sind, wobei
das zweite Anordnungsmuster auf Grundlage eines Zielanordnungsmusters der Mehrzahl erster Bewegungskörper (10) zu dem zweiten Zeitpunkt bestimmt ist, und
das Zielanordnungsmuster auf Grundlage wenigstens eines bestimmt ist, aus:
einer ersten Gruppenseiten-Verbindungsposition (61), welche eine Position in der ersten Gruppe (60) ist, an welcher der zweite Bewegungskörper (20) zu dem zweiten Zeitpunkt verbunden ist;
einem Zielwert der Schwerpunktposition der gesamten ersten Gruppe (60) zu dem zweiten Zeitpunkt; und
einem Bewegungszustand des zweiten Bewegungskörpers (20), welcher zu dem zweiten Zeitpunkt vorausgesagt ist.

14. Transportverfahren zum Transportieren einer Mehrzahl autonom bewegbarer erster Bewegungskörper (10) durch einen zweiten Bewegungskörper (20) als eine erste Gruppe (60), in welcher relative Positionen der Mehrzahl erster Bewegungskörper in Bezug zueinander identifiziert werden, **dadurch gekennzeichnet, dass** das Transportverfahren umfasst:
einen Schritt eines Steuerns der Mehrzahl erster Bewegungskörper (10), so dass ein erstes Anordnungsmuster, welches ein Anordnungsmuster der Mehrzahl erster Bewegungskörper (10) in der ersten Gruppe (60) zu einem ersten Zeitpunkt ist, und ein zweites Anordnungsmuster, welches ein Anordnungsmuster der Mehrzahl erster Bewegungskörper (10) in der ersten Gruppe (60) zu einem zweiten Zeitpunkt nach dem ersten Zeitpunkt ist, unterschiedlich voneinander sind, wobei
das zweite Anordnungsmuster auf Grundlage eines Zielanordnungsmusters der Mehrzahl erster Bewegungskörper (10) zu dem zweiten Zeitpunkt bestimmt wird, und
das Zielanordnungsmuster auf Grundlage wenigstens eines bestimmt wird, aus:
einer ersten Gruppenseiten-Verbindungsposition (61), welche eine Position in der ersten Gruppe (60) ist, an welcher der zweite Bewegungskörper (20) zu dem zweiten Zeitpunkt verbunden wird;
einem Zielwert der Schwerpunktposition der gesamten ersten Gruppe (60) zu dem zweiten Zeitpunkt; und
einem Bewegungszustand des zweiten Bewegungskörpers (20), welcher zu dem zweiten Zeitpunkt vorausgesagt wird.

15. Transportprogramm zum Transportieren einer Mehrzahl autonom bewegbarer erster Bewegungskörper (10) durch einen zweiten Bewegungskörper (20) als eine erste Gruppe (60), in welcher relative Positionen der Mehrzahl erster Bewegungskörper (10) in Bezug zueinander identifiziert werden, **dadurch gekennzeichnet, dass** das Transportprogramm ein Abwickeln umfasst, aus:
Steuern der Mehrzahl erster Bewegungskörper (10), so dass ein erstes Anordnungsmuster, welches ein Anordnungsmuster der Mehrzahl erster Bewegungskörper (10) in der ersten Gruppe (60) zu einem ersten Zeitpunkt ist, und ein zweites Anordnungsmuster, welches ein Anordnungsmuster der Mehrzahl erster Bewegungskörper (10) in der ersten Gruppe (60) zu einem zweiten Zeitpunkt nach dem ersten Zeitpunkt ist, unterschiedlich voneinander sind, wobei
das zweite Anordnungsmuster auf Grundlage eines Zielanordnungsmusters der Mehrzahl erster Bewegungskörper (10) zu dem zweiten Zeitpunkt bestimmt wird, und
das Zielanordnungsmuster auf Grundlage wenigstens eines bestimmt wird, aus:
einer ersten Gruppenseiten-Verbindungsposition (61), welche eine Position in der ersten Gruppe (60) ist, an welcher der zweite Bewegungskörper (20) zu dem zweiten Zeitpunkt verbunden wird;
einem Zielwert der Schwerpunktposition der gesamten ersten Gruppe (60) zu dem zweiten Zeitpunkt; und
einem Bewegungszustand des zweiten Bewegungskörpers (20), welcher zu dem zweiten Zeitpunkt vorausgesagt wird.

16. Speichermedium, welches das Transportprogramm nach Anspruch 15 speichert.

## Revendications

1. Système de transport (1), comportant :
une pluralité de premiers corps mobiles (10) pouvant se déplacer de manière autonome ;
un second corps mobile (20) configuré pour transporter la pluralité de premiers corps mobiles (10) en tant que premier ensemble (60) dans lequel des positions relatives de la pluralité de premiers corps mobiles (10) les uns par rapport aux autres sont identifiées ; **caractérisé en ce que** le système de transport comporte en outre :
une unité de commande (30) configurée pour commander la pluralité de premiers corps mobiles (10) de sorte qu'un premier motif d'agencement, qui est un motif d'agencement de la pluralité de premiers corps mobiles (10) dans le premier ensemble (60) à un premier moment, et un second motif d'agencement, qui est un motif d'agencement de la pluralité de premiers corps mobiles (10) dans le premier ensemble (60) à un second moment après le premier moment, soient différents l'un de l'autre, dans lequel
le second motif d'agencement est déterminé sur la base d'un motif d'agencement cible de la pluralité de premiers corps mobiles (10) au second moment, et
le motif d'agencement cible est déterminé sur la base d'au moins l'un parmi :
une position de connexion côté premier ensemble (61) qui est une position dans le premier ensemble (60) à laquelle est connecté le second corps mobile (20) au second moment ;
une valeur cible de la position de centre de gravité du premier ensemble (60) entier au second moment ; et
un état de mouvement du second corps mobile (20) prédit au second moment.

2. Système de transport (1) selon la revendication 1, comportant en outre :
une unité de calcul (36) configurée pour calculer des secondes informations de centre de gravité, qui sont des informations liées au centre de gravité du premier ensemble (60), sur la base de premières informations de centre de gravité, qui sont des informations liées au centre de gravité de chacun des premiers corps mobiles (10) constituant le premier ensemble (60).

3. Système de transport (1) selon la revendication 2, dans lequel :
l'unité de calcul (36) est configurée pour calculer les secondes informations de centre de gravité pour chacun d'une pluralité de motifs d'agencement, le premier ensemble (60) étant formé en identifiant les positions relatives de la pluralité de premiers corps mobiles (10) les uns par rapport aux autres selon la pluralité de motifs d'agencement, et
le système de transport (1) comporte en outre une unité de sélection (37) configurée pour sélectionner l'un des motifs d'agencement sur la base des secondes informations de centre de gravité de chacun de la pluralité de motifs d'agencement.

4. Système de transport (1) selon la revendication 3, dans lequel :
l'unité de sélection (37) est configurée pour sélectionner l'un des motifs d'agencement, sur la base d'une position de centre de gravité de référence, qui est une position de centre de gravité du premier ensemble (60) entier lorsque la pluralité de premiers corps mobiles (10) constituant le premier ensemble (60) ont tous le même poids et le même centre de gravité, et des secondes informations de centre de gravité de chacun de la pluralité de motifs d'agencement.

5. Système de transport (1) selon la revendication 4, dans lequel :
les secondes informations de centre de gravité incluent des informations de position de centre de gravité indiquant la position de centre de gravité du premier ensemble (60) entier, et
l'unité de sélection (37) est configurée pour sélectionner un premier de la pluralité de motifs d'agencement dans lequel les informations de position de centre de gravité des secondes informations de centre de gravité sont les plus proches de la position de centre de gravité de référence.

6. Système de transport (1) selon l'une quelconque des revendications 3 à 5, comportant en outre :
une unité de transmission (31) configurée pour transmettre, à la pluralité de premiers corps mobiles (10), des informations indiquant le premier motif d'agencement sélectionné par l'unité de sélection (37), ou des informations indiquant des positions de la pluralité de premiers corps mobiles (10) dans le premier motif d'agencement sélectionné par l'unité de sélection (37).

7. Système de transport (1) selon l'une quelconque des revendications 2 à 6, comportant en outre :
une unité de détermination (38) configurée pour déterminer, sur la base des secondes informations de centre de gravité calculées par l'unité de calcul (36), le nombre du second corps mobile (20) à utiliser et/ou une position de connexion côté premier ensemble (61), qui est une position dans le premier ensemble (60) à laquelle est connecté le second corps mobile (20).

8. Système de transport (1) selon la revendication 7, dans lequel :
les secondes informations de centre de gravité incluent des informations de position de centre de gravité indiquant la position de centre de gravité du premier ensemble (60) entier,
lorsque le nombre du second corps mobile (20) à utiliser est déterminé comme étant un,
sur la base des informations de position de centre de gravité des secondes informations de centre de gravité,
l'unité de détermination (38) est configurée pour déterminer la position de connexion côté premier ensemble (61) de manière à correspondre à la position de centre de gravité du premier ensemble (60) entier, ou, dans un cas de sélection de la position de connexion côté premier ensemble (61) parmi une pluralité de positions préétablies, déterminer la position la plus proche de la position de centre de gravité du premier ensemble (60) entier en tant que position de connexion côté premier ensemble (61), et
lorsque le nombre du second corps mobile (20) à utiliser est déterminé comme étant pluriel,
sur la base des informations de position de centre de gravité des secondes informations de centre de gravité,
l'unité de détermination (38) est configurée pour déterminer une pluralité de positions de connexion côté premier ensemble (61) de sorte qu'un centre de la pluralité des positions de connexion côté premier ensemble (61) corresponde à la position de centre de gravité du premier ensemble (60) entier, ou, dans un cas de sélection de la pluralité de positions de connexion côté premier ensemble (61) parmi une pluralité de positions préétablies, déterminer la pluralité de positions où le centre de la pluralité des positions de connexion côté premier ensemble (61) est le plus proche de la position de centre de gravité du premier ensemble (60) entier en tant que la pluralité des positions de connexion côté premier ensemble (61).

9. Système de transport (1) selon la revendication 7 ou 8, dans lequel
les secondes informations de centre de gravité incluent des informations de poids indiquant un poids du premier ensemble (60), et
l'unité de détermination (38) est configurée pour déterminer le nombre du second corps mobile (20) à utiliser sur la base des informations de poids des secondes informations de centre de gravité.

10. Système de transport (1) selon l'une quelconque des revendications 2 à 9, dans lequel
lorsque le nombre des premiers corps mobiles (10) constituant le premier ensemble (60) change, l'unité de calcul (36) est configurée pour calculer les secondes informations de centre de gravité sur la base des premières informations de centre de gravité de chacun des premiers corps mobiles (10) constituant le premier ensemble (60) après le changement.

11. Système de transport (1) selon l'une quelconque des revendications 2 à 9, dans lequel
les premiers corps mobiles (10) sont capables de charger une charge, et
lorsqu'un état de la charge chargée sur les premiers corps mobiles (10) constituant le premier ensemble (60) change, l'unité de calcul (36) est configurée pour calculer les secondes informations de centre de gravité sur la base des premières informations de centre de gravité de chacun des premiers corps mobiles (10) constituant le premier ensemble (60) après le changement.

12. Système de transport (1) selon l'une quelconque des revendications 1 à 11, dans lequel
le premier corps mobile (10) est un véhicule équipé de roues (WH), et
le second corps mobile (20) est un véhicule aérien.

13. Dispositif de traitement d'informations (30) qui effectue un traitement de transport d'une pluralité de premiers corps mobiles (10) pouvant se déplacer de manière autonome par un second corps mobile (20) en tant que premier ensemble (60), dans lequel des positions relatives de la pluralité de premiers corps mobiles (10) les uns par rapport aux autres sont identifiées, **caractérisé en ce que** le dispositif de traitement d'informations (30) est configuré pour effectuer :
un traitement de commande de la pluralité de premiers corps mobiles (10) de sorte qu'un premier motif d'agencement, qui est un motif d'agencement de la pluralité de premiers corps mobiles (10) dans le premier ensemble (60) à un premier moment, et un second motif d'agencement, qui est un motif d'agencement de la pluralité de premiers corps mobiles (10) dans le premier ensemble (60) à un second moment après le premier moment, soient différents l'un de l'autre, dans lequel
le second motif d'agencement est déterminé sur la base d'un motif d'agencement cible de la pluralité de premiers corps mobiles (10) au second moment, et
le motif d'agencement cible est déterminé sur la base d'au moins l'un parmi :
une position de connexion côté premier ensemble (61) qui est une position dans le premier ensemble (60) à laquelle est connecté le second corps mobile (20) au second moment ;
une valeur cible de la position de centre de gravité du premier ensemble (60) entier au second moment ; et
un état de mouvement du second corps mobile (20) prédit au second moment.

14. Procédé de transport pour transporter une pluralité de premiers corps mobiles (10) pouvant se déplacer de manière autonome par un second corps mobile (20) en tant que premier ensemble (60), dans lequel des positions relatives de la pluralité de premiers corps mobiles les uns par rapport aux autres sont identifiées, **caractérisé en ce que** le procédé de transport comporte :
une étape de commande de la pluralité de premiers corps mobiles (10) de sorte qu'un premier motif d'agencement, qui est un motif d'agencement de la pluralité de premiers corps mobiles (10) dans le premier ensemble (60) à un premier moment, et un second motif d'agencement, qui est un motif d'agencement de la pluralité de premiers corps mobiles (10) dans le premier ensemble (60) à un second moment après le premier moment, soient différents l'un de l'autre, dans lequel
le second motif d'agencement est déterminé sur la base d'un motif d'agencement cible de la pluralité de premiers corps mobiles (10) au second moment, et
le motif d'agencement cible est déterminé sur la base d'au moins l'un parmi :
une position de connexion côté premier ensemble (61) qui est une position dans le premier ensemble (60) à laquelle est connecté le second corps mobile (20) au second moment ;
une valeur cible de la position de centre de gravité du premier ensemble (60) entier au second moment ; et
un état de mouvement du second corps mobile (20) prédit au second moment.

15. Programme de transport pour transporter une pluralité de premiers corps mobiles (10) pouvant se déplacer de manière autonome par un second corps mobile (20) en tant que premier ensemble (60), dans lequel des positions relatives de la pluralité de premiers corps mobiles (10) les uns par rapport aux autres sont identifiées, **caractérisé en ce que** le programme de transport comporte le traitement consistant à :
commander la pluralité de premiers corps mobiles (10) de sorte qu'un premier motif d'agencement, qui est un motif d'agencement de la pluralité de premiers corps mobiles (10) dans le premier ensemble (60) à un premier moment, et un second motif d'agencement, qui est un motif d'agencement de la pluralité de premiers corps mobiles (10) dans le premier ensemble (60) à un second moment après le premier moment, soient différents l'un de l'autre, dans lequel
le second motif d'agencement est déterminé sur la base d'un motif d'agencement cible de la pluralité de premiers corps mobiles (10) au second moment, et
le motif d'agencement cible est déterminé sur la base d'au moins l'un parmi :
une position de connexion côté premier ensemble (61) qui est une position dans le premier ensemble (60) à laquelle est connecté le second corps mobile (20) au second moment ;
une valeur cible de la position de centre de gravité du premier ensemble (60) entier au second moment ; et
un état de mouvement du second corps mobile (20) prédit au second moment.

16. Support de stockage stockant le programme de transport selon la revendication 15.
